(19) Europäisches Patentamt
European Patent Office
Office européen des brevets

(11)  EP 3 712 028 B1

(12)  **EUROPEAN PATENT SPECIFICATION**

(45) Date of publication and mention
of the grant of the patent:
**05.03.2025  Bulletin 2025/10**

(51) International Patent Classification (IPC):
**B60W 50/14** (2020.01)    **G08G 1/00** (2006.01)
**G08G 1/09** (2006.01)    **B60W 60/00** (2020.01)

(21) Application number: **18877658.7**

(52) Cooperative Patent Classification (CPC):
**B60W 60/0057; B60W 50/14;** B60W 2050/0075;
B60W 2540/00; B60W 2540/043; B60W 2540/221;
B60W 2556/10; B60W 2556/45; G08G 1/16

(22) Date of filing: **17.10.2018**

(86) International application number:
**PCT/JP2018/038745**

(87) International publication number:
**WO 2019/097944 (23.05.2019 Gazette 2019/21)**

(54) **INFORMATION PROCESSING DEVICE AND INFORMATION PROCESSING METHOD**

INFORMATIONSVERARBEITUNGSVORRICHTUNG UND
INFORMATIONSVERARBEITUNGSVERFAHREN

DISPOSITIF DE TRAITEMENT D'INFORMATIONS ET PROCÉDÉ DE TRAITEMENT
D'INFORMATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.11.2017  JP 2017221543**

(43) Date of publication of application:
**23.09.2020  Bulletin 2020/39**

(73) Proprietor: **Sony Semiconductor Solutions
Corporation
Atsugi-shi, Kanagawa 243-0014 (JP)**

(72) Inventor: **OBA, Eiji
Atsugi-shi
Kanagawa 243-0014 (JP)**

(74) Representative: **Witte, Weller & Partner
Patentanwälte mbB
Postfach 10 54 62
70047 Stuttgart (DE)**

(56) References cited:
WO-A1-2017/085981    DE-A1- 102012 112 802
DE-A1- 102014 011 264    US-B2- 9 349 228

• OMAR ELHELW: "About 95% percentile", 12
November 2014 (2014-11-12), XP002802348,
Retrieved from the Internet <URL:http://www.
fsae.com/forums/showthread.php?
11950-About-95-percentile&
s=09000e26e8af334097efeebf038ed096>
[retrieved on 20210311]

**Description**

[Technical Field]

The present technique relates to an information processing apparatus and an information processing method, and particularly to an information processing apparatus and so forth for controlling a notification for encouraging a driver to return to driving.

[Background Art]

In recent years, development of an automatic steering system is being proceeded which automatically controls traveling of a vehicle or performs support of traveling even without intervention of a driver in a traveling steering work of the vehicle in order to achieve improvement in safety of vehicle traveling, reduction of a load on the driver, and so forth. In the future, if it becomes possible to perform traveling control of a vehicle fully automatically, it is expected that a user who is using a vehicle in an automatic driving mode is permitted to leave any driving steering work during automatic driving of the vehicle and execute a secondary task different from the steering work that is an original primary task. However, in a case where a driver who is originally involved in driving fully leaves from a control loop of the vehicle once and passes the control of the vehicle to the automatic driving system of the vehicle, peripheral situation grasp that is essentially required for driving by the driver is not performed while the driver leaves from the control loop of the vehicle, and this leads also to such a situation that peripheral situation grasp recognition necessary for continuous driving is interrupted completely.

In a situation in which a driver uses a system that allows for traveling of a vehicle by the automatic driving and starts automatic steering, the driver is away from an original primary task work of recognizing the surrounding environment, which is necessary for steering. Accordingly, in a case where traveling under the control of the system is performed continuously or a situation in which return by the driver becomes necessary occurs, it is necessary to take over the traveling safely to the driver. However, the driver may not be in a situation in which the driver can perform situation grasp necessary for driver traveling or the operation ability can return in a limited period of time. In other words, if a traveling state is automatically entered once utilizing an automatic steering system of a vehicle, in order to maintain later safety of the vehicle, in an environment in which the vehicle travels, the countermeasures for the system to take is limited to a case in which an event within a range of a situation that can be recognized and dealt with by the automatic steering system until the vehicle reaches a destination continues, a case in which the driver performs normal road traveling situation grasp in place of the system while the automatic steering system functions safely and takes over traveling steering control, or a case in which the automatic steering system interrupts traveling of the vehicle and emergently stops the vehicle, for example.

In this case, if a situation that the driver does not voluntarily take over occurs and a section in which takeover is required approaches on the traveling route, the system will emergently stop the vehicle for the safety of the vehicle during traveling. However, in a case where a vehicle is emergently stopped or decelerated on a road or the like, this results in generation of a bottleneck to the allowable traffic volume of the road, and it is considered that this causes deterioration of core functions as social infrastructures such as traffic jams. This usage form is not considered desirable from the point of view of the social activities.

In other words, in order to install an automatic driving system such that it can be utilized socially in a wide area without having a negative influence on social core functions, the system is demanded to have a function for causing a driver of a vehicle, which has started traveling in an automatic driving state by the driver, to return to driving almost with certainty and precisely.

The system for automatic driving cannot return control of the vehicle to the driver unless the system can decide the driving return ability of the driver in regard to whether control of the vehicle can be passed with a sense of security to the driver. Therefore, a usage form in a closed space in which utilization of automatic driving is totally possible is considered as one option. Meanwhile, although the advantage of a vehicle is to freely transport from a given point to a different given point, in a case where automatic driving is introduced into such a usage form as just described, if a section through which a vehicle cannot pass by automatic driving exists, it becomes necessary to return the driving from automatic driving to the driver described above. However, in a case where return is difficult, even if the vehicle is stopped on the shoulder of a road, this leads to induction of traffic jams as described above.

Actually, even if automatic driving is introduced in social infrastructures in which general vehicles travel, even from the point of view of the infrastructure investment the society permits, as immediate road infrastructures, a state is assumed in which a section in which intervention of a driver is necessary and a section in which automatic driving is possible are mixed alternately. Further, especially in an early introduction phase, an introduction form is based on an assumption that these sections appear alternately and mixedly through an itinerary section. Therefore, in order to perform execution of a secondary task favorably when a driver utilizes a vehicle capable of being automatically driven, it is necessary to perform notification of driving return to the driver at an appropriate timing.

For example, PTL 1 discloses a technique of displaying, in regard to each of a plurality of risks on a road on which an own vehicle is to travel, a degree of the risk. Meanwhile, for example, PTL 2 discloses a technique of displaying, in a case where a driver is to be urged to start manual driving during automatic driving, that the vehicle is in a situation in which manual driving must be started on the screen of a portable terminal to notify the driver whose consciousness is concentrated on the portable terminal. Such publicly known techniques are a uniform notification method to a known prescribed point that can be acquired in advance as map information as traveling environment.

PTL 3 discloses a method for calculating a response time. The response time is required in order to direct the attention of a vehicle's driver at the traffic on the road. The driver is monitored by sensors and a state of attentiveness of the driver is ascertained. The state of attentiveness is used to calculate a value, to which an anticipated response time is assigned. Further a method for operating a motor vehicle, a computer program product and a correspondingly equipped motor vehicle are described.

[Citation List]

[Patent Literature]

[PTL 1]
Japanese Patent Laid-Open No. 2016-139204
[PTL 2]
Japanese Patent Laid-Open No. 2016-090274
[PTL 3]
German Patent Application Laid-Open No. DE 10 2014 011 264 A1

[Summary]

[Technical Problems]

According to maturity of a vehicle surrounding environment recognition technique for performing automatic driving and also to installation of a so-called local dynamic map (LDM) of updating traveling map information regarding roads along which vehicles drive in a high density and constantly has increased the momentum of utilizing automatic driving of a vehicle in the real world space. Obviously, with the today's technological progress indicated experientially, the technique itself by which a vehicle can travel automatically also on general roads has been already provided, and it has been indicated by many experiments that traveling itself of a vehicle is possible. However, at present, such techniques as described above are experiments of automatic driving carried out on an assumption that a person monitors steering of the automatic driving constantly and if a situation in which the automatic driving system cannot determine a situation occurs, the person takes over automatic steering instantly.

However, if a driver constantly and continuously performs monitoring of the system actually without being involved in steering and besides the driver is always demanded to continue to grasp a traveling environment, the driver cannot be involved in a work other than driving in vehicle use, which is a maximum advantage of automatic driving. Rather, since the driver cannot neglect monitoring even without function intervention, the utilization of automatic driving sometimes rather becomes a pain.

In view of this, in order to make the most of advantages of automatic driving, a mechanism is demanded which allows a driver to be free from a monitoring work of automatic driving and be involved in a secondary task at ease within a fixed section. Also from the point of ergonomic view, a simpler monitoring action is boring, causing deterioration of the consciousness to be induced while the driver performs the monitoring action, so that continuous utilization itself of automatic driving for a long period of time becomes dangerous. As a result, introduction of automatic driving in which such monitoring is demanded may induce accidents. Alternatively, in a case where takeover cannot be performed at a necessary takeover point, the vehicle need to slow down and stop emergently, causing traffic jams of the road traffic infrastructure, which is a social significant macro issue.

It is to be noted that, although it is also physically possible to implement a traveling environment space continuously equipped with a track like the subway or the like on which continuous automatic driving is possible by following an automatic driving system of the subway or the like, in order to implement the traveling environment space described above for a car with which people are familiar as means for moving from a given point to another given point, it is demanded to construct a track like a subway track over a total extension of roads that are the social infrastructure. However, from the social point of view, it is realistically and financially impossible to lay and implement such an infrastructure as described above in every corner of the country in which people lives. In other words, although the investment for maintenance and construction of road sections in which traveling of automatic driving is actually possible is realistically possible in sections in central regions of big cities with a high frequency of use, a situation occurs in which the maintenance and construction is not necessarily sufficient in sections with a low frequency of use.

As a result, constantly updated maintenance and construction of a local dynamic map in which traveling is possible by automatic driving becomes, if a given route is set, paths appearing intermittently in the route sections. Then, in the case of running along such mixed road sections, if return to manual driving that is demanded for a driver to return when the driver crosses sections is not performed precisely, the vehicle cannot continue traveling. Further, in the case of traveling on such mixed road sections, if return to manual driving that is requested to the driver upon crossing sections is not performed precisely, the vehicle cannot continue traveling, and therefore, it becomes necessary for the vehicle to emergently stop, causing a traffic jam or an accident to be induced. Therefore, there is a significant macro problem that utilization of the social infrastructure as a road is disturbed. Furthermore, the spread of automatic driving faces such a contradiction that it cannot be satisfied unless an environment is implemented in which automatic driving can be achieved continuously in all sections in the society as a whole and environment maintenance is complete all the time without obstructing traveling.

Therefore, a concept that only a closed environment is utilized for fully automatic driving or a proposal to emergently stop a vehicle in a case where appropriate takeover from automatic driving to manual driving cannot be performed are provided. Actually, however, if emergently stopping vehicles overflow in a road infrastructure, this induces traffic jams in a road environment, or increase of such emergently stopping vehicles induces an accident that has not been occurred in the past. Thus, a problem that normal social activities are inhibited occurs as a new problem, and after all, a method for widely spreading automatic driving has not been found out.

For example, even if driving of the level 3 of automatic driving that is widely discussed currently is introduced just simply into the society in general roads or exclusive road sections, for example, in order to satisfy the driving without a negative social impact such as jams, it is necessary that the environment in which a vehicle can travel at the level 3 on the road all the time is maintained 100% in the section and the driver returns with certainty at an end spot. Further, during the period, the driver is demanded to always take the responsibility for monitoring without being directly engaged in driving and keep the state under tense state with attention. In short, if human ergonomic and psychological aspects of the human are taken into consideration, there is a problem that long term utilization according to the applicable concept is not realistic, and this is a problem to socially introduce automatic driving in a wide area, and a solution of the problem is demanded.

An object of the present invention is to normally provide, in order to deal with the problems described above, section information of a traveling route to the driver before the vehicle approaches a return requiring section in various road environments by actively adjusting the control in response to a state of the driver, a traveling property of the vehicle, information regarding a road environment, and so forth to provide appropriate necessary intervention information to the driver in advance thereby to seamlessly achieve section passage with a high probability without stopping the vehicle. For introduction of automatic driving, since the problem that a precise driver return technology upon crossing these sections cannot be implemented is not successfully solved as yet, the section whose social introduction is possible is very restrictive such as a specific expressway section or a prescribed section.

Further, the object of the present invention is to make it possible to utilize an automatic driving vehicle utilizing benefits of the automatic driving vehicle even while sections that are maintained well and on which traveling by automatic driving is possible and sections that are not maintained well sufficiently exist in a mixed manner as social infrastructures and to perform, as social macro problem countermeasures for prevention of induced post prevention, induction of a traffic jam in the social infrastructures, and so forth caused by incomplete manual driving return in such utilization as described above, notification of driving return at an appropriate timing in response to a driver, a vehicle motion characteristic, a secondary task work characteristic, and a road environment characteristic.

[Solution to Problems]

The concept of the present invention resides in an information processing apparatus as claimed in claim 1. A corresponding method is defined in claim 9.

In the present invention, notification for prompting a driver to return to driving is controlled by the notification controlling unit. For example, the notification is performed by a sound output, a light output, display of a character or a mark, haptics, and so forth. Then, a return delay time period for determining a notification timing is calculated on the basis of a state of the driver by the calculation unit. For example, the calculation unit may calculate the return delay time period in response to an observable evaluation value based on a type of secondary task being executed by the driver and biological activity observable information of the driver. It is to be noted that, while the driving return characteristic has an aspect that the return delay time period required for return relies upon contents of a secondary task performed by the driver, since, in regard to experience values unique to the driver, the return delay time period unique to an individual varies from various factors such as an environmental cognitive ability and return delay risk awareness, it is necessary for the system to grasp a characteristic of transition from a secondary task execution state to a manual driving returnable state during automatic driving of a specific individual who utilizes the same and to issue a notification suitable for the driver. Therefore, by creating a cumulative return characteristic distribution on the basis of a return characteristic history for each utilization time linked with biological activity observable information of the driver and learning a correlation between a biological observable activity amount and the return characteristic by a learner on the system side, prediction of a period of time required for return of the driver is performed. By calculating a return delay time period for determining a notification timing in response to a type of secondary task and biological activity observable information of a driver in this manner, a more appropriate return delay time period can be obtained.

In this instance, for example, the calculation unit may calculate the return delay time period in regard to the secondary task being executed by the driver by use of a plurality of pieces of relationship information between the observable evaluation value and the return delay time period accumulated for each secondary task executed by the driver. Further, in this case, the calculation unit may calculate the return delay time period by use of the plurality of pieces of relationship information between the observable evaluation value and the return delay time period such that the driver succeeds in driving return from the secondary task being executed at a predetermined ratio. In this case, a timing calculation unit may be able to perform resister setting of the predetermined ratio. By calculating the return delay time period by use of the relationship information (in the past) between the biological activity observable information of the driver and the actually required delay time period accumulated for each of the secondary tasks executed by the driver in this manner, a more appropriate return delay time period can be obtained.

Further, for example, the calculation unit may calculate the return delay time period corresponding to the driver who is authenticated and identified. Further, for example, the information processing apparatus may further include a penalty information recording unit configured to record penalty information in a case where the driver fails in driving return within the return delay time period calculated by the calculation unit. By examining a penalty based on the penalty information recorded in this manner, it is possible to prompt the driver to perform quick return.

From an ergonomic point of view, since a human originally has a nature that it does not make unnecessary efforts, an expectation for a precise takeover action of a driver on the basis of introduction of an ethical mechanism or rules is not always fulfilled. For example, in a case where a driver is required to perform takeover from automatic driving to manual driving and the takeover delays from a return request timing by the system request, even if the delay causes a traffic jam in the social infrastructure described above, if the driver does not have any benefit, the driver will only take an action depending on the driver's feeling of the time.

Therefore, in order to minimize social negative effects, it is necessary for the system to perform precise notification to a driver by a desirable notification method at a desirable return timing. Here, the desirable timing is a notification at an advance timing before arrival at a takeover point, which does not give rise to functional failure or degradation of the road infrastructure, taking a motion characteristic of a driver into account.

To precisely determine the advance timing is a significant factor of appropriate return of a driver. The reason is as follows. When the driver always performs notification normally at a very early timing, even if the driver receives the notification, since there is no significance in rapid coping with the notification for the driver, the driver has no need for performing an interruption of the secondary task and performing an early return to manual driving which is a primary task. Accordingly, as a result of incomplete return of the state of consciousness of the driver, a return to the primary task is eventually delayed, while the consciousness of the driver is taken back to the secondary task strongly (a climax of a game, an inspiring scene of video appreciation, or the like), and the brain consciousness of the necessity for return fades, causing a failure in takeover.

Then, since the action of the driver is not always fixed, it has a distribution of a fixed width, and therefore, in a case where the timing for notification is conversely set late and the notification is performed at a point extremely close to a point at which takeover is required, a situation may possibly occur in which return is not performed in time until the planned return point is reached and deceleration or emergent stop is caused. If notification is always performed at a timing extremely close to the planned return point or is not in time, even if a mechanism that imposes a penalty on the driver when the driver delays is introduced, in order to avoid the penalty, preparation for vigilance for return is required from an early state, and it becomes difficult for the driver to be involved in a secondary task at ease.

In other words, as a mechanism for allowing enjoyment of advantages of automatic driving without revealing a negative aspect (comprehensive problem) that the social infrastructure function is deteriorated, it is preferable that means which makes it possible to always grasp a desirable timing for return intuitively be provided to a user of automatic driving when the user uses a secondary task. Although one of such examples is to present information regarding a timing to a driver by visual display equipment, by voice, or the like, as described above, according to importance of the contents of a second task, a state of consciousness, and so forth in which the driver is placed, a time period from the secondary task to the drivable posture return and consciousness return has a significant distribution dispersion, and a timing at which intervention is required differs due to personal familiarity, a functional state of the body in addition to a dynamic characteristic unique to a vehicle.

Furthermore, the road environment itself also includes road sections in which traveling with low impact as a result of crawl deceleration of a traveling vehicle is possible and road sections in which traffic jams are readily induced. Further, in sections like limited sections in which a single lane is shared, if a vehicle stops on the single lane in the limited section, passage of other vehicles is interrupted. In order that inhibition of the social infrastructures is not induced, it is necessary to determine a notification timing by weighting a plurality of factors. It is to be noted that, although the return delay time period in the present text principally signifies and is used as a period of time required for completion of steering return by manual steering required for the driver after notification, it includes a period of time until an end of preparation for a period to be passed under attention monitoring and need not necessarily be used by a restricted definition.

In the present invention, traveling route information and traffic information relating to the traveling route are acquired by the information processing unit. Further, in response to an active decision state of the return delay characteristic of a specific driver in a specific vehicle taking a traveling characteristic of the own vehicle at applicable time in an applicable weather and so forth into account, a driver intervention requiring section and an automatic driving available section of the traveling route are displayed on an arrival prediction time axis from the current point on the basis of the traveling route information and the traffic information on a display device by the display controlling unit. For example, the display device is a display device included in a portable terminal, and a communication unit for communicating with the portable terminal may be further provided.

Although the technique for performing specific notification as in PTL 1 or PTL 2 has been known, the technique does not perform an optimization notification of return from automatic driving to manual driving taking a return delay characteristic into account, according to an environmental condition change of the traveling route that changes every moment, a loading weight and braking ability of the own vehicle, a return characteristic of the driver, and a state of the driver, which are supposed as a result of popularization of automatic driving. Accordingly, the notification performed every time is performed at a timing different from a timing at which the driving actually requires the notification, so that the necessity for actual return to the notification gradually becomes unclear.

In the past, different from notification upon passage through a defined point for each prescribed passage point at which provision to the driver is supposed, by accurately providing, information necessary for driving intervention return to the driver at an appropriate timing and with an accurate time sense, optimization without excessively earlier notification or excessively later notification can be achieved. As a result, even if an environmental change occurs every moment, main vehicles traveling on roads are appropriately made it possible to appropriately perform takeover from automatic driving to manual driving, and accordingly, the burden on the road infrastructure by incomplete takeover is reduced. As a result, even if automatic driving vehicles are introduced, induction of operational failure of the social road infrastructure can be prevented.

The operational failure of the infrastructure described here generally refers to that, in a case where there is a large number of vehicles by which takeover from automatic driving to manual driving is not performed correctly, in a road section in which the bandwidth for vehicle passage of the road infrastructure is narrow, if there are many emergently decelerating vehicles or stopping vehicles, a flow of vehicles is decelerated or disturbed in the road section and a normal traffic amount cannot be maintained.

For example, in a case where a route for an itinerary is set to travel, a driver intervention requiring section may include, on a map to be presented to the driver, a manual driving section, a takeover section from automatic driving to manual driving, and a cautious traveling section from automatic driving. In this case, for example, the display controlling unit may display the automatic driving available section in a first color, displays the manual driving section in a second color, and displays the takeover period and the cautious traveling section in a third color. This makes it possible for the driver to visually view a manual driving section, a takeover section from automatic driving to manual driving, and a cautious traveling section from automatic driving and automatic driving available section of a traveling route. However, in a case where the driver does not normally utilize the route sections to get a sense of an average passing speed and so forth for each section, if only the sections are displayed on the map, the sense of time until a point at which driving intervention return is required is reached is left to rules of thumb, and it is difficult for the driver to intuitively know how much extra time there is in regard to whether something can be performed till a takeover point. It is to be noted that, in a case where the takeover section described here is viewed in a section alone, it is a grace section set for takeover because, although traveling by automatic driving is possible in the section, if takeover from automatic driving to manual driving is not completed before a vehicle reaches a section to be entered next to the section, seamless and smooth continuous traveling is disturbed. The cautious traveling section is a section through which, although full return by which manual driving of the driver relates to substantial steering control is not necessarily required, in a case where the system struggles to cope with an event and cannot perform coping condition determination, the vehicle can pass in an automatic driving state in a waiting condition in which the driver can return to manual driving as quickly as possible in response to a system request.

In view of this, it is necessary for the driver to be always conscious preferentially of a return point even during a work of a secondary task, which is originally a maximum advantage of automatic driving, and this makes an execution hindrance of the secondary task and after all, compels the driver to continue its attention during a period during which there is no need for paying attention to the return point. As a result, if the driver is demanded to increase its attention for return, when the attention and tension state has already continued for a long period of time during the secondary task activities in the meantime, the perception cognition sense is paralyzed and the attention to return becomes lower. In contrast, when an arrival prediction time period from each current point to each takeover point is normally and intuitively updated and displayed as a time axis, by use of both of secure execution of a secondary task and timely notification, a return point is always found suitably in advance, and a takeover point can be recognized readily and timely.

Further, for example, the display controlling unit may display a first section from the current point to a first point by a first time axis, display a second section from the first point to a second point by a time axis that gradually changes from the first time axis to a second time axis reduced at a predetermined ratio with respect to the first time axis, and display a third section from the second point to a third point by the second time axis. This makes it possible for the driver to know section information nearest in time in a limited display space and know section information farther in time.

In this case, for example, the display controlling section may display the first section with a first width, display the second section with a width that gradually changes from the first width to a second width that is narrower than the first width, and display the third section with the second width. This makes it possible for the driver to visually and intuitively recognize the degree of reduction of the time axis of the second section and the third section with respect to that of the first section.

Further, in this case, for example, in the third section, even if a driving vehicle intervention requiring section actually corresponds to a fixed time length or less, it may be displayed with the fixed time length. This makes it possible to display the third section having a time axis reduced much such that the driver can recognize the driving vehicle intervention requiring section of a short period of time readily.

Further, for example, the display controlling unit may further display information relating to a point designated in each of the displayed sections. This makes it possible for the driver to designate a given point in each section to acquire information relating to the point.

Further, for example, the display controlling unit may display a newly appearing driving vehicle intervention requiring section so as to be identifiable from an existing driving vehicle intervention requiring section. In this case, the newly appearing driving vehicle intervention requiring section is displayed, for example, in a flickering manner or in a different color. This makes it possible to readily recognize the newly appearing driving vehicle intervention requiring section and explicitly grasp a plan to be coped with or changed with respect to traveling planning that has been planned before occurrence of an additional event.

Further, for example, when the driver intervention requiring section enters a range within a fixed period of time from the current point, the display controlling unit may place the driver intervention requiring section into an emphatically displayed state. In this case, the driver intervention requiring section is displayed, for example, in a flickering manner, in a different color, in an illusion display by which the speed of movement looks higher than the actual speed, or in a wave display. This makes it possible for the driver to readily recognize that the driver intervention requiring section enters a range of a fixed period of time from the current point. Flickering display of dynamic display acts to stimulate the dynamic visual acuity and is a method that uses means useful for warning.

Further, for example, the display controlling unit may display a display image of each section in parallel to a work window. This makes it possible for the driver, who is performing a work with the work window, to readily recognize a driver intervention requiring section and an automatic driving available section of a traveling route on an arrival prediction time axis from the current point. In a case where a secondary task is to be performed using the same equipment, the equipment preferably is a display apparatus on which a multitask matter can be executed and may be a display as a sub window in the case of a tablet terminal or a smartphone or may be a video player, a game terminal, a video conference system, or the like.

In this manner, in the present invention, a driver intervention requiring section and an automatic driving available section of a traveling route are displayed on an arrival prediction time axis from the current point on a display device on the basis of traveling route information and traffic information. Therefore, section information for immediately traveling of the traveling route can be appropriately provided to a driver. Such display update methods need to be performed such that the driver can accurately grasp section approach information with consciousness. However, on the other hand, if information is always updated and displayed in a field of view, the cognitive function of the driver sometimes acts as filtering that excludes, although information enters as light into the eyes, contents of the display information from the consciousness. Although the filtering effect of always displayed information by the driver makes one of causes of missing information, it can be reduced or avoided by introducing an interactive check response procedure with a driver.

In this manner, in the present invention, a return delay time period that determines a notification timing is calculated on the basis of the state of the driver, and a notification of driving return to the driver can be performed at an appropriate timing.

Also, along with display of a takeover point described above, in addition to importance of presentation of information at an appropriate timing, a determination method of the appropriate timing is very impotent, and as described hereinabove, the period of time required to return after a notification is received has a significant dispersion in time depending on experience values unique to the driver or the like. When a driver uses the system for the first time, a reaction characteristic of the driver to a notification or a state of a secondary task that can be taken by the driver is various, and the system cannot know a return unique characteristic of the driver. Therefore, by repeating the number of utilization, assuming that a notification is issued or awakening is performed at an optimum notification timing determined using an average return characteristic in data collected statistically as basic data, the system can accumulate sampling data of a period of time which the driver needs to takeover after the driver receives the notification. Since it is expected physiologically that the user typically shows a quick reaction to the notification from anxiety if the user is unfamiliar to the system, the driver returns without a significant delay to some extent at an initial stage of utilization.

However, since there is also a personal characteristic distribution and there is also a user who returns but late at a fixed ratio as described hereinabove, in order to avoid an adverse effect by utilization of the system, a little early return notification is performed on the settings. If users do not succeed in return from automatic driving to manual driving normally in a planned return time period (hereinafter referred to also as return grace time period budget) at the fixed ratio, this becomes a significant factor. Thus, since such a situation that a user feels that the notification is early also occurs frequently, the notification is uselessly early to some early return users, and since a result that the notification is downplayed is caused, specialization of a notification timing according to a personal return characteristic of a user becomes effective.

The period of time required for return differs much depending upon contents of a secondary task in which the driver is involved, and therefore, in order to know a notification point, it is first necessary for the system to always perform state monitoring of the contents of the secondary task being executed by the driver. The reason that monitoring is always performed is also that, at a sudden event, it may be too late to decide a notification timing for the first time since an initial observation of the driver state is performed. When a sudden event occurs, even if the driver is demanded to cope with the event after ten seconds, for example, in a state in which the driver is away from the seat taking a nap, return of the driver cannot be expected. In such a case, with the system of performing constant monitoring of the driver status, the system may automatically decelerate, perform traveling assistance, escape, or stop the vehicle. Alternatively, if the driver has a smartphone in hand in a driving possible sitting posture on the driver's seat and makes a phone call, for example, there is a possibility that manual driving return may be expectable sufficiently.

A log of contents of a secondary task performed by the driver, observable biological information indicative of a driver awakening state in the meantime, and a delay time period required to return is fetched cumulatively, and especially, a delay time period required for observable evaluation and return is learned by the system. Then, a minimum required time period in which return succeeds without fail at a ratio equal to or higher than a fixed ratio cumulatively from a distribution of such return characteristics is a notification timing in the (monitoring) observed state for the driver. Then, regarding the return characteristic to this notification timing, by generating a penalty when a delay of a return procedure (including a progress on the way) within a planned period of time, it is possible to prompt the user to return within a habitual deadline, so that a large number of users for automatic driving can receive a notification suitable for an individual return delay characteristic. As a result, a usage form in which a return probability satisfies a target success value is achieved.

Although delay time period calculation in return from automatic driving to manual driving is described in detail with reference to one axis of an observable evaluation value that is detected during performance of a secondary task of a driver and can become an index, for example, to an awakening state, since the return time period differs under different conditions such as road conditions, weather conditions, and vehicle conditions as described above, more multidimensional evaluation may be executed particularly, and a technique such as machine learning or deep learning and learning such as deep reinforcement learning or the like may be performed further without distinction. Regarding this return delay time period estimation, since various observable evaluation value logs during execution of a secondary task, delay time periods occurring for each takeover target event, and takeover qualities at takeover point arriving points thereupon can be further observed as the quality of driving return, it is possible to learn teacher data by normal return and return upon abnormal delay in the log data of the fetched events.

[Advantageous Effects of Invention]

According to the present invention, notification of driving return to a driver can be performed at an appropriate timing. As an effect of the present invention, by combining an information acquisition unit that constantly acquires traveling route information, vehicle characteristics, and traffic information relating to the traveling route and an information provision controlling unit that constantly updates and presents, on the basis of the traveling route information and the traffic information, a driver intervention requiring section of the traveling route, a traveling characteristic of an own vehicle on the applicable route, and an automatic driving available section on a display device or the like on which they can be intuitively recognized on an arrival prediction time axis from the point at which the own vehicle is currently traveling, the driver can interrupt, while being involved in a secondary task, the secondary task and grasp a timing at which the driver is to return to manual driving. Further, since an automatic driving system makes it possible to always acquire a return notification at an appropriate return requiring timing in an appropriate notification form from the automatic driving system, a start of return can be made without downplaying the return notification and further, without rush, and therefore, an effect that the normal return probability is improved can be expected.

It is expected that this effect contributes much to a solution of a comprehensive problem of normal utilization of the social infrastructure because, as a result not only of comfortable utilization of an automatic driving function by a driver of a single vehicle in which the applicable function is incorporated but also of utilization of a vehicle on the social infrastructure with an appropriate return probability held, significant reduction of a traffic jam and cutoff risk of traffic paths that form artery roads of the society as roads is implemented. Simultaneously, although it has been, in the past, an introduction concept of fully automatic driving that it is introduced into a limited enclosed space environment in which the LDM is fully constructed and maintained in a utilizable region such as in large shopping mall grounds, in campuses, or in airport grounds, the present technique has a comprehensive effect that fully automatic driving can be utilized seamlessly to general roads and is spread and developed to a social wide area. It is to be noted that the advantageous effects described in the present specification are merely examples and are not restrictive, and additional effects may be applicable.

[Brief Description of Drawings]

[FIG. 1]

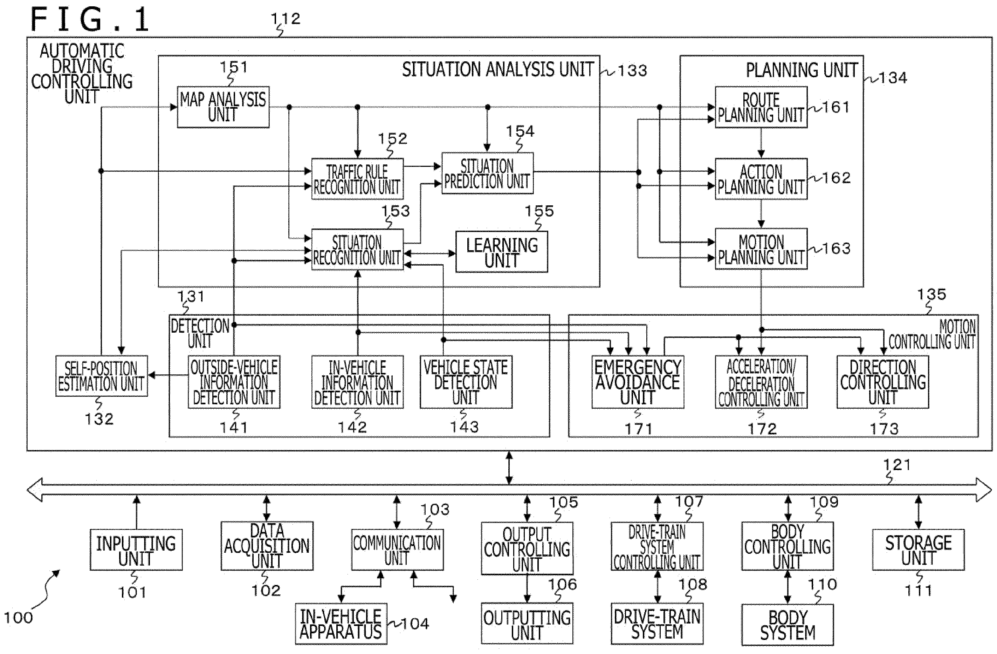

FIG. 1 is a block diagram depicting an example of a configuration of a vehicle controlling system.
[FIG. 2]

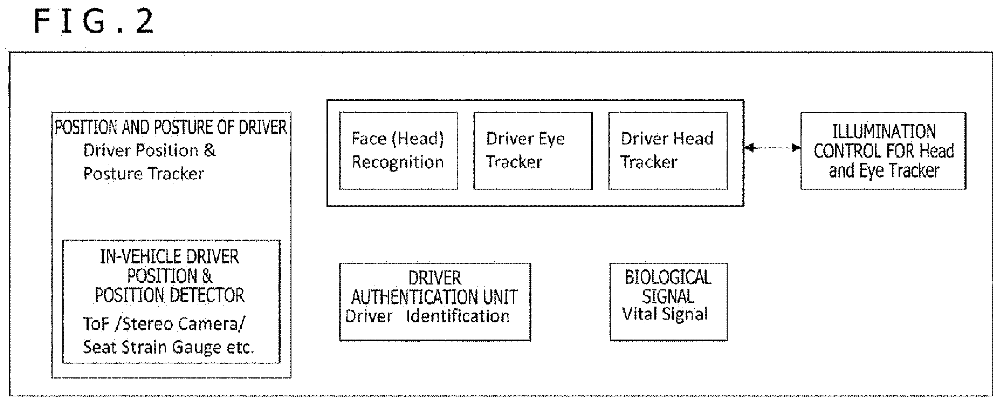

FIG. 2 is a view depicting an example of installation of various sensors for detecting internal information (driver state) of an own vehicle.
[FIG. 3]

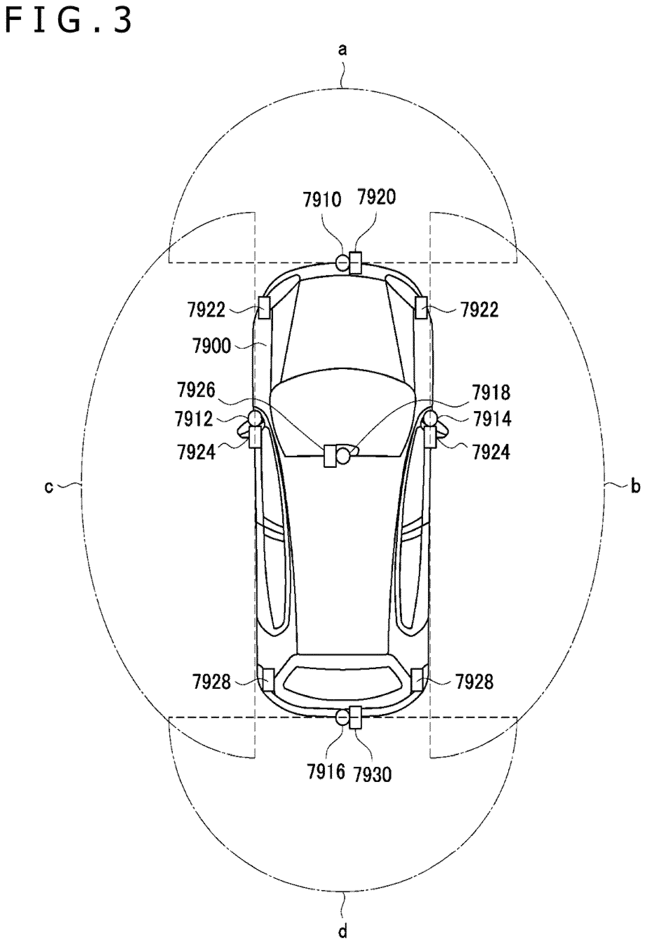

FIG. 3 is a view depicting various sensors for obtaining information of a driver in the vehicle included in a data acquisition unit.
[FIG. 4]

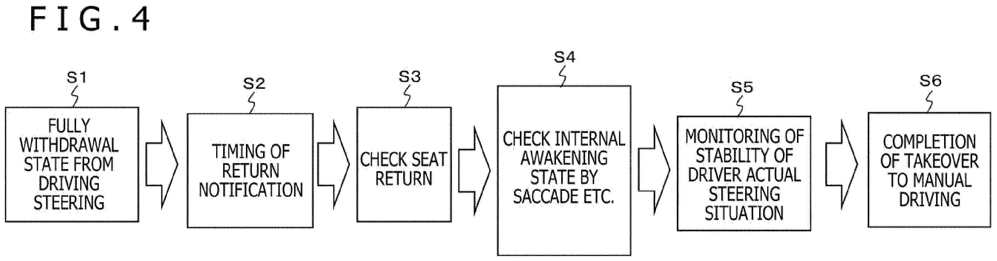

FIG. 4 is a view schematically depicting an example of a manual takeover sequence of automatic driving by an automatic driving controlling unit.
[FIG. 5]

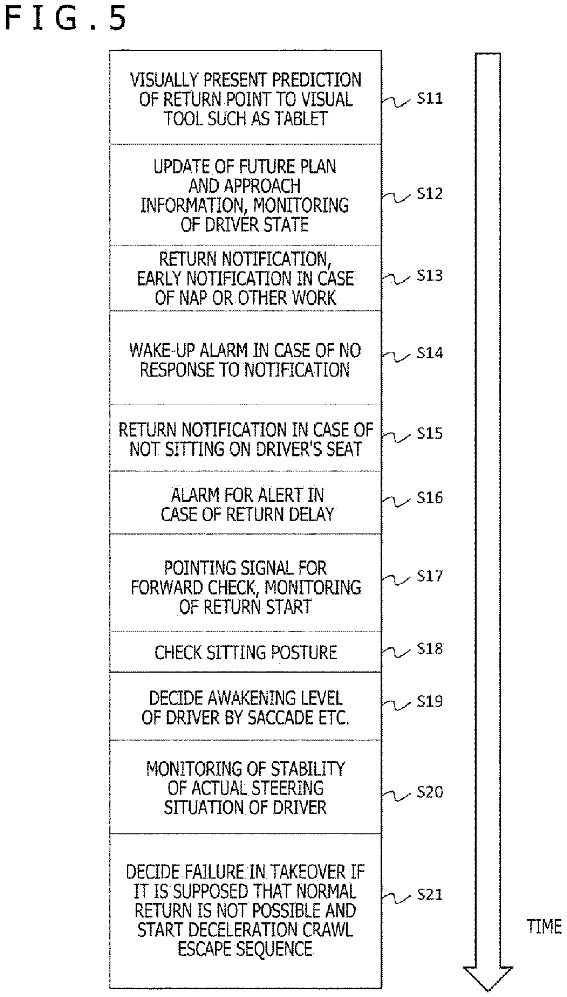

FIG. 5 is a view depicting a more detailed example of the manual takeover sequence of automatic driving.
[FIG. 6]

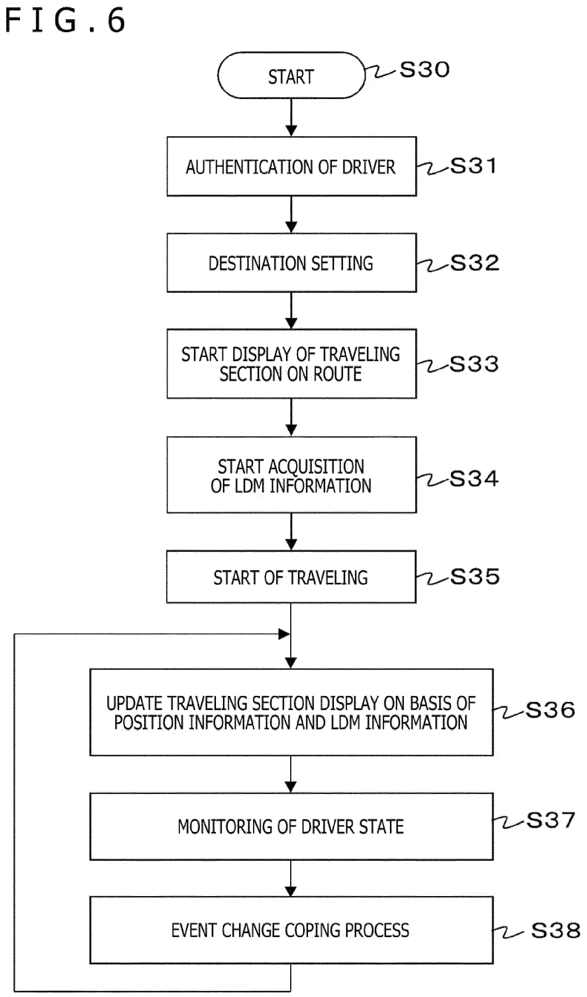

FIG. 6 is a flow chart depicting an overview of operation of an automatic driving target vehicle including the vehicle controlling system.
[FIG. 7]

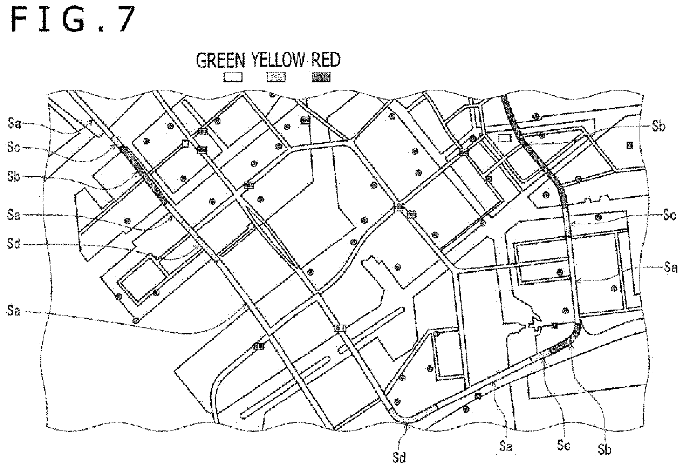

FIG. 7 is a view depicting an example of a traveling route in which automatic driving availability sections determined by setting of a destination by a driver are set intermittently.
[FIG. 8]

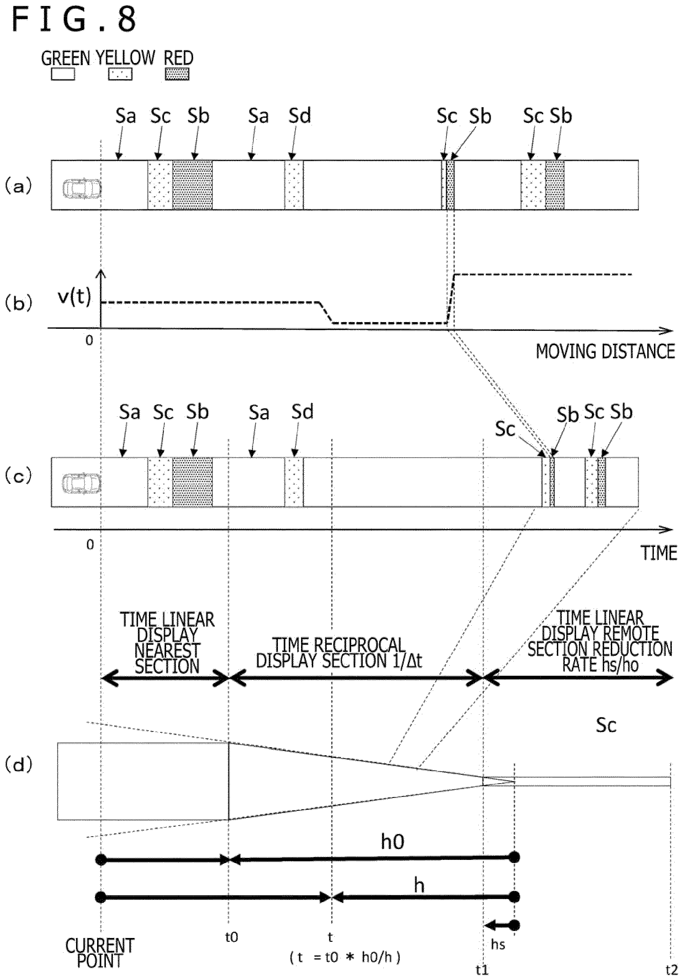

FIG. 8 depicts views each illustrating information processing for a traveling section display image along the traveling route.
[FIG. 9]

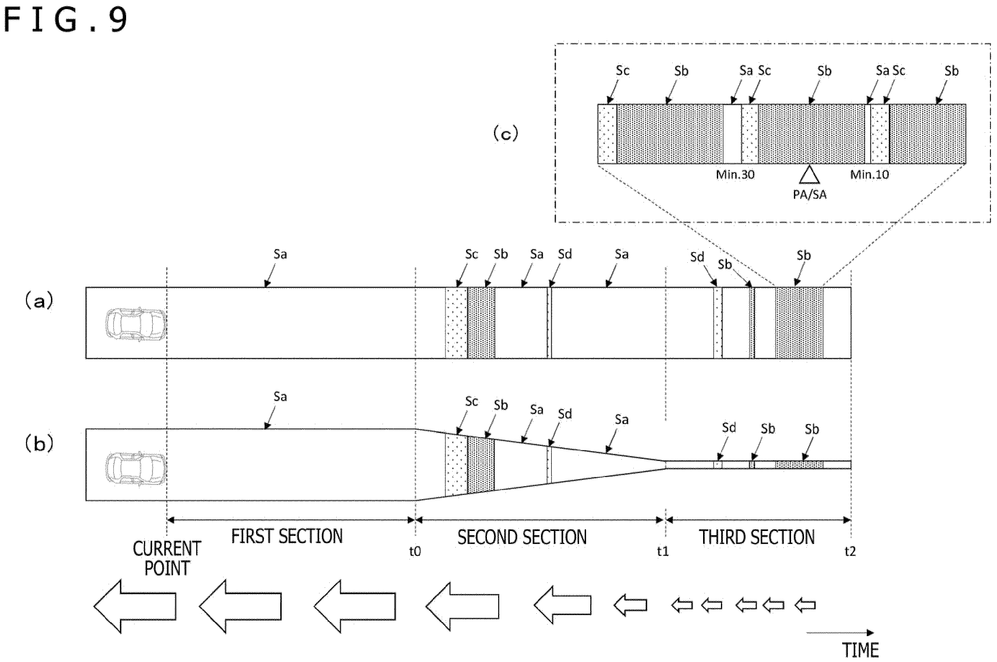

FIG. 9 depicts views each illustrating an example of a traveling section display image that is displayed finally.
[FIG. 10]

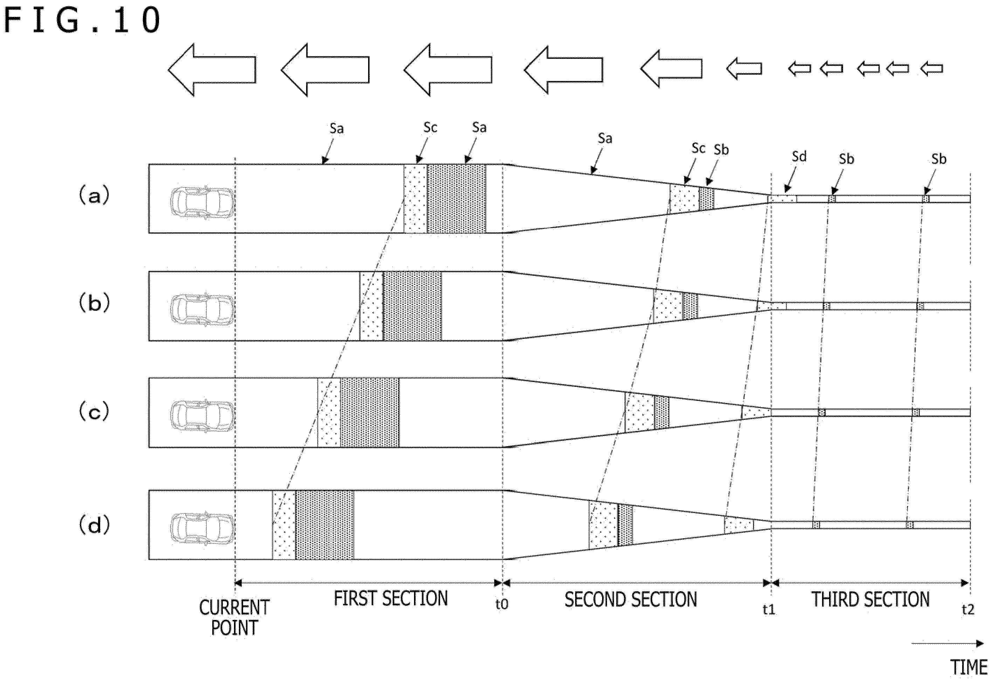

FIG. 10 depicts views each illustrating an example of change (example of scroll) of a traveling section display image as time passes.
[FIG. 11]

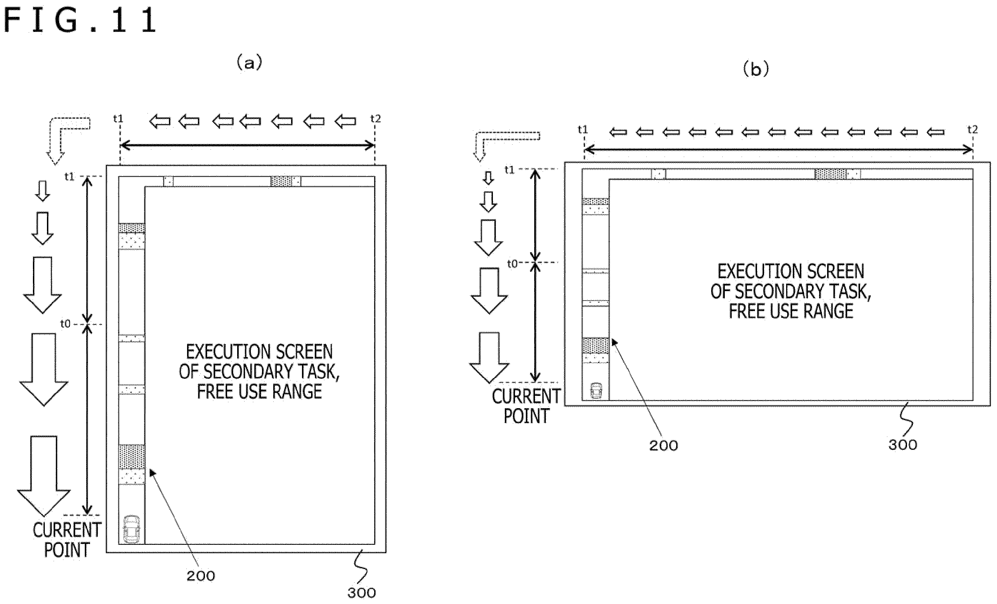

FIG. 11 depicts views each illustrating an example of a traveling section display image along a traveling route displayed on a screen of a tablet.
[FIG. 12]

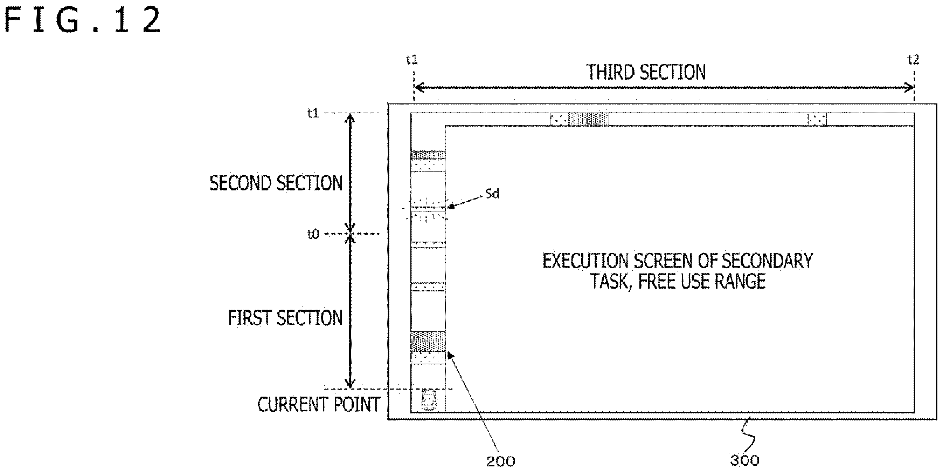

FIG. 12 is a view depicting an example in which a cautious traveling section Sd appears newly in a second section and a warning of this is given to a driver in a flickering display.
[FIG. 13]

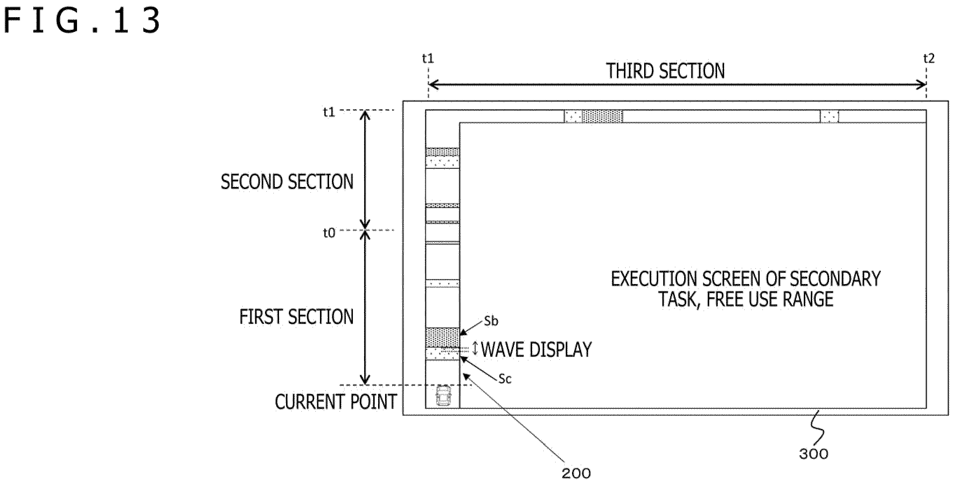

FIG. 13 is a view depicting an emphatic display (wave display) when a driver intervention requiring section comes in a range of a fixed period of time from the current spot in a state in which a traveling section display image is displayed on the screen of the tablet.
[FIG. 14]

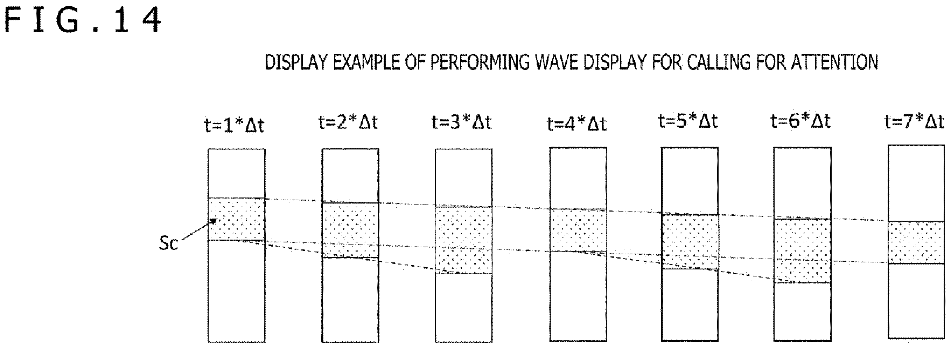

FIG. 14 is a view depicting an example of display that performs wave display.
[FIG. 15]

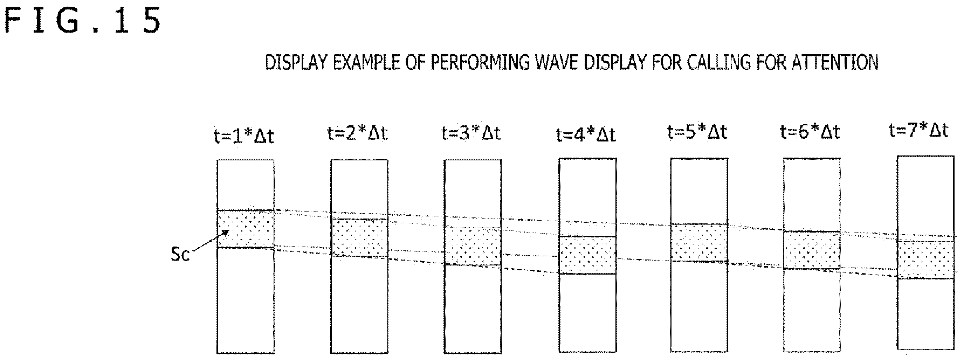

FIG. 15 is a view depicting another example of display that performs wave display.
[FIG. 16]

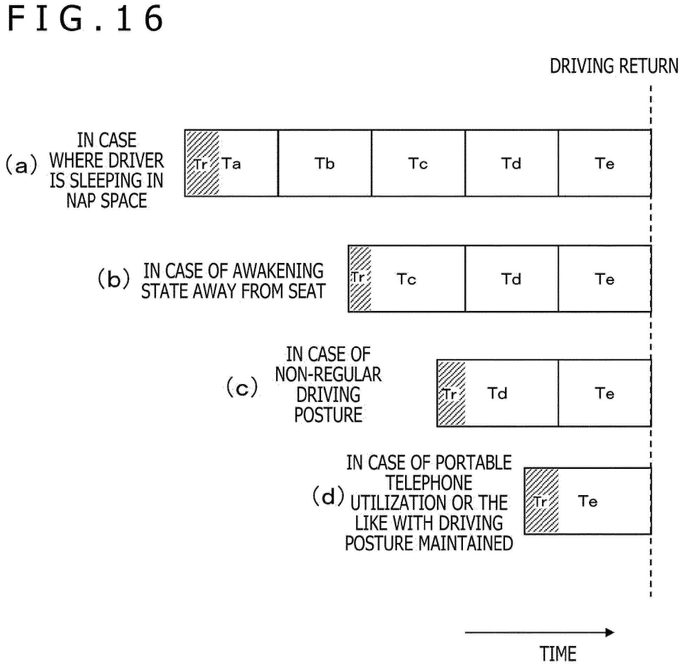

FIG. 16 depicts views each illustrating a relationship between types of a secondary task and return delay time periods for determining a notification timing.
[FIG. 17]

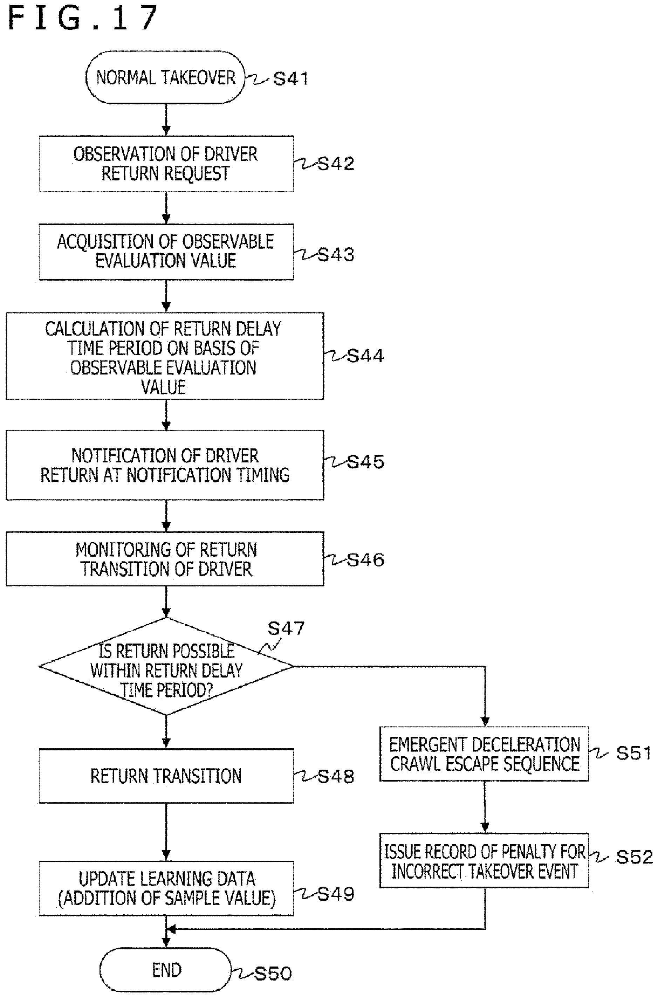

FIG. 17 is a flow chart depicting an example of a procedure of a normal takeover process.
[FIG. 18]

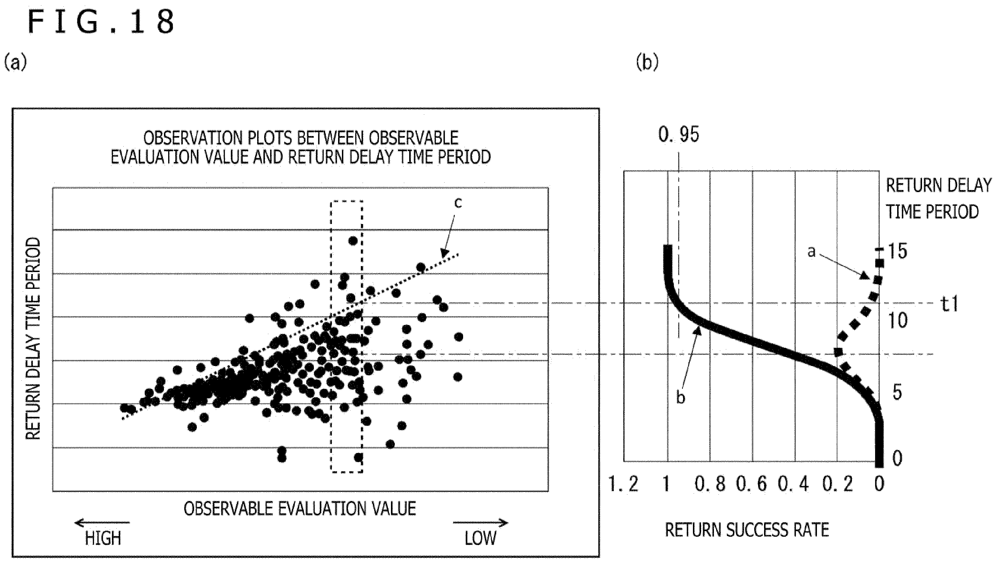

FIG. 18 depicts views each illustrating calculation of a return delay time period from a learning result.
[FIG. 19]

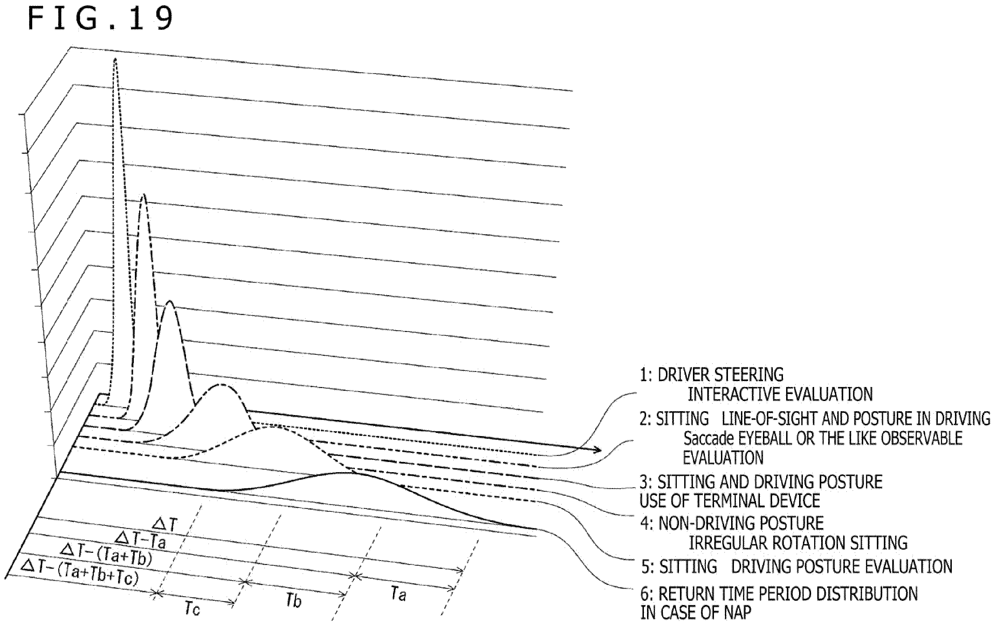

FIG. 19 is a view depicting a difference in return time period distribution according to a withdrawal state from a traveling steering work.
[FIG. 20]

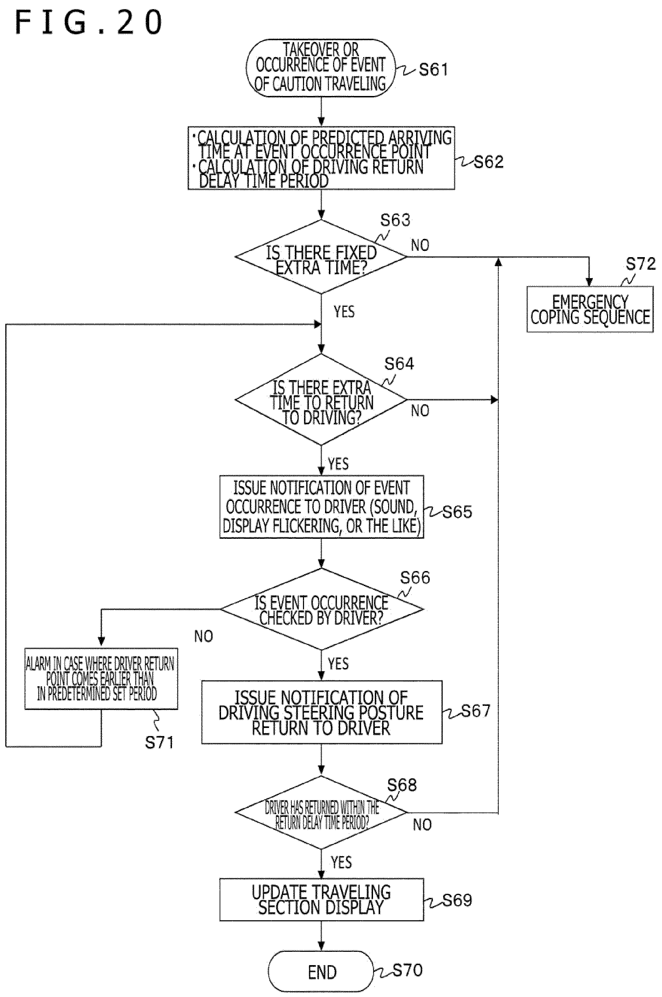

FIG. 20 is a flow chart depicting an example of a procedure of an event occurrence process.
[FIG. 21]

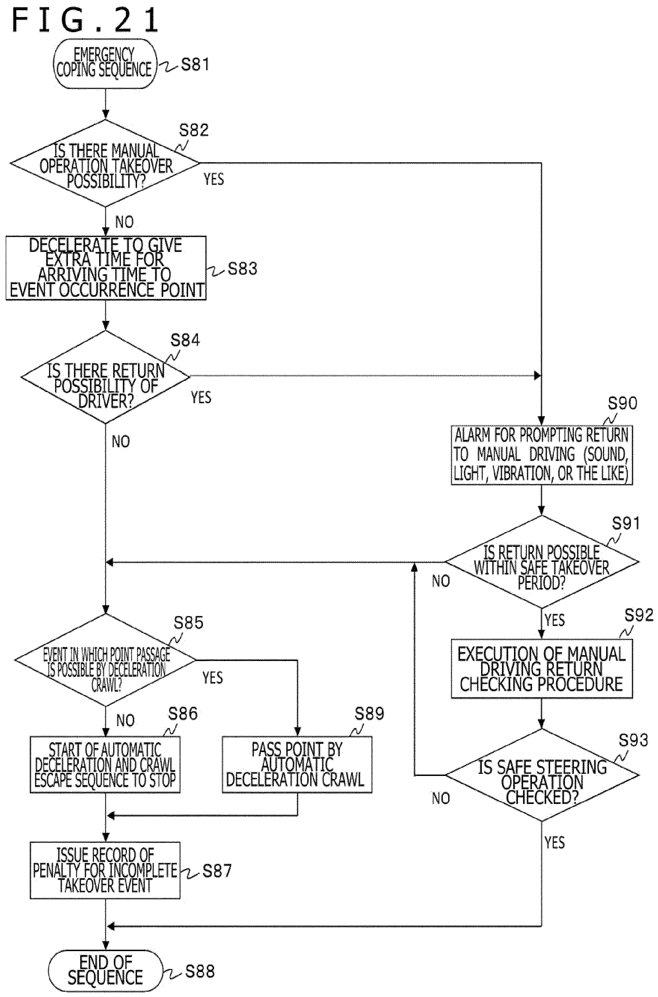

FIG. 21 is a flow chart depicting an example of a procedure of an emergency dealing sequence.
[FIG. 22]

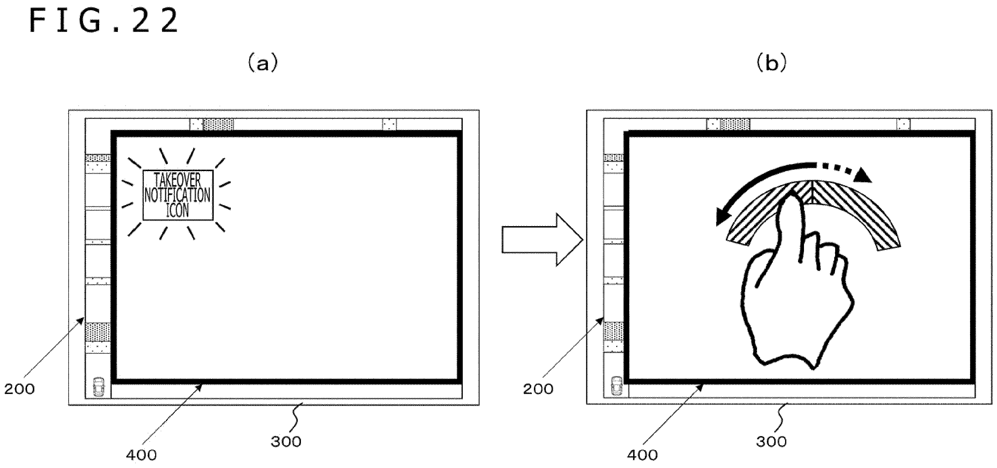

FIG. 22 depicts views each illustrating an example of a takeover notification or a restart return point designation slider menu displayed on a terminal.
[FIG. 23]

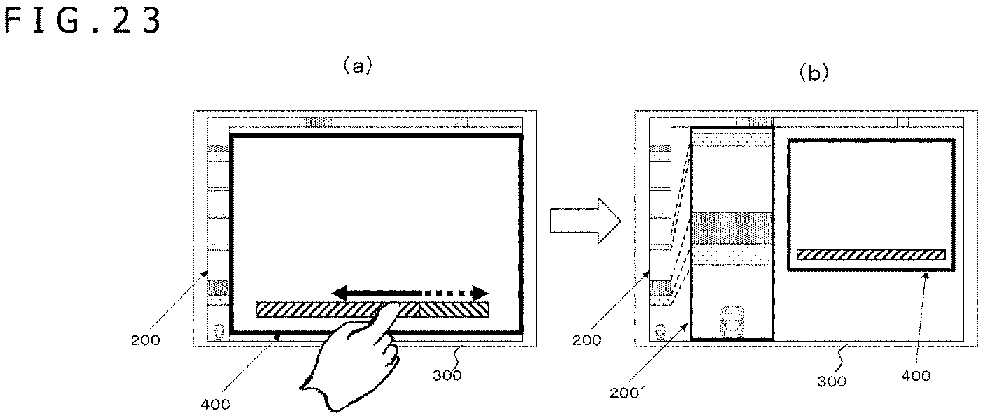

FIG. 23 depicts views each illustrating an example of a display image of a reduction ratio and so forth of a secondary task execution window in a case where there is not a restart return point designation slider menu to be displayed on a terminal or an acknowledge response of a secondary task performer.
[FIG. 24]

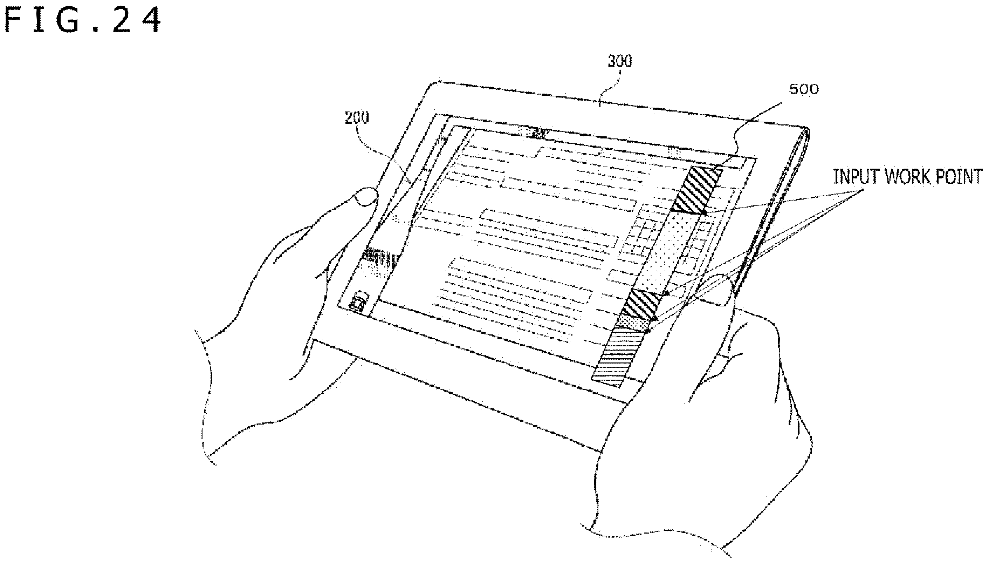

FIG. 24 is a view depicting an example of a display of a slider menu that designates a work restart point displayed on a terminal.
[FIG. 25]

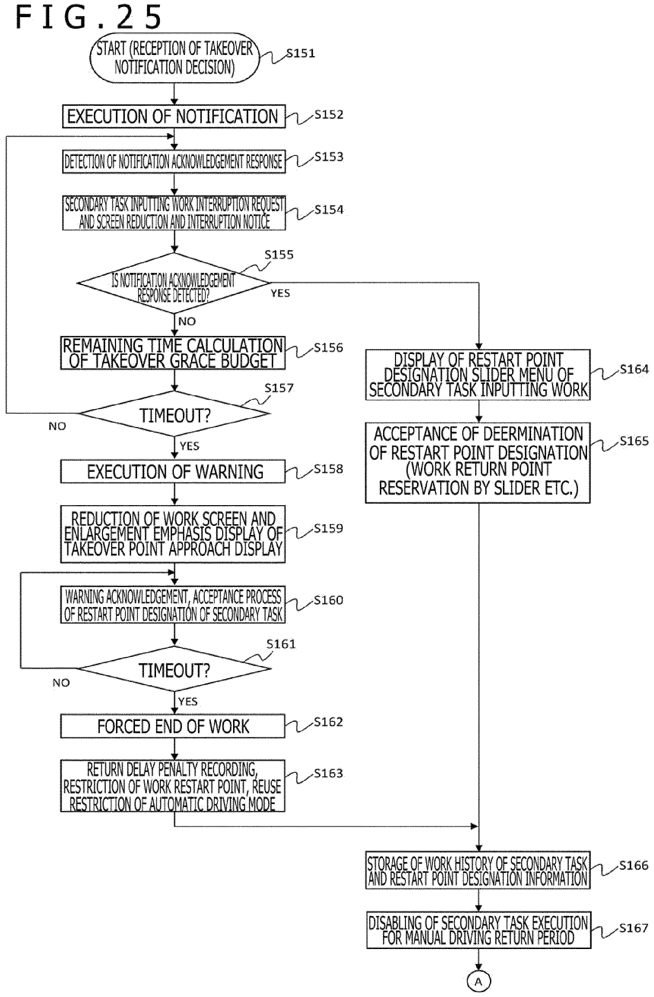

FIG. 25 is a flow chart (1/2) depicting an example of a processing procedure of the system in a case where a takeover notification decision is received.
[FIG. 26]

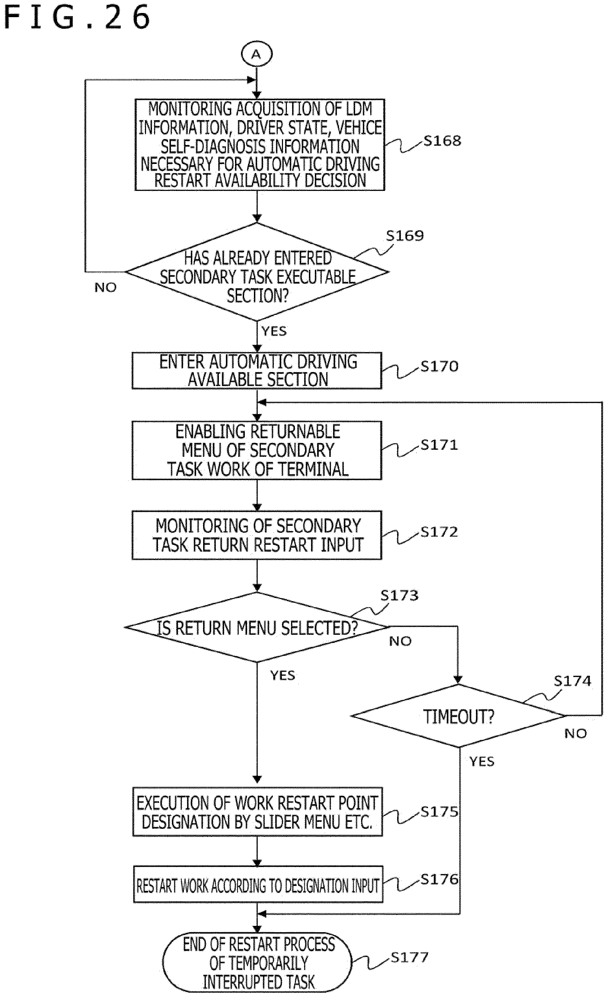

FIG. 26 is a flow chart (2/2) depicting the example of the processing procedure of the system in the case where the takeover notification decision is received.

[Description of Embodiment]

In the following, a mode for carrying out the invention (hereinafter referred to as an "embodiment") is described. It is to be noted that the description is given in the following order.

1. Embodiment
2. Modifications

<1. Embodiment>

(Configuration of automatic driving controlling system)

FIG. 1 depicts an example of a configuration of a vehicle controlling system 100 as the embodiment. It is to be noted that, in a case where a vehicle in which the vehicle controlling system 100 is provided is distinguished from any other vehicle, it is referred to as an own car or an own vehicle.
The vehicle controlling system 100 includes an inputting unit 101, a data acquisition unit 102, a communication unit 103, an in-vehicle apparatus 104, an output controlling unit 105, an outputting unit 106, a drive-train system controlling unit 107, a drive-train system 108, a body controlling unit 109, a body system 110, a storage unit 111, and an automatic driving controlling unit 112.
The inputting unit 101, the data acquisition unit 102, the communication unit 103, the output controlling unit 105, the drive-train system controlling unit 107, the body controlling unit 109, the storage unit 111, and the automatic driving controlling unit 112 are connected to each other by a communication network 121. The communication network 121 includes an in-vehicle communication network, a bus, or the like that complies with an arbitrary standard such as, for example, CAN (Controller Area Network), LIN (Local Interconnect Network), LAN (Local Area Network), or FlexRay (registered trademark). It is to be noted that the components of the vehicle controlling system 100 are sometimes connected directly to each other without the intervention of the communication network 121.
It is to be noted that, in the description hereinafter given, in a case where the components of the vehicle controlling system 100 communicate with each other through the communication network 121, description of the communication network 121 is omitted. For example, in a case where the inputting unit 101 and the automatic driving controlling unit 112 communicate with each other through the communication network 121, this is simply described as follows: the inputting unit 101 and the automatic driving controlling unit 112 communicate with each other.
The inputting unit 101 includes a device that is used to input various data, instructions, and so forth by a passenger. For example, the inputting unit 101 includes operation devices such as a touch panel, buttons, a microphone, switches, and levers, as well as operation devices capable of inputting by a method other than a manual driving through a voice, a gesture, or the like. Further, for example, the inputting unit 101 may be a remote control apparatus that utilizes infrared rays or other electromagnetic waves or an external connection apparatus such as a mobile apparatus, a wearable apparatus, or the like, which are ready for an operation of the vehicle controlling system 100. The inputting unit 101 generates an input signal on the basis of data, an instruction, or the like inputted by a passenger and supplies the input signal to the components of the vehicle controlling system 100.

The data acquisition unit 102 includes various sensors for acquiring data to be used for processing of the vehicle controlling system 100 and supplies the acquired data to the components of the vehicle controlling system 100.

For example, the data acquisition unit 102 includes various sensors for detecting a state and so forth of the own vehicle. In particular, for example, the data acquisition unit 102 includes a gyro sensor, an acceleration sensor, an inertial measurement device (IMU), sensors for detecting an operation amount of an accelerator pedal, an operation amount of a brake pedal, a steering angle of a steering wheel, an engine speed, a motor speed, a rotational speed of wheels and so forth, and other necessary sensors.

Further, the data acquisition unit 102 includes various sensors for detecting information outside the own vehicle, for example. In particular, the data acquisition unit 102 includes an imaging apparatus such as a ToF (Time Of Flight) camera, a stereo camera, a monocular camera, an infrared camera, and other cameras, for example. Further, the data acquisition unit 102 includes an environment sensor for detecting the weather, meteorological phenomenon, or the like, and surrounding information detection sensors for detecting an object around the own vehicle, for example. The environment sensor includes a rain drop sensor, a fog sensor, a sunshine sensor, and a snow sensor, and the like, for example. The surrounding information detection sensor includes, for example, an ultrasonic sensor, a radar, a LiDAR (Light Detection and Ranging, Laser Imaging Detection and Ranging), a sonar, and so forth.

For example, FIG. 2 depicts an example of installation of various sensors for detecting external information of the own vehicle. Imaging apparatuses 7910, 7912, 7914, 7916, and 7918 are provided at at least one of positions on a front nose, side mirrors, a rear bumper, a back door of the vehicle 7900, or at a position on an upper portion of a windshield within the interior of the vehicle.

The imaging apparatus 7910 provided on the front nose and the imaging apparatus 7918 provided at the upper portion of the windshield in the interior of the vehicle acquire images principally ahead of the vehicle 7900. The imaging apparatuses 7912 and 7914 provided on the side mirrors acquire images principally of the sides of the vehicle 7900. The imaging apparatus 7916 provided on the rear bumper or the back door acquires an image principally behind the vehicle 7900. The imaging apparatus 7918 provided at the upper portion of the windshield in the interior of the vehicle is used for detection principally of a preceding vehicle or of a pedestrian, an obstacle, a traffic light, a traffic sign, a lane track, and so forth. Further, in automatic driving in the future, the imaging apparatus 7918 may be extensionally utilized to a pedestrian crossing a road ahead of a left or right turn in an wider area range when the vehicle turns to the left or right or further to a range of an approaching substance on a crossing road.

It is to be noted that, in FIG. 2, an example of imaging ranges of the imaging apparatuses 7910, 7912, 7914, and 7916 is depicted. An imaging range a indicates an imaging range of the imaging apparatus 7910 provided on the front nose; imaging ranges b and c depict imaging ranges of the imaging apparatuses 7912 and 7914 provided on the side mirrors, respectively; and an imaging range d indicates an imaging range of the imaging apparatus 7916 provided on the rear bumper or the back door. For example, by overlaying image data captured by the imaging apparatuses 7910, 7912, 7914, and 7916, a bird's eye image of the vehicle 7900 viewed from above, an omnidirectional three-dimensional display image surrounding the vehicle periphery with curved planes, and so forth are obtained.

The sensors 7920, 7922, 7924, 7926, 2928, and 7930 provided on the front, rear, sides, and corners of the vehicle 7900 and at the upper portion of the windshield in the interior of the vehicle may be, for example, ultrasonic sensors or radars. The sensors 7920, 7926, and 7930 provided on the front nose, rear bumper and backdoor and at the upper portion of the windshield in the interior of the vehicle may each be, for example, a LiDAR. The sensors 7920 to 7930 are used for detection principally of a preceding vehicle, a pedestrian, an obstacle, or the like. A result of such detection may be applied further to improvement in three-dimensional object display of the bird's eye display or omnidirectional stereoscopic display.

Referring back to FIG. 1, for example, the data acquisition unit 102 includes various sensors for detecting the current position of the own vehicle. In particular, the data acquisition unit 102 includes, for example, a GNSS receiver for receiving GNSS signals from GNSS (Global Navigation Satellite System) satellites, and so forth.

Further, the data acquisition unit 102 includes various sensors, for example, for detecting information regarding the inside of the vehicle. In particular, for example, the data acquisition unit 102 includes an imaging apparatus for imaging the driver, a biological sensor for detecting biological information of the driver, a microphone for collecting sound in the interior of the vehicle and so forth. The biological sensor is provided, for example, on a seat face, the steering wheel, or the like and detects a sitting state of a passenger sitting on a seat or biological information of the driver who grabs the steering wheel. As a biological signal, diversified observable data of a heart rate, a pulse rate, a blood flow, breathing, a mind-body correlation, a visual stimulus, brain waves, sweating, a drift, a head posture behavior, the eyes, gaze, a blink, a saccade, a micro saccade, fixation, drift, staring, an iris pupil reaction, and so forth can be utilized. Biological activity observable information that reflects such observable driving states is summarized as observable evaluation values estimated from the observation and is used, from a return delay time characteristic linked to logs of the evaluation values, as unique characteristics of a return delay incident of the driver for calculation of a return notification timing by a learning unit 155 hereinafter described.

FIG. 3 depicts various sensors for obtaining information of a driver in the vehicle included in the data acquisition unit 102. For example, the data acquisition unit 102 includes, as detectors for detecting a position and a posture of a driver, a ToF camera, a stereo camera, a seat strain gage (Seat Strain Gauge), and so forth. Further, the data acquisition unit 102 includes, as detectors for obtaining biological activity observable information of a driver, a face recognizer (Face (Head) Recognition), a driver eye tracker (Driver Eye Tracker), a driver head tracker (Driver Head Tracker), and so forth.

Further, the data acquisition unit 102 includes, as a detector for obtaining a biological activity observable information of a driver, a biological signal (Vital Signal) detector. Further, the data acquisition unit 102 includes a driver authentication (Driver Identification) unit. It is to be noted that, as an authentication method, not only knowledge authentication by a password, a password number or the like but also biometric authentication by the face, a fingerprint, an eye iris, a voiceprint, or the like are available.

The communication unit 103 performs communication with the in-vehicle apparatus 104 as well as various apparatuses, servers, base stations, and so forth outside the vehicle to transmit data supplied from the components of the vehicle controlling system 100 and supplies received data to the components of the vehicle controlling system 100. It is to be noted that the communication protocol supported by the communication unit 103 is not specifically restricted, and also it is possible for the communication unit 103 to support a plurality of kinds of communication protocols.

For example, the communication unit 103 performs wireless communication with the in-vehicle apparatus 104 through a wireless LAN, Bluetooth (registered trademark), NFC (Near Field Communication), WUSB (Wireless USB), or the like. Further, the communication unit 103 performs wired communication with the in-vehicle apparatus 104 through a connection terminal not depicted (and a cable if necessary) by an USB (Universal Serial Bus), an HDMI (High-Definition Multimedia Interface), an MHL (Mobile High-definition Link), or the like.

Furthermore, the communication unit 103 performs communication, for example, with an apparatus (for example, an application server or a control server) existing in an external network (for example, the Internet, a cloud network or a network unique to a provider) through a base station or an access point. Further, the communication unit 103 performs communication with a terminal existing in the neighborhood of the own vehicle (for example, a terminal of a pedestrian or a shop or an MTC (Machine Type Communication) terminal), for example, using the P2P (Peer To Peer) technology.

Furthermore, the communication unit 103 performs V2X communication such as, for example, vehicle to vehicle (Vehicle to Vehicle) communication, road to vehicle (Vehicle to Infrastructure) communication, communication between the own vehicle and a home (Vehicle to Home), and pedestrian to vehicle (Vehicle to Pedestrian) communication. Further, the communication unit 103 includes a beacon reception unit, for example, and receives a radio wave or an electromagnetic wave originated from a wireless station or the like installed on a road to acquire information regarding the current position, traffic jams, traffic rules, required time, or the like. It is to be noted that pairing with a vehicle traveling ahead during traveling in a section, the vehicle which can become a leading vehicle through the communication unit such that information acquired by a data acquisition unit incorporated in the vehicle traveling ahead is acquired as pre-traveling information and is used complementarily with the data of the data acquisition unit 102 of the own vehicle, and this becomes means for assuring higher safety of a line of subsequent vehicles, especially in a case of a line traveling by a leading vehicle, followed by the subsequent vehicles, for example.

The in-vehicle apparatus 104 includes, for example, mobile equipment (a tablet, a smartphone, or the like) or a wearable device owned by a passenger, information equipment carried in or attached to the own vehicle, a navigation apparatus for performing a route search to an arbitrary destination, and so forth. It is to be noted that, if it is taken into consideration that, as a result of spread of automatic driving, an occupant is not necessarily fixed to a sitting fixed position, the in-vehicle apparatus 104 may be extensionally utilized to a video reproduction device, a game device, or an apparatus that can be removed from an installation position of the same. Although the present embodiment is described in connection with an example in which presentation of information regarding an intervention requiring point of the driver is restricted to the applicable driver, information provision may be performed further to a subsequent vehicle in a line traveling or the like or may be further utilized suitably in combination with traveling support at a remote place by normally giving information to a service operation control center for passenger transport carpool buses or long-distance logistics commercial vehicles.

The output controlling unit 105 controls outputting of various kinds of information to a passenger of the own vehicle or to the outside of the vehicle. For example, the output controlling unit 105 generates an output signal including at least one of visual information (for example, image data) and auditory information (for example, sound data) and supplies the output signal to the outputting unit 106 to control outputting of the visual information and the auditory information from the outputting unit 106. In particular, the output controlling unit 105 synthesizes image data captured by a different imaging apparatus of the data acquisition unit 102 to generate a bird's eye image, a panorama image, or the like and supplies an output signal including the generated image to the outputting unit 106. Further, the output controlling unit 105 generates sound data including, for example, warning sound, a warning message, or the like against a risk of collision, contact, entering into a danger zone, or the like and supplies an output signal including the generated sound data to the outputting unit 106.

The outputting unit 106 includes an apparatus capable of outputting visual information or auditory information to a passenger of the own vehicle or to the outside of the vehicle. For example, the outputting unit 106 includes a display apparatus, an instrument panel, an audio speaker, a headphone, a wearable device such as a glasses type display to be worn by a passenger, a projector, a lamp, and so forth. The display apparatus provided in the outputting unit 106 may be not only an apparatus having an ordinary display, but also an apparatus for displaying visual information in the visual field of the driver such as, for example, a head-up display, a transmission type display or an apparatus having an AR (Augmented Reality) display function.

The drive-train system controlling unit 107 generates various control signals and supplies them to the drive-train system 108 to perform control of the drive-train system 108. Further, the drive-train system controlling unit 107 supplies control signals to the components other than the drive-train system 108 to perform notification of a control state of the drive-train system 108 and so forth as occasion demands.

The drive-train system 108 includes various apparatuses relating to the drive system of the own vehicle. For example, the drive-train system 108 includes a driving force generation apparatus for generating driving force such as an internal combustion engine or a drive motor, a driving force transmission mechanism for transmitting the driving force to the axles, a steering mechanism for adjusting the steering angle, a brake system for generating braking force, an ABS (Antilock Brake System), an ESC (Electronic Stability Control), an electric power steering apparatus, and so forth.

The body controlling unit 109 generates various control signals and supplies them to the body system 110 to perform control of the body system 110. Further, the body controlling unit 109 supplies control signals to the components other than the body system 110 to perform notification of a control state of the body system 110, and so forth as occasion demands.

The body system 110 includes various apparatuses of the body system equipped on the vehicle body. For example, the body system 110 includes a keyless entry system, a smart key system, a power window apparatus, power seats, a steering wheel, an air conditioning apparatus, various lamps (for example, a headlamp, a back lamp, a brake lamp, a turn signal, a fog lamp, and so forth), and so forth.

The storage unit 111 includes magnetic storage devices such as, for example, a ROM (Read Only Memory), a RAM (Random Access Memory), and an HDD (Hard Disc Drive), a semiconductor storage device, an optical storage device, a magneto-optical storage device, and so forth. The storage unit 111 stores various programs, data, and so forth to be used by the components of the vehicle controlling system 100. For example, the storage unit 111 stores map data of a three-dimensional high precision map such as a dynamic map, a global map that is lower in accuracy than the high precision map but covers a wider area, a local map including information around the own vehicle and so forth.

The automatic driving controlling unit 112 performs control relating to automatic driving such as autonomous traveling, driving assistance and so forth. In particular, for example, the automatic driving controlling unit 112 performs cooperative control for an aim of implementation of the ADAS (Advanced Driver Assistance System) functions including collision avoidance or impact mitigation of the own vehicle, follow traveling based on the inter-vehicle distance, vehicle speed maintaining traveling, collision warning of the own vehicle, lane departure traveling, and so forth. Also, for example, the automatic driving controlling unit 112 performs cooperative control for an aim of automatic traveling of autonomously driving without depending on operation of the driver, and so forth. The automatic driving controlling unit 112 includes a detection unit 131, a self-position estimation unit 132, a situation analysis unit 133, a planning unit 134, and a motion controlling unit 135.

The detection unit 131 performs detection of various types of information necessary for control of automatic driving. The detection unit 131 includes an outside-vehicle information detection unit 141, an in-vehicle information detection unit 142, and a vehicle state detection unit 143.

The outside-vehicle information detection unit 141 performs a detection process of information regarding the outside of the own vehicle on the basis of data or signals from the components of the vehicle controlling system 100. For example, the outside-vehicle information detection unit 141 performs a detection process, a recognition process, and a tracking process of an object around the own vehicle, and a detection process of the distance to the object and relative speed. The objects that become a detection target include, for example, a vehicle, a person, an obstacle, a structure, a road, a traffic light, a traffic sign, a road sign, and so forth.

Further, the outside-vehicle information detection unit 141 performs, for example, a detection process of an environment around the own vehicle. Surrounding environments that become a detection target include, for example, the weather, air temperature, humidity, brightness, a state of the road, and so forth. The outside-vehicle information detection unit 141 supplies data indicative of a result of the detection process to the self-position estimation unit 132, a map analysis unit 151, a traffic rule recognition unit 152 and a situation recognition unit 153 of the situation analysis unit 133, an emergency avoidance unit 171 of the motion controlling unit 135, and so forth.

As the information to be acquired by the outside-vehicle information detection unit 141, information principally by the infrastructure can be received if the traveling section is a section in which the local dynamic map that is normally updated mainly as a section in which traveling by automatic driving is possible is supplied by the infrastructure, or the own vehicle may travel normally receiving update of the map from a vehicle or a vehicle group traveling in the corresponding section preceding to the own vehicle in advance before the own vehicle advances into a section. Further, in such a case that update with the latest local dynamic map from the infrastructure is not performed normally or in a like case, road environment information obtained from a leading vehicle which has already entered the section may be further utilized complementarily in order to obtain road information immediately before entering the section more safely especially by a line traveling or the like. Whether automatic driving is possible in the section depends upon whether or not advance information provided from the infrastructure is available. Provision of automatic driving traveling availability information on a route provided from the infrastructure is equivalent to provision of a so-called invisible track as "information." It is to be noted that, although the outside-vehicle information detection unit 141 is depicted presupposing that it is incorporated in the own vehicle for the convenience of illustration, the predictability upon traveling may be further increased by utilizing information grasped as "information" by a preceding vehicle.

The in-vehicle information detection unit 142 performs a detection process of in-vehicle information on the basis of data or signals from the components of the vehicle controlling system 100. For example, the in-vehicle information detection unit 142 performs an authentication process and a recognition process of the driver, a detection process of a state of the driver, a detection process of a passenger, a detection process of an environment in the inside of the vehicle and so forth. The states of the driver that become a detection target include, for example, a physical condition, awakening, concentration, fatigue, a line-of-sight direction, and so forth.

Further, utilization of automatic driving in which the driver is withdrawn fully from a driving steering work is supposed in the future, and it becomes necessary for the system to grasp that the driver has had a temporary doze or has started some other work and how far the consciousness necessary for return to driving has returned. In short, although a driver monitoring system investigated heretofore has been directed principally to detection means for detecting lower consciousness such as sleepiness, since a state in which the driver does not at all intervene with driving steering is applicable in the future, the system becomes free from the means for observing the driving intervention degree of the driver, and it is necessary to observe the consciousness return transition necessary for driving from a state in which an accurate state of consciousness of the driver is unknown and, after accurate internal awakening of the driver is grasped, to proceed with transfer of intervention from automatic driving to manual driving.

Therefore, the in-vehicle information detection unit 142 has mainly two major roles, the first one of which is passive monitoring of the state of the driver during automatic driving and the second one of which is, after a request for return is issued from the system, to detect whether the ability of the driver such as peripheral recognition, perception, and determination as well as an operational capability of the steering equipment reaches a level at which manual driving is possible until a section for driving with caution is reached. As the control, failure self-diagnosis of the entire vehicle may be further performed such that, also in a case where degradation of the automatic driving function occurs due to some functional failure for automatic driving, early return to manual driving by the driver is encouraged similarly. The passive monitoring here signifies detection means of the type that does not require a conscious response reaction of the driver and does not exclude an article that originates a physical radio wave, light or the like from an apparatus and detects a response signal. In short, the passive monitoring signifies monitoring under consciousness, for example, during a nap, and a classification that is not a conscious response reaction of a driver is determined as a passive type. In contrast, a thing that requests for a conscious response that requests a driver for a response reaction is determined to be active.

The environment in the inside of the vehicle that is a detection target includes, for example, the temperature, humidity, brightness, smell, and so forth. The in-vehicle information detection unit 142 supplies data indicative of a result of the detection process to the situation recognition unit 153 of the situation analysis unit 133 and to the motion controlling unit 135. It is to be noted that, in a case where it is found that, after a driving return instruction to the driver by the system is issued, the driver cannot achieve manual driving in precise deadline time and, even if deceleration control is performed while self-driving is maintained to perform time-giving, it is determined that takeover cannot be performed in time, the in-vehicle information detection unit 142 issues an instruction to the emergency avoidance unit 171 or the like of the system to start a deceleration, escape and stopping procedure in order to escape the vehicle. In short, even in the same situation in which a takeover is not performed in time as an initial state, by starting deceleration of the vehicle at an early stage, an arriving time period in which the vehicle arrives at a takeover limit can be created.

The vehicle state detection unit 143 performs a detection process of a state of the own vehicle on the basis of data or signals from the components of the vehicle controlling system 100. The states of the own vehicle that become a detection target include, for example, a speed, an acceleration, a steering angle, presence or absence and the details of abnormality, a state of a driving operation, a position and an inclination of the power seat, a locked state of a door, states of other in-vehicle apparatuses, and so forth. The vehicle state detection unit 143 supplies data indicative of a result of the detection process to the situation recognition unit 153 of the situation analysis unit 133, emergency avoidance unit 171 of the motion controlling unit 135, and so forth.

The self-position estimation unit 132 performs an estimation process of the position, posture, and so forth of the own vehicle on the basis of data or signals from the components of the vehicle controlling system 100, such as the outside-vehicle information detection unit 141, and the situation recognition unit 153 of the situation analysis unit 133. Further, the self-position estimation unit 132 generates a local map for use for estimation of the position of the own vehicle (hereinafter referred to as an own position estimation map) if necessary.

The own position estimation map is a high accuracy map using, for example, a technology of SLAM (Simulated Localization and Mapping). The self-position estimation unit 132 supplies data indicative of a result of the estimation process to the map analysis unit 151, the traffic rule recognition unit 152, the situation recognition unit 153, and so forth of the situation analysis unit 133. Further, the self-position estimation unit 132 stores the own position estimation map into the storage unit 111.

The situation analysis unit 133 performs an analysis process of the own vehicle and a surrounding situation. The situation analysis unit 133 includes the map analysis unit 151, the traffic rule recognition unit 152, the situation recognition unit 153, a situation prediction unit 154 and a learning unit 155.

The map analysis unit 151 performs an analysis process of various maps stored in the storage unit 111 while using data or signals from the components of the vehicle controlling system 100, such as the self-position estimation unit 132 and the outside-vehicle information detection unit 141 as occasion demands to construct a map including information necessary for processing of automatic driving. The map analysis unit 151 supplies the constructed map to the traffic rule recognition unit 152, the situation recognition unit 153, the situation prediction unit 154 and a route planning unit 161, an action planning unit 162 and a motion planning unit 163 of the planning unit 134.

The traffic rule recognition unit 152 performs a recognition process of traffic rules around the own vehicle on the basis of data or signals from the components of the vehicle controlling system 100, such as the self-position estimation unit 132, the outside-vehicle information detection unit 141, and the map analysis unit 151. By this recognition process, for example, the position and the state of a traffic light around the own vehicle, the details of a traffic regulation around the own vehicle, available lanes, and so forth are recognized. The traffic rule recognition unit 152 supplies data indicative of a result of the recognition process to the situation prediction unit 154 and so forth.

The situation recognition unit 153 performs a recognition process of a situation relating to the own vehicle on the basis of data or signals from the components of the vehicle controlling system 100, such as the self-position estimation unit 132, the outside-vehicle information detection unit 141, the in-vehicle information detection unit 142, and the vehicle state detection unit 143, and the map analysis unit 151. For example, the situation recognition unit 153 performs a recognition process of the situation of the own vehicle, situation around the own vehicle, situation of the driver of the own vehicle, and so forth. Further, the situation recognition unit 153 generates a local map to be used for recognition of the situation around the own vehicle (hereinafter referred to as a map for situation recognition) if necessary. The map for situation recognition is set as, for example, an occupancy grid map (Occupancy Grid Map).

The situations of the own vehicle that become a recognition target include, for example, conditions unique to the vehicle such as the position, posture and movement (for example, the speed, acceleration, moving direction and so forth) of the own vehicle, and the movement of the center of gravity of the vehicle body in association with a loaded cargo quantity that determines the motion characteristics of the own vehicle and loading of the cargo, a tire pressure, braking distance movement in association with brake braking pad wear situation, permissible maximum deceleration braking for prevention of movement of the cargo caused by braking due to loaded cargo, and a centrifugal relaxation limit speed arising from a liquid cargo at the time of traveling on a curve, and conditions unique to the loaded cargo, and since the return start timing required for control differs depending on the properties of the vehicle itself in a quite same road environment such as a coefficient of friction of a road surface, a road curve, or a gradient, and on a loaded article, and so forth, it is necessary to perform collection of such various conditions and learn them so as to be reflected upon an optimum timing at which the control is to be performed. In order to determine a control timing depending upon the type of the vehicle or loaded cargo, it is not sufficient if the presence or absence, the details of abnormality, and so forth of the own vehicle are simply observed and monitored. In transportation industries and so forth, in order to ensure fixed safety in response to a characteristic unique to a loaded cargo, a parameter for determining addition of a grace time period for desirable return may be set as a fixed value in advance, and a method of determining all notification timing determination conditions uniformly by self-cumulative learning may not necessarily be taken.

The situations around the own vehicle that become a recognition target include, for example, the type and the position of a stationary object around the own vehicle, the type, position and movement (for example, the speed, acceleration, moving direction, and so forth) of a moving object thereabound, the configuration of the road thereabound and the state of the road surface as well as the weather, humidity, brightness, and so forth thereabound. The states of the driver that become a recognition target include, for example, the physical condition, awakening level, concentration, fatigue, movement of the line of sight, driving operations, and so forth. For safe traveling of the vehicle, the control start point at which coping is demanded differs significantly depending upon a loaded amount loaded in the unique state of the vehicle, a chassis fixed state of the loading portion, a biased state of the center of gravity, a maximum possible-deceleration acceleration value, a maximum load possible centrifugal force, and a return response delay mount in response to the state of the driver.

The situation recognition unit 153 supplies data indicative of a result of the recognition process (including, as occasion demands, the map for situation recognition) to the self-position estimation unit 132, the situation prediction unit 154, and so forth. Further, the situation recognition unit 153 stores the map for situation recognition into the storage unit 111.

The situation prediction unit 154 performs a prediction process of a situation relating to the own vehicle on the basis of data or signals from the components of the vehicle controlling system 100 such as the map analysis unit 151, the traffic rule recognition unit 152, the situation recognition unit 153, and so forth. For example, the situation prediction unit 154 performs a prediction process of a situation of the own vehicle, a situation around the own vehicle, a situation of the driver and so forth.

The situations of the own vehicle that become a prediction target include, for example, a behavior of the own vehicle, occurrence of abnormality, a mileage, and so forth. The situations around the own vehicle that become a prediction target include, for example, a behavior of a moving object around the own vehicle, a change of the state of a traffic light, a change of the environment such as the weather, and so forth. The situations of the driver that become a prediction target include, for example, a behavior, a physical condition, and so forth of the driver.

The situation prediction unit 154 supplies data indicative of a result of the prediction process to the route planning unit 161, the action planning unit 162, the motion planning unit 163, and so forth of the planning unit 134 together with data from the traffic rule recognition unit 152 and the situation recognition unit 153.

The learning unit 155 learns an optimum return timing according to a return action pattern of the driver, a vehicle property and so forth and supplies learning information to the situation recognition unit 153 and so forth. Consequently, it is possible, for example, to present to the driver an optimum timing that is required for the driver to return from automatic driving to manual driving at a prescribed fixed ratio or more and is determined statistically.

The route planning unit 161 plans a route to a destination on the basis of data or signals from the components of the vehicle controlling system 100 such as the map analysis unit 151 and the situation prediction unit 154. For example, the route planning unit 161 sets a route from the current position to a designated destination on the basis of the global map. Further, for example, the route planning unit 161 suitably changes the route on the basis of a situation such as a traffic jam, an accident, a traffic rule, or a construction, the physical condition of the driver, and so forth. The route planning unit 161 supplies data indicative of the planned route to the action planning unit 162 and so forth.

The action planning unit 162 plans an action of the own vehicle for traveling safely in a planned period of time along the route planned by the route planning unit 161 on the basis of data or signals from the components of the vehicle controlling system 100 such as the map analysis unit 151 and the situation prediction unit 154. For example, the action planning unit 162 performs planning of start, stop, a moving direction (for example, forward, backward, turn left, turn right, turnaround, or the like), a traveling lane, a traveling speed, passing, and so forth. The action planning unit 162 supplies data indicative of the planned action of the own vehicle to the motion planning unit 163 and so forth.

The motion planning unit 163 plans a motion of the own vehicle for implementing the action planned by the action planning unit 162 on the basis of data or signals from the components of the vehicle controlling system 100 such as the map analysis unit 151 and the situation prediction unit 154. For example, the motion planning unit 163 performs planning of acceleration, deceleration, a traveling track, and so forth. The motion planning unit 163 supplies data indicative of the planned motion of the own vehicle to an acceleration/deceleration controlling unit 172, a direction controlling unit 173, and so forth of the motion controlling unit 135.

The motion controlling unit 135 performs control of motion of the own vehicle. The motion controlling unit 135 includes an emergency avoidance unit 171, an acceleration/deceleration controlling unit 172, and a direction controlling unit 173.

The emergency avoidance unit 171 performs a detection process of an emergency such as collision, contact, entering of a danger zone, abnormality of the driver or abnormality of the vehicle on the basis of results of detection of the outside-vehicle information detection unit 141, the in-vehicle information detection unit 142, and the vehicle state detection unit 143. In a case where the emergency avoidance unit 171 detects occurrence of an emergency, it plans a motion of the own vehicle for avoiding the emergency such as sudden stop, sharp turn, or the like. The emergency avoidance unit 171 supplies data indicative of the planed motion of the own vehicle to the acceleration/deceleration controlling unit 172, the direction controlling unit 173, and so forth.

The acceleration/deceleration controlling unit 172 performs acceleration/deceleration control for implementing the motion of the own vehicle planned by the motion planning unit 163 or the emergency avoidance unit 171. The acceleration/deceleration controlling unit 172 calculates a control target value of the driving force generation apparatus or the brake system for implementing the planned acceleration, deceleration or sudden stop and supplies a control instruction indicative of the calculated control target value to the drive-train system controlling unit 107. It is to be noted that an emergency possibly occurs principally in two cases. In particular, the two cases include a case in which an unexpected accident occurs due to a sudden reason during automatic driving on a road that is originally determined to be safe in a local dynamic map or the like acquired from the infrastructure in the traveling route during automatic driving and emergency return is not performed in time and another case in which the driver cannot return precisely from automatic driving to manual driving.

The direction controlling unit 173 performs direction control for implementing the motion of the own vehicle planned by the motion planning unit 163 or the emergency avoidance unit 171. For example, the direction controlling unit 173 calculates a control target value of the steering mechanism for implementing a traveling track or sharp turnaround planned by the motion planning unit 163 or the emergency avoidance unit 171 and supplies a control instruction indicative of the calculated control target value to the drive-train system controlling unit 107.

(Manual takeover sequence of automatic driving)

FIG. 4 schematically depicts an example of a manual takeover sequence of automatic driving by the automatic driving controlling unit 112. At step S1, the driver is possibly in a state fully withdrawn from driving steering in the future. In this state, the driver can, for example, take a nap, watch a video, focus on a game, or execute a secondary task such as a work using a visual tool such as a tablet or a smartphone. Also, it can be considered that the work in which a visual tool such as a tablet or a smartphone is used is performed, for example, in a state in which the driver's seat is displaced or on a seat different from the driver's seat.

Depending on the states of the driver, it is supposed that, when the own vehicle approaches a section in which manual driving return is demanded on the route, the period of time until the driver returns varies significantly depending upon the contents of the current work each time, and in a case where the period of time is insufficient with a notification immediately before the approach of the event or the notification is issued exceedingly early with extra time taken to the approach of the event, such a situation occurs that the time till a timing at which return is actually required is excessively long. As a result, if such a situation that a notification is not issued at a precise timing occurs repeatedly, the driver will lose the reliability on the timing in regard to the notification timing of the system, and the consciousness of the driver in regard to the notification degrades and the driver will neglect precise measures. This results in increase of the risk that takeover is not performed well and makes an inhibiting factor of relieved secondary task execution. Therefore, in order for the driver to start measures for precise driving return to the notification, it is necessary for the system to perform optimization of the notification timing.

At step S2, the timing for return notification comes and a notification for driving return is issued by dynamic haptics such as vibration, visually or auditorily to the driver. The automatic driving controlling unit 112 monitors, for example, a steady state of the driver and grasps a timing for issuing a notification, and a notification is issued at a suitable timing. In particular, during a passive monitoring period at the preceding stage, the execution state of a secondary task by the driver is normally monitored passively, and an optimum timing for the notification can be calculated by the system. The passive monitoring during the period at step S1 is normally and continuously performed, and the return timing and the return notification are desirably performed in accordance with the unique return characteristic of the driver. In particular, it is desirable to present, to the driver, an optimum timing determined statistically and required to allow the driver to return from automatic driving to manual driving correctly at a rate equal to or higher than a prescribed rate by learning an optimum return timing according to a return action timing of the driver, a vehicle characteristic, and so forth. In this case, in a case where the driver does not respond to the notification within a fixed period of time, a warning by alarming sound is issued.

At step S3, it is checked whether or not the driver returns to be seated on the driver's seat. At step S4, an internal awakening state of the driver is checked by a saccade or the like. At step S5, the stability of an actual steering situation of the driver is monitored. Then, at step S6, takeover from automatic driving to manual driving is completed.

FIG. 5 depicts a more detailed example of the manual takeover sequence of automatic driving. At step S11, prediction of a return point is visually presented to a visual tool such as a tablet or a smartphone. However, there is no necessity to restrict the display to the visual tool, but a display mode is desirable in which the visual presentation is included in the field of view of the driver who has been withdrawn from driving during execution of a secondary task such as, for example, the center information display of the vehicle. Although details are hereinafter described, presentation of a future plan and approach information is performed, and the return point is displayed such that it approaches the own vehicle as time passes.

At step S12, the presentation contents of the future plan and the approach information are suitably changed by update of the LDM (Local Dynamic Map) or the like. Further, at step S12, the state of the driver is periodically monitored. At step S13, the return point coming in a fixed period of time from the current point is emphatically displayed to the driver by flickering display, wave display, or the like to notify the driver. The timing at which the notification is to be issued at step S13 is adjusted such that return is performed in time by executing this notification early in response to a result of the detection periodically monitored at the preceding stage, namely, in response to the depth of withdrawal of the driver from driving by nap or by a secondary task.

At step S14, if the driver does not react with the notification, an alarm for wakeup is sounded. At step S15, if the driver does not sit on the driver's seat, then, a visual or auditory notification for return is issued to the driver. At step S16, in a case where there is a return delay for sitting, an alarm for alert is sounded. At step S17, for example, a pointing signal for forward confirmation by the driver is monitored as return start.

At step S18, a sitting posture is checked. At step S19, the internal awakening level of the driver by such a perceptual reflex as saccade, fixation, or the like is decided in order to detect recovery of an internal perception state in the brain of the driver using such means, for example, as detailed analysis of a line of sight. At step S20, the driving steering authority is sequentially entrusted to the driver, and while observing a response steering situation of the actual steering reaction, the steering is entrusted, and the steering stability is monitored. It is to be noted that, in order to complete final takeover of driving steering, it is necessary for the driver to start steering with certainty under normal consciousness. At this time, when takeover is performed on a monotonous straight road, it is expected that, even if the driver performs "correct" steering control along the road consciously, even if the driver does not touch directly with the equipment, or even if the driver does not pay attention to a specific event, continuous traveling may last due to the inertia and a speed maintenance function of the vehicle, and since it is very difficult for the system to detect the subjective involvement of the driver, a pseudo state for intentionally prompting steering correction intervention with operation of the vehicle may be generated by the system.

The pseudo state that requires intervention of the driver is, for example, traveling noise injection crossing a lane, as an example. Further, even if actual dynamic noise of the vehicle is not produced, pseudo-sensory rotation of steering that is not accompanied by substantial rotation may be used. The sense of rotation that is not accompanied by actual rotation may be, for example, rotating vibration having imbalance in a vibration method and is not restricted to a specific method. This is equal to that a sense of crossing, for example, rumble strips can be applied to the driver.

Here, the active noise injection by the system reflects an awakening return level upon returning of the driver because a clear reaction is demanded to the driver. In view of this, since the reaction delay time period after the noise injection is a reaction time period of the driver after notification of intervention necessity information to the driver, this reaction delay time period becomes an index indicative of return quality. When timing prediction learning of the return delay time period by the driver is to be performed, the response time delay to the noise may be further used extendedly in return quality evaluation. Using a history in a case where a steering work for performing correct correction to noise injection for which correction is required can be detected as normal teacher data, a history in a case where a correction motion is not performed or correction in correcting noise suffers from delay or is instable due to fatigue or consciousness deterioration may be used as teacher data during an abnormal time period.

In a case where the result of the monitoring observation of the stability indicates that subjective driving return is not detected to such a degree as is anticipated to the driver, this signifies that there is a risk that the driver still is in an extended dreaming state. Therefore, if it is assumed at step S21 that normal return is impossible, it is determined that emergency takeover results in failure, and a deceleration crawl escape sequence is started.

It is to be noted that the case in which the processing does not branch to step S21 is a case in which the system determinates that the driver has taken over normally, and in this case, the function when the system after completion of takeover intervenes with driving changes to that of a function range of collision prevention safety support, and it contributes with high weight put on manual driving. Thus, function change may be performed such that the system operates within a range of emergency preventive safety of an automatic emergency braking system (AEBS) or the like within which a coping response with an accident or the like cannot be carried out in time with a determination action of the driver and preventive safety including possible return imperfect return of the driver is made up for.

Since the temporal transition required for such return changes depending upon various factors such as an age or experience, fatigue, and so forth of the driver, it is determined by a return timing according to the particular individual. In a case where the driver is requested to return from automatic driving to manual driving, at least a fixed period of time is required until the driver can return to manual driving almost with certainty. A configuration that performs optimum timing notification according to vehicle characteristics, road characteristics, and a driving return characteristic of an individual is most desirable, and since an approach situation of a takeover point is displayed in an interlocking relationship, the driver can obtain the convenience that the driver can utilize a secondary task at ease in response to a permission situation and simultaneously, since nervous and relaxed states appears alternately, cautious return of the user is implemented suitably for every necessary section, ergonomically leading to utilization. In other words, the driver is released from an unnecessary continuous cautious tension state.

If a nervous state continues for a long period of time, the nerves are tired, and this results in a risk that a person transits to a distracted state due to drowsiness in the middle. Thus, a maximum effect of the procedure described above resides in that a state in which the user can perform a secondary task is alternately switched between the nervous and relaxed states and the tension is suitably generated to keep a balance. Then, continuous long-term operation is expected while they are switched alternately.

It is to be noted that, in order to maximize the effect, even in a section in which driver intervention is not required for a long distance, in a case where tension return of the driver is desirable in the middle, such processing may be performed that a dummy driver return event is generated in the middle in a pseudo manner, a return degree to the dummy event by the driver is evaluated, return level evaluation of the driver and aptitude response evaluation of the driver are performed in response to the return request of the driver and recording storage of the return degree evaluation values and return characteristic learning are further performed. Further, since there is an aspect that, if the dummy return request is performed very frequently, this is cumbersome whereas, if it is not performed very often, the withdrawal state of the driver from driving steering becomes deep, the frequency may not be set uniquely but may be set variably depending upon a road environment or a traveling condition.

(Overview of motion of automatic driving target vehicle)

A flow chart of FIG. 6 depicts an overview of motion of an automatic driving target vehicle that includes the vehicle controlling system 100 described hereinabove. At step S31, motion is started. Then, at step S31, driver authentication is performed. This driver authentication is performed by knowledge authentication by a password, a password number, or the like or by biometric authentication by the face, a fingerprint, an eye iris, a voiceprint, or the like as described above or performed by using both of knowledge authentication and biometric authentication. Since driver authentication is performed in this manner, also in a case where a plurality of drivers drive the same vehicle, it is possible to perform accumulation of information for determining a notification timing in an associated relationship with each of the drivers.

Then, at step S32, the inputting unit 101 will be operated by the driver to set a destination. In this case, an inputting operation of the driver is performed on the basis of a display image on the instrument panel.

It is to be noted that, although an example of a case in which a user gets on the vehicle to suppose itinerary setting is described as the present embodiment, the user may perform remote advance reservation setting from a smartphone in advance before the user gets on the vehicle or from a personal computer before the user goes out of the own home. Further, the system of the vehicle may perform preplanning setting in accordance with a schedule assumed by the driver in accordance with a schedule table and may update or acquire LDM information regarding a road environment to further display actual traveling advice, for example, like a concierge upon or before getting on the vehicle.

Then, at step S33, traveling section display on the traveling route is started. This traveling section display is displayed on the instrument panel or is displayed on a tablet or the like, on which the driver performs a secondary task, in a lined up relationship with a work window. Consequently, the driver who is performing a work on the work window can easily recognize a driver intervention requiring section and an automatic driving available section of the traveling route on a reach prediction time axis from the current point.

In this traveling section display, presentation of the future plan and approach information to individual points is performed. In this traveling section display, the driver intervention requiring section and the automatic driving available section of the traveling route are displayed on the reach prediction time axis from the current point. Then, the driver intervention requiring section includes a manual driving section, a takeover section from automatic driving to manual driving, and a cautious traveling section from automatic driving. Details of the traveling section display are hereinafter described.

Then, at step S34, acquisition of LDM update information is started. Together with the acquisition of LDM update information, it becomes possible to change the contents of the traveling section display to the latest state. Then, at step S35, traveling is started. Then, at step ST36, display of the traveling section display is updated on the basis of the position information of the own vehicle and the acquired LDM update information. Consequently, the traveling section display is scroll displayed such that each section approaches the own vehicle as the vehicle travels.

Then, at step S37, monitoring of the driver state is performed. Then, at step ST38, an event change coping process is performed. This event change coping process includes a normal takeover process for coping with a case in which a takeover section or a cautious traveling section existing already in the traveling route comes near, an event occurrence process for coping with a case in which a driver intervention requiring section in a takeover section or a cautious traveling section newly appears in the traveling route, and a like process. Details of the normal takeover process and the event occurrence process are hereinafter described. Thereafter, the processes at steps S36 to S38 are repeated suitably.

(Details of traveling section display)

FIG. 7 depicts an example of a traveling route determined through setting of a destination by a driver. The traveling route includes an automatic driving available section Sa, a manual driving section Sb, a takeover section Sc from automatic driving to manual driving and a cautious traveling section Sd from automatic driving. Here, the takeover section Sc exists immediately before the manual driving section Sb without fail, and it is necessary for the driver to be in a return posture to manual driving. Further, the cautious traveling section Sd is a section in which the vehicle can travel with automatic driving maintained under careful watching of the driver who is in a return posture to manual driving or can decelerate or the like.

In the example depicted, the automatic driving available section Sa is indicated in green; the manual driving section Sb is indicated in red; and the takeover section Sc and the cautious traveling section Sd are indicated in yellow. It is to be noted that, for the convenience of illustration, the colors are represented in different patterns.

In traveling section display on a display device such as the center information display, an HUD, or a tablet, such sections of the traveling route as described above are represented on the reach prediction time axis from the current point. The automatic driving controlling unit 112 performs information processing for the traveling section display along the traveling route on the basis of the traveling route information and traffic information.

FIG. 8(a) represents individual sections of a traveling route in a fixed scale on the moving distance axis from the current point. FIG. 8(b) represents the flow speed v(t) in average road traffic at individual points. FIG. 8(c) represents the sections converted to those on the time axis using the speed v(t) from those represented on the moving distance axis. Consequently, the sections of the traveling route are presented on the reach prediction time axis from the current point. In short, a physical distance on the traveling route can be represented on a time axis by dividing the same by an average speed for each section.

In this embodiment, all sections displayed as traveling sections are divided into three sections as depicted in FIG. 8(d), and the time axis is changed among the sections. In particular, the first section from the current point to a first point (time t0, for example, approximately 10 minutes) is displayed as a time linear display nearest section on a first time axis. For example, time t0 is set to time necessary and sufficient before a general driver ends a secondary task and returns to driving. Since the nearest section approaching by traveling has a visual intuition effect equivalent to that when it is indicated on a map on which the vehicle proceeds at a fixed speed, the driver can start precise preparations for driving return arising from event approach, and there is a merit that the driver can intuitively and somewhat accurately grasp a point at which return is to be started. In short, the display purpose of the sections resides in provision of start determination information regarding a precise return point of a driver to a user.

Meanwhile, the second section from the first point (time t0) to the second point (time t1, for example, approximately one hour) is displayed as a time reciprocal display section on a time axis that sequentially changes from the first time axis to a second time axis that is reduced at a predetermined ratio from the first time axis. The display purpose of the second section is a scheme for providing a road situation for a longer period accurately to the driver with a narrow display because, when the second section is displayed in a scale factor equal to that principally in the preceding first section, it becomes difficult to display the long period in a narrow display space. By the scheme, the driver can easily grasp up to which point the driver may not be requested to intervene with the driving in a certain fixed section ahead together with traveling, and there is a merit that the driver can perform engagement in a secondary task systematically. Necessity/unnecessity of driving intervention becomes clear to the driver, and in a secondary task involved in communication with a third party or the like, a significant role of information presentation is played in release planning of the driver from the secondary task or the like.

Here, a setting method of this second display section is described with reference to FIG. 8(d). When the height of a triangle is represented by h0, time t at the point earlier by h from the top of the triangle is calculated by the following expression (1).

$$t = t0 * h0/h \quad \quad ... (1)$$

Meanwhile, the second time axis at the second point (time t1) is reduced at a ratio of hs/h0 from the first time axis. For example, in a case where hs = h0/8, the reduction ratio is 1/8.

The display in the second display section described above is, in a case where the vehicle is traveling at a fixed vehicle speed, equivalent to display where a traveling straight extension display section on the map is inclined obliquely to the moving direction or to a state in which the front of the road plane is viewed obliquely. In other words, since the visual effect of this display section is that the perspective can be understood intuitively from the display picture height position, even if graduations or the like for accurate position display are not displayed on the screen, the sensory distance can be grasped easily. Then, although a remote section is reduced, since this is not a point at which the vehicle arrives quickly by traveling, although rough prediction is important, the driver need not intuitively grasp such accurate reach time information as that at a near point. Therefore, this is preferable also when the driver schedules secondary task execution.

Further, the third section from the second point (time t1) to the third point (time t3) is displayed on the second time axis (reduction ratio hs/h0) as a time linear display remote section. By displaying the three sections divided in this manner, the driver can know details of section information nearest in time with a limited display space and can know section information more remote in time. It is to be noted that, when a remote portion is displayed with the display form for the second section maintained, this becomes lower than the human visual resolution and further becomes lower than the display resolution limit of the system. Therefore, it becomes impossible to discriminate information necessary for plan determination of a secondary task, and the significance of the display function is lost. Therefore, it is the most effective display that reduction of the display scale is ended at a stage at which a time section sense can be sufficiently grasped intuitively and classification of a necessary intervention section and an unnecessary section is displayed appropriately and, in the following sections, display with a scale returned to the fixed scale is performed.

It is to be noted that the vehicle controlling system 100 has default values for time t0, t1 and t3. Since also it is considerable that the values of time t0, t1 and t2 are made different between long distance driving and short distance driving, the default values are not limited to one set, and a plurality of sets may be provided such that the driver (user) or the system selectively uses them in response to a traveling route. Also, it is considerable to allow the driver (user) to arbitrarily set the values of time t0, t1 and t3.

FIGS. 9(a) and 9(b) each depict an example of a traveling section display image that is displayed finally. It is to be noted that, by the length of an arrow mark, whether the time axis is linear and further, a change of the reduction ratio of the time axis are depicted. In the case of FIG. 9(a), all of the sections of the first, second and third sections are displayed with a first width maintained.

On the other hand, in the case of FIG. 9(b), the first section from the current point to the first point (time t0) is displayed with a first width; the second section from the first point (time t0) to the second point (time t1) is displayed with a width sequentially changing from the first value to a second value that indicates a width narrower than the first width; and the third section from the second point (time T1) to the third point (time T2) is displayed with the second width. Consequently, the driver can visually recognize the degree of reduction of the time axis in the second and third sections with respect to the first section. In short, although the display form in FIG. 8 is a display image in which only the reduction ratio in the moving direction is taken into consideration, by further changing the transverse width with respect to the moving direction of the display information artificially in accordance with the perspective, a perspective effect same as that obtained when the driver views toward the infinite direction along the progress of a road or the map is obtained, and intuitive grasping of a distribution of driving intervention requiring sections is facilitated in comparison with that when the screen is viewed at a moment. Especially, in a case where only the second section is turned in the counterclockwise direction and viewed, since the second section is comparable with the road width of the road ahead and the arriving time at each applicable point in a case where the vehicle travels at a fixed speed, even if an accurate position graduation is not determined by observation, the arrival time to each point can be grasped intuitively, and the display form is considered to allow for time distribution.

It is to be noted that, when, at a portion at which the reduction rate hs/h0 is low, for example, like the third section, a section of a short time length is displayed with the time length as it is, the section is displayed very thin, and it is expected that recognition of the driver is difficult. Therefore, even in a case where a driver intervention section (manual driving section, takeover section, cautious traveling section) is actually equal to or shorter than a fixed time length, it is displayed with a fixed time length. In this case, for example, in a case where a takeover section and a manual driving section continue, the display of the takeover section is sometimes omitted. In FIGS. 9(a) and 9(b), the display of the first manual driving section Sb in the third section indicates such a state as just described. Consequently, in the third section whose time axis is reduced significantly, the driver intervention requiring section of a short time length can be displayed such that it can be recognized by the driver.

Further, at a portion at which the reduction rate hs/h0 is low like the third section, in a case where a manual driving section Sb intermittently appears in a short cycle, this is displayed as a manual driving section Sb the entirety of which is continuous. In FIGS. 9(a) and 9(b), the display of the second manual driving section Sb in the third section indicates such a state that it is displayed in such a continuous manner as just described. The manual driving section Sb displayed in this manner actually includes, as depicted in FIG. 9(c), a cautious traveling section Sd and an automatic driving available section Sa of a short period in addition to the manual driving section Sb. It is to be noted that, as hereinafter described, detailed display can be performed if, in a state in which traveling section display is given on a tablet or the like, the point is, for example, double-touched.

The traveling section display on the traveling route described above is successively updated on the basis of position information of the own vehicle and acquired LDM update information. Consequently, as time passes, the traveling section display is scroll displayed such that the sections successively approach the own vehicle. FIGS. 10(a) to 10(d) each depict an example of change of traveling section display together with passage of time. Although this example depicts an example in which the second section is displayed in a tapering fashion, a case in which all sections are displayed with an equal width is also similar.

In this case, in the first section, the movement in each section is high. Meanwhile, in the second section, since the reduction of the time axis decreases from the third section side toward the first section side, the movement in each section becomes fast. Further, in the third section, since the reduction of the time axis becomes great, the movement in each section is slow.

FIGS. 11(a) and 11(b) each depict an example of a traveling section display image 200 on a traveling route displayed on the screen of a tablet 300. FIG. 11(a) depicts an example in a case where the tablet 300 is used vertically. In this case, the vehicle controlling system 100 is displayed in a bent state along the left side and the upper side and is displayed in parallel to a work window that is an execution screen for a secondary task performed on the tablet 300. FIG. 11(b) depicts an example in a case where the tablet 300 is used in landscape. Also in this case, the traveling section display image 200 is displayed in a bent state along the left side and the upper side and is displayed in parallel to a work window that is an execution screen for a secondary task performed on the tablet 300. It is to be noted that, although, in the example depicted, the traveling section display image 200 is arranged in a bent state on the screen of the tablet 300, in a case where a sufficient arrangement space can be assured, also it can be considered that the traveling section display image 200 is arranged linearly.

FIG. 12 depicts a state in which a cautious traveling section Sd appears newly in the second section and this is warned to the driver by flickering display. It is to be noted that, in this case, it may be made possible to stop the flickering display, namely, the warning state, by the driver touching the display location of the cautious traveling section Sd in the flicking display state. As an alternative, it may be made possible to popup display a small window by the driver touching the display location of the cautious traveling section Sd in the flicking display state and then stop the flickering, namely, the warning state, by the screen touch of the driver for approval.

Further, when a driver intervention requiring section comes into a range of a fixed period of time from the current point in a state in which the traveling section display image 200 is displayed on the screen of the tablet 300, the driver intervention requiring section is put into an emphatically displayed state to issue a notification to the driver for calling for attention. The driver will quickly perform driving return on the basis of the notification. It is to be noted that the fixed period of time for allowing, when the timing comes on the basis of extra time necessary for driving return of the driver, a notification to be provided as a start signal to the driver is set such that it is sufficiently possible for the driver to return to driving before a driving takeover section or a cautious traveling section comes in response to the personality of the driver or in response to the current state of the driver, or further in response to loading braking characteristics of the vehicle and a situation of the road. In short, the detailed notifying point of any of such notifications as described above may be learned by a learner as a property obtained by personally authenticating a unique property such as a driver identification as a driver individual property as a driver individual property, and the notification may be performed at an optimum notification timing unique to the driver.

In an emphatically displayed state, for example, flickering display, display in a different color, illusion display by which the moving speed looks higher than an actual speed or, for example, wave display is used. This makes it possible for the driver to easily recognize that a driver intervention requiring section comes in a range of a fixed period of time from the current point. Although, from a relationship of the display range of the screen or the like, there is a case that the display scale is small in normal approach display and the approaching feeling is less likely to be grasped, to make use of the most of the dynamic eyesight effect of human eyes, the changing point of the luminance gradient quick to the approaching location can be generated on the display screen by this method. Also in a case where the driver performs a work looking at a different location of the screen on a secondary task, it is the most significant advantage of the present method that the change can be grasped in a peripheral field of view.

FIG. 13 depicts that, as a state of emphatic display, a wave display is applied to a takeover section Sc existing immediately before a manual driving section Sb. FIG. 14 depicts an example of a display image in which wave display is performed. In this display example, by changing the section length of the takeover section Sc for each $\Delta t$, operations for displaying faster than the progress speed and pulling back the display image are repeated. Meanwhile, FIG. 15 depicts another example of a display image in which wave display is performed. In this display example, by changing the inter-section position of the takeover section Sc for each $\Delta t$, operations for displaying faster than the moving speed and pulling back are repeated.

(Relationship between type of secondary task and return delay time period for determining notification timing)

Here, a relationship between a type of secondary task and a return delay time period $\Delta T$ for determining a notification timing is described. As the type of secondary task, (a) that the driver is asleep in a nap space, (b) that the driver is in an awakening state away from the seat, (c) that the driver is in a non-regular driving posture with the driver's seat rotated, (d) that the driver is in a terminal using state with a normal driving posture maintained, and so forth are available.

For example, in a case where the driver is in such a secondary task state that the driver "is asleep in a nap space," as a factor of the return delay time period, as depicted in FIG. 16(a), a delay time period Ta until the driver awakens from a nap, a delay time period Tb after the driver awakens until the driver stands up, a delay time period Tc after the driver stands up until the driver moves to and sits on the driver's seat, a delay time period Td after the driver sits on the driver's seat until the driver assumes a normal driving posture, and a delay time period Te after the driver assumes a normal driving posture until it is checked that the body function becomes ready for steering are available. Therefore, the return delay time period $\Delta T$ in this case includes these factors mentioned. The block depicted in FIG. 16 becomes a return grace time period budget permitted till manual driving return, and the point at the right end is a point at which return from automatic driving to manual driving is completed. In a case where intermediate control processing such as deceleration of the vehicle is not performed, the traveling speed is fixed on the time axis, and by reducing the traveling speed, it is also possible to postpone the arrival of the vehicle at the point on the time axis.

Further, in a case where the driver is in the secondary task that the driver "is an awakening state away from the seat," as the factor of the return delay time period, as depicted in FIG. 16(b), the delay time period Tc after the driver moves to and sits on the driver's seat, delay time period Td after the driver sits on the driver's seat until the driver assumes a normal driving posture, and delay time period Te after the driver assumes a normal driving posture until it is checked that the body function becomes ready for steering exist. Therefore, the return delay time period $\Delta T$ in this case includes these factors mentioned.

Further, in a case where the driver is in the secondary task that the driver "is in a non-regular driving posture with the driver's seat rotated," as the factor of the return delay time period, as depicted in FIG. 16(c), the delay time period Td after the driver changes its posture from a non-normal driving posture to a normal driving posture and the delay time period Te after the driver assumes the normal driving posture until it is checked that the body function becomes ready for steering exist. Therefore, the return delay time period ΔT in this case includes these factors mentioned.

Further, in a case where the driver is in the secondary task that the driver "is in a terminal using state with the normal driving posture maintained, as the factor of the return delay time period, as depicted in FIG. 16(d), the delay time period Te until it is checked that the body function becomes ready for steering exists. Therefore, the return delay time period ΔT in this case includes this factor mentioned. It is to be noted that, in FIGS. 16(a) to 16(d), "Tr" denotes a period of time for situation recognition determination. The delay time period of each activity in the process of return does not include the period of time for situation recognition determination because the driver is on the way of a return work as the consciousness of the driver. In other words, the period of time for situation recognition determination is included only in the delay time period of a first activity for return.

From the foregoing, the return delay time period ΔT is generally represented by the expression (2) given below. In the expression (2), the coefficients a to f have values "1" or "0" according to a type of secondary task being performed by the driver. Meanwhile, ΔTmin(VDP: Vehicle Dynamic Propreties) is a time term provided taking the self-security guarantee into consideration on the basis of a vehicle dynamic characteristic of the vehicle for control. Since this time term makes it possible, in regard to a heavy load vehicle such as, for example, a tank truck, to decelerate and crawl to escape and stop safely even in a case where driving return of the driver should not be performed in time, it can be considered a correction coefficient necessary for safety maintenance determined in accordance with a characteristic of the vehicle.

Although it is described that the time term is a unique fixed constant based on a dynamic characteristic of the vehicle in order to simplify the description, it may be dealt as a multi-dimensional function that is influenced by a road condition, a weather condition, and so forth such that adjustment utilization may be also performed on the basis of information provided from the LMD or the like for each traveling section. If this value is considered a way of securing the distance between vehicles by the driver in manual driving today, this is a usage form similar to that of traveling, in the case of a rainy weather or a slippery road, with a sufficient distance left between vehicles. However, in setting upon automatic driving, the value is not necessarily a period of time for safe distance security of securing the same braking distance in that the value becomes a setting of a grace time taking the safety upon incomplete takeover into account.

$$\Delta T = a*Ta + b*Tb + c*Tc + d*Td + e*Te +$$
$$f*\Delta Tmin(VDP) \quad \ldots \quad (2)$$

In this embodiment, although details are hereinafter described, the return delay time period ΔT is calculated on the basis of the state of the driver and is used. In the case where there exists an event that approaches in a time period t (a takeover section from automatic driving to manual driving or a cautious traveling section from automatic driving) exists, the timing for approach notification (warning) in regard to the event is time (t - ΔT) later. However, in the case of occurrence of a new event, since approach of a takeover point occurs while the driver does not recognize the new event, it is necessary to complete the notification of the new event approach and recognition of the notification. Therefore, at a point of time at which the event occurrence is determined once, notification is performed, and besides, the notification is performed repeatedly until the recognition is determined by the driver. The issuance of the advance notification may be same as the takeover notification or may be a notification that can be recognized.

(Normal takeover process)

A flow chart of FIG. 17 indicates an example of a procedure of a normal takeover process. At step S41, processing is started. Then, at step S42, a driver return request is observed. In this case, in a case where a takeover target event (a takeover section from automatic driving to manual driving or a cautious traveling section from automatic driving) approaches in a predetermined period of time, for example, when a takeover target event enters a first section from the current point to a first point (time t0, for example, approximately ten minutes) within a traveling section display image 200 on a traveling route displayed on the screen of a tablet 300, the takeover target event is observed as a driver return request.

Then, at step S43, acquisition of an observable evaluation value is performed. This observable evaluation value is obtained on the basis of biological activity observable information of the driver obtained by a predetermined detector of the data acquisition unit 102. As described above, as detectors for obtaining biological activity observable information, a face recognizer that mainly performs observation of consciousness deterioration and so forth in a state just before return after sitting, a driver eye tracker, a driver head tracker, and so forth are provided, and further, a biological signal detector is provided. Signals of a heart rate, a pulse rate, blood flow, breathing, brain waves, and a sweating state are good at long-term detection of state observation and are good at steady state monitoring of, for example, a sleeping state, a REM sleeping time period, a relax state, a fatigue state, and so forth. On the other hand, since a biological state detection method that uses a biological signal relating to a visual stimulus response, a head posture behavior and an eyeball behavior such as the eyes, fixation, winking, saccade, micro saccade, fixation, drift, gaze, and pupil reaction of an iris can observe a reaction directly connected to recognition activities in the brain, it is effective to reflect, by the awakening return procedure, an activity amount of a thinking loop in the brain on driving and use the same in final determination of a return procedure. However, the procedure just described may not always be adjusted to the exemplified procedure, and an optimum method may also utilize compositely in response to each return stage and a state. For example, if the driver sits on the seat through position detection, the sitting state is detected, and if a face direction when the driver views the front can be recognized, a behavior of the line of sight is analyzed. Further, if the driver views the front, a brain inside awakening state is further estimated from fixation of a detailed eyeball behavior or a dynamic behavior characteristic of drift or saccade.

Then, at step S44, a return delay time period is calculated on the basis of the acquired observable evaluation value. Here, in the storage unit 111, a plurality of pieces of relationship information between the observable evaluation value and return delay time periods in the past are stored for each driver and each type of secondary task, and the calculation is performed utilizing the relationship information. In this case, the relationship information regarding the currently driving driver (who has been already authenticated as a driver) and regarding a type of secondary task that is currently being executed is utilized.

FIG. 18(a) depicts an example of a distribution of a plurality of pieces of relationship information (observation plots) between the observable evaluation value and the return delay time period acquired in the past and stored in the storage unit 111. This example corresponds to a type of a certain secondary task of a certain driver. In order to calculate a return delay time period from the plurality of pieces of relationship information (observation plots), relationship information (observation plots) within a region (indicated by a broken line rectangular frame) having a fixed width in an evaluation value direction corresponding to the acquired observable evaluation value is extracted. A dotted line c in FIG. 18(a) represents a boundary line when a return delay time period with regard to which a return success rate of FIG. 18(b) hereinafter described is 0.95 is observed with observable evaluation values of different drivers. By issuing a return notification or warning from automatic driving to manual driving to the driver with a grace time period longer than that of a dotted line, in other words, with an early grace time period, in the region, it is guaranteed that return from automatic driving to manual driving of the driver will be successful at a ratio of 0.95 or more. It is to be noted that a target value (Request for Recovery Ratio) when the driver normally returns from automatic driving to manual driving is determined from the necessity of the infrastructure, for example, by the road side and is provided to an individual section passing vehicle.

FIG. 18(b) depicts a relationship between a return delay time period and a return success rate obtained from a plurality of extracted pieces of relationship information (observation plots). Here, the curve a indicates a single success rate in each return delay time period, and the curve b indicates a cumulative success rate in each different return delay time period. In this case, return delay time period t1 is calculated on the basis of the curve b such that the success rate becomes a predetermined ratio, in the example depicted, the success rate becomes 0.95. This calculation is performed by the learning unit 155 on the basis of a distribution of a plurality of pieces of relationship information (observation slots) between the observable evaluation value and the return delay time period acquired in the past and stored in the storage unit 111. Also in this case, the learning unit 155 can set a predetermined ratio to a register. This setting is performed, for example, on the basis of an operation of a user (driver or the like). It is to be noted that the success rate of the predetermined ratio may be acquired otherwise as information retained by the infrastructure side by performing road-vehicle communication with the outside of the vehicle.

FIG. 19 depicts a difference in return time period distribution according to a withdrawal state from a driving steering work. Individual distribution profiles correspond to the curve a predicted in observable driver states depicted in FIG. 18(b). In particular, in order to complete takeover from automatic driving to manual driving at a takeover point with a necessary return probability, it is continuously monitored until takeover is completed whether a state necessary to return actually is reached at each return stage on the basis of time t1 at which the profile (return success rate profile of FIG. 18(b)) becomes a desired value by referring to a characteristic in the past required for the driver to return from observable evaluation values obtained by evaluating the awakening degree of the driver detected at each stage.

An initial curve in a case where the driver is taking a nap is a cumulative average distribution when the sleep level is estimated from observation information regarding breathing, brain waves and so forth passive-monitored during a nap period in automatic driving and a return delay characteristic of the driver is checked after issuance of an awakening alarm. Intermediate distributions are successively determined in response to a driver state observed during a movement return procedure after the driver awakens. "6. in case of nap" is observed to determine a right timing at which an awakening alarm is in time, and the intermediate process after this becomes a return time period distribution in a return budget predicted from observable driver state evaluation values at prediction intermediate points.

It is continuously observed on the way that a remaining takeover limit time limit sequentially decreasing till takeover is not violated, and in a case where there is a violation risk, the vehicle is decelerated, and time grace generation or the like is performed. For example, in the case of a distribution upon return that starts from "4. non-driving posture irregular rotation sitting" while the steps of "6. in case of nap" and "5. sitting" do not exist, the return process is started from the first situation recognition grasp. Therefore, even with the same item, even if the state "4. non-driving posture irregular rotation sitting" posture as the progress on the way started from "6. in case of nap" becomes same, the thinking process is in a return consciousness process, and in the case of starting from situation recognition in the "4. non-driving posture irregular rotation sitting" posture from the beginning, a period of time for situation recognition is required, a longer period of time is required. This situation is schematically depicted by time Tr in a slanting line region of FIG. 16.

It is to be noted that the relationship information between the observable evaluation value and the return delay time period of a driver who is currently driving is sometimes not accumulated sufficiently in the storage unit 111. In this case, calculation of the return delay time period t1 can be performed, for example, using return characteristic information created on the basis of information collected from a driver population of the same age as supposed distribution information regarding return prepared in advance. Since this return information has a driver unique characteristic having not been learned sufficiently, it may be utilized with the same return probability, or a higher return success rate may be set. It is to be noted that, since ergonomically an unfamiliar user is more careful, early return is anticipated at an initial stage of utilization, and as the user becomes familiar to utilization, the driver is adapted to an action conforming to a notification of the system. It is to be noted that, in a case where a different vehicle is utilized in the logistics industry in which a large number of vehicles are used, in the service business of buses, taxis, and so forth or among sharing cars or rented automobiles, a remote learning process or retention may be applied such that personal authentication of a driver is performed and observable information and a return characteristic of driving is managed or learning in a concentrated or decentralized manner through a remote server or the like while data of a return characteristic is not necessarily retained in an individual vehicle.

Referring back to FIG. 17, at step S45, at a notification timing determined from the return delay time period calculated at step S44, in other words, at a timing at which the takeover target event (a takeover section from automatic driving to manual driving or a cautious traveling section from automatic driving) approaches the return delay time period), notification for encouraging the driver to return to driving is executed. Although this notification is performed by a sound output, a light output, haptics, or the like, a notification method according a type of secondary task of a driver is adopted. For example, in a case where the driver is taking a nap, a notification method for awakening the driver from a sleeping state is selected.

Then, at step S46, a return transition of the driver is monitored. Then, at step S47, it is determined whether or not driving return within the return delay time period is possible on the basis of a result of the monitoring at step S46. If it is determined that driving return is possible, driving return of the driver is performed at step S48. Thereafter, at step S49, update of the learning data is performed. In particular, one sample value of the relationship information (observation plot) between the observable evaluation value and the actual return delay time period is added in regard to the type of secondary task performed by the driver at the initial stage when the driving return described is performed. Thereafter, at step S50, the processing is ended. It is to be noted that, although learning is described restrictively in regard to the plot data generated every time of an event in the description of the present embodiment, since actually it relies much upon a state (history) till occurrence of the event as hereinafter described in a modification, multi-dimensional learning may be performed to further improve the estimation accuracy of the return delay required time period from a driver state observation value.

In addition, when it is determined at step S47 that the driving return is impossible, a deceleration crawl escape sequence from start thereof to stop of the vehicle is executed at step S51. Then, at step S52, a record of a penalty for an incorrect takeover event is issued, and then, the processing is ended at step S50. It is to be noted that the record of the penalty is left in the storage unit 111.

It is to be noted that, although steps S43 to S50 describe the overall takeover procedure collectively, as described with reference to FIG. 16, the takeover procedure may be performed such that the return transition is performed across stages of multi stages in response to the state of the driver in practical use, the return transition is sequentially monitored in the middle, and a return delay penalty may be issued also for a delay at an intermediate stage. Further, in a case where a delay occurs with the prediction return transition, reduction of the speed may be performed for arrival time grace pre-formation to a takeover point in response to deceleration or crawl from a local dynamic map or an emergent stop acceptable rate, or reminder notification for encouraging early return of the driver may be performed. Moreover, penalty issuance advance warning or penalty issuance may be further performed. Since the advance notification plays a function of suppressing a human error induced when unreasonable early return is attempted by the driver, a function superior to simple penalty issuance can be expected.

(Event occurrence process)

A flow chart of FIG. 20 depicts an example of a procedure of an event occurrence process. At step S61, processing is started. Then, at step S62, predicted arriving time at an event occurrence point is calculated, and a return delay time period until the driver returns to driving is calculated similarly as at step S44 in the flow chart of FIG. 17 described hereinabove. In the case of normal takeover, since the driver return point approaches sequentially on the basis of prediction, observable value monitoring of the driver state is performed periodically. However, since emergency is required upon occurrence of an event, if detection of an event is performed, quick update acquisition of driver observable information is performed, and return time period calculation required from automatic driving to manual driving of the driver estimated from the observable value is executed preferentially.

Then, at step S63, it is determined whether or not there is a fixed extra time for the driver to return to driving, for example, whether or not there is extra time of two to three minutes. If it is determined that there is a fixed extra time, it is determined at step S64 whether or not there is extra time for the driver to return to driving. In this case, when the predicted arriving time period at the event occurrence point is longer than the return delay time period, it is determined that there is extra time to return to driving.

When it is determined that there is extra time to return to driving, a notification of event occurrence is issued to the driver at step S65. For example, the notification is performed by a sound output, a light output, haptics, or the like. For example, event occurrence is displayed flickering at a position corresponding to the traveling section display image 200 of the tablet 300 described hereinabove (see FIG. 12).

Then, at step S66, it is determined whether or not the event occurrence is checked by the driver. For example, in a case where the event occurrence location displayed flickering at the corresponding position of the traveling section display image 200 is double touched by the driver, it is decided that the event occurrence is checked by the driver. When it is determined that the event occurrence is checked by the driver, at step S67, notification for prompting the driver to return to driving is executed at a notification timing that is determined by the return delay time period calculated at step S62, namely, at a timing at which the takeover target event (a takeover section from automatic driving to manual driving or a cautious traveling section from automatic driving) approaches the return delay time period. Although this notification is performed by a sound output, a light output, haptics, or the like, it is possible to adopt a notification method according to a type of secondary task of a driver.

Then, at step S68, it is determined whether or not the driver has returned within the return delay time period. In a case where it is determined that the driver has returned within the return delay time period, update of the traveling section display image 200 is performed at step S69, and the processing is ended at step S70. Conversely, in a case where it is determined that the event occurrence has not been checked by the driver, warning is executed in a case where the vehicle approaches the event occurrence point earlier than a predetermined set period at step S71 for notifying the driver of the event occurrence thereby to prompt the driver to check the event occurrence. Thereafter, the processing returns to step S64.

Conversely, when it is determined at step S63 that there is no fixed extra time, when it is determined at step S64 that there is no extra time to the driving return, or when it is determined at step S68 that the driver does not return within the return delay time period, an emergency coping sequence is executed at step S72.

A flow chart of FIG. 21 depicts an example of a procedure of the emergency coping sequence. At step S81, processing is started. Then, at step S82, it is determined whether or not there is manual driving takeover possibility. When it is determined that there is no manual driving takeover possibility, deceleration is performed to give extra time for arriving time at the event occurrence point at step S83. Then, at step S84, it is determined whether or not there is return possibility of the driver. In this case, when the arriving time at the event occurrence point for which extra time has been given by deceleration is longer than the return delay time period calculated at step S62, it is decided that there is return possibility.

When it is determined that there is no return possibility of the driver, it is determined at step S85 whether or not the event is not an event that passage of the point is possible by deceleration crawl. When it is determined that the event is an event that passage of the point is not possible, an automatic deceleration and crawl escape sequence is performed from start of the sequence to stop of the vehicle at step S86. Then, at step S87, a record of a penalty for the incomplete takeover event is issued. Then, at step S88, the sequence is ended. It is to be noted that the record of the penalty is left in the storage unit 111.

Here, in a case where takeover cannot be performed, it may seem at a glance that even control of stopping a vehicle may be used uniformly as coping means with an emergent event. However, depending upon a situation of the road infrastructure, the control has a very significant social influence in the following manner. In particular, if a vehicle stops on a road or a primary escape place, a traffic jam of the road infrastructure is induced, or an accident is induced through formation of a blind spot by a stopping vehicle at a curved point of a road. Further, if the road is a road infrastructure artery road of a single lane where it is difficult to detour, a complete cutoff of people and logistics is socially caused. In order to reduce or avoid the influence, control based on the road infrastructures is essentially required, and basically, for a section that may possibly become a bottle neck even if the driver decelerates the vehicle, it is desirable to pass through such section as a selection branch.

Further, especially a section entry boundary for which update especially for the LMD is insufficient arising from the infrastructure or a switching point from automatic driving to manual driving fixed in terms of the infrastructure equipment is a point at which all passing vehicles that utilize automatic driving are constantly switched. Thus, since the possibility that many vehicles may emergently stop due to incomplete takeover is stochastically high, in order to moderate acceleration of bottleneck induction by overconcentration of vehicles that stop for emergency escape, notification timings may be also dispersed to earlier points of time such that stopping positions may disperse, or takeover point notification determined by a random number generator or the like may be performed.

Conversely, when it is determined at step S85 that the event is an event in which passage of the point is possible by deceleration crawl, passage of the point is executed by automatic deceleration and crawl at step S89. Thereafter, at step ST87, a record of a penalty for the incomplete takeover event is issued, and the sequence is ended at step S88.

Conversely, when it is determined at step S82 that there is manual driving takeover possibility, or when it is determined at step S84 that there is return possibility of the driver, a process at step S90 is performed. At this step S90, return to manual driving is prompted, and warning for prompting to driving return is performed by a sound output, a light output, haptics, or the like.

Then, at step S91, it is determined whether or not return within a safe driving takeover period is possible. For example, in a case where there is a response of the driver within the return delay time period calculated at step S62 to the return prompt to manual driving, it is determined that return within the safe driving takeover period is possible.

When it is determined that return is possible within the safe driving takeover period, a manual driving return checking process is executed at step S92. Then, at step S93, it is determined whether or not a safe steering operation has been checked. When it is determined that a safe steering operation has been checked, the sequence is ended at step ST88. Conversely, when it is determined at step S91 that return within the safe driving takeover period is not possible, or when it is determined at step S93 that a safe steering operation is not checked, the processes advances to step S85, at which a process similar to that described above is performed.

As described above, in the vehicle controlling system 100 depicted in FIG. 1, a return delay time period for determining a notification timing is calculated on the basis of the state of the driver, and notification of driving return can be performed to the driver at an appropriate timing. In this case, the return delay time period is calculated in response to results of learning of the driver in the past, and a return delay time period suitable for the driver can be calculated more appropriately. Further, in the vehicle controlling system 100 depicted in FIG. 1, in a case where return cannot be performed within the return delay time period, a record of a penalty for an incomplete takeover event is issued, and it is possible to prompt the driver to perform quick return.

<2. Modifications>

(Modification 1)

It is to be noted that, in the present specification, the term "system" is used to represent an aggregation of a plurality of components (devices, modules (parts), and so forth) and it does not matter whether or not all components are accommodated in the same housing. Accordingly, a plurality of apparatuses individually accommodated in separate housings and connected to each other through a network and one apparatus where a plurality of modules are accommodated in a single housing are each a system.

(Modification 2)

In the example indicated by the expression (2) of the embodiment, the delay time periods at the different return stages are simplified to Ta, Tb, Tc, Td, Te, and $\Delta$Tmin(VDP), and the calculation for return delay time estimation is performed on an assumption that a value is determined uniquely as a learning value of a value unique to the driver. However, the time period necessary for return is different between a return time period required actually from observable evaluation detected after sitting in a state in which the initial state is a state midway of a return transition from sleep and a delay time period required for return in a case where the initial state is a state in which the driver sits from the beginning. This arises from whether the sitting is in a state in which the momentum of recognition information necessary for situation determination necessary for return of the driver exists already or is at a stage at which the intelligent active momentum is low while the driver is still in a so-called initial determination start state of return request recognition at a point of time at which a return notification is received in the sitting state of the driver. In short, even in the same sitting state, the driver already progresses grasping of various information necessary for return after a notification of the necessity for return through an alarm or the like in advance before sitting.

Specifically, the plots described with reference to FIG. 18 for determining time points Tx signify that a distribution in the case where the driver receives a notification for the first time in an initial state before receiving a driving return request and returns and a distribution obtained from the driver state observed in the returning process have characteristics different from each other. As a modified embodiment, the prediction accuracy may be improved by further classifying the return delay time period distribution analysis from observable evaluation values further taking previous behavioral characteristics of the driver into account. Alternatively, return delay time period prediction suitable for a situation and having a higher degree of accuracy may be performed from limited observable state evaluation values of the driver by subdividing, by conditions, distribution variations of the return time period which change in driver arising from more complicated factors such as cumulative driving work time periods in the morning, the daytime, and the evening by use of the learning function and so forth by the artificial intelligence. Since the conditions or hierarchies for subdivision need not necessarily be divided explicitly, by introducing a mechanism for performing autonomous learning from cumulative utilization of driving, replacement may be further performed with a function for calculating a period of time in which a fixed takeover success rate is achieved.

(Modification 3)

In regard to the present function, a specific driver does not always drive a vehicle of the same type, and for example, a user who works in a vehicle operating company uses a general passenger car for commuting, and the same driver may sometimes be involved in a large bus, a tank truck, or the like required to drive more carefully.

Therefore, information notification to the driver or a behavioral characteristic of a driver may not necessarily be determined uniformly only if the driver is specified. Therefore, a mechanism for notification time estimation may be further provided taking a used vehicle type or a utilization form for timing decision of notification time by personal authentication of the driver into consideration.

(Modification 4)

A main purpose of the present invention resides in that distribution estimation of a period of time required after notification or warning till return, which is predicated from an awakening state, a posture, and so forth observed from the state of the driver, is performed from cumulative use accumulation data to accurately calculate a notification timing in order to achieve a success rate from predetermined automatic driving to manual driving. However, it has been described that, from the necessity for an actual driving behavior in response to a notification by the system, a notification timing has, as a result, an influence on the driving behavior depending upon the reasonability of the notification timing. Specifically, an excessively early timing and an excessively late notification timing are not desirable, and it is desirable to start return quickly in response to a notification. Since the driver basically normally tries to return early in response to the notification in the process of utilization, it is expected that the driver return time comes earlier.

In particular, if the driver tries to return early as a utilization characteristic of the system, the system learns a return characteristic distribution that the driver returns in a shorter period of time correspondingly. Accordingly, the notification point becomes later, and a period of time for involvement in a secondary task becomes longer. However, if such an application function of the system as just described is utilized unreasonably to try to reduce the return delay time period, such a problematic situation may also occur that return from automatic driving to manual driving is not performed in time without achieving conscious early return upon actual unconscious utilization.

In order to avoid a problem that may possibly occur in long-term utilization with the foregoing description viewed ergonomically, utilization of a reduced value of the return prediction time period may be kept at a certain value on the basis of a learning result of the return characteristic of the driver. Alternatively, abnormal observation plots that are not in time by observation values of early return or a unique factor may be subjected to an exclusion process as outliers of learning.

Further, recorded information used in learning such that an inhibiting factor of appropriate operation of a return notification predictor involved in inappropriate utilization described above can be analyzed may be recorded in synchronism with, for example, drive event recorder information of a vehicle, and moreover, may be recorded with a flag for search added thereto upon occurrence of abnormal value.

(Modification 5)

Although the learning in the embodiment described hereinabove is performed on an assumption that it is performed in the learning unit 155 depicted in FIG. 1, there is a case in which a driver uses a plurality of vehicles like an occupant of a taxi or the like, and also there is a timing desirable for return with an event occurrence record unique to a driver taken into account. Therefore, return notification timing determination or adjustment may be performed as part of the vehicle driving operation separated from a riding vehicle. Further, not limiting to a case in which a learning process is completed restricting to the automatic driving controlling unit incorporated in the vehicle, creation of a dictionary for a timing predictor may be further performed by learning calculation of post-processing, for example, on the basis of processing in a remote server or stored record data.

(Modification 6)

Further, in the present specification, in a case where a secondary task executed by a driver is, for example, a video conference system that includes a third party, the third party connected to the driver during a secondary task performs its task while the third party cannot grasp when it is necessary for the driver to return to driving. However, in this instance, the third party cannot grasp the necessity to withdraw from the secondary task and return to driving, which is inconvenient. In view of this, it is desirable that a connection partner located on the opposite side of the screen is further made to publicly know that the driver participates in the conference as a secondary task of the driving work and is made to grasp a situation necessary for a return timing. Further, driver intervention return request information over some periods of time or a fixed period of time to the partner side may be shared by communication.

(Modification 7)

The control at step S85 indicates one embodiment as a procedure for minimizing the influence of stop of a vehicle in a section that may possibly become a bottleneck to the road infrastructure or in a like section upon the road passage capacity by controlling on the basis of the availability determination of section passage by deceleration crawl. The present embodiment is one example of utilization, and on the basis of road environment information that may possibly become a bottleneck and can be acquired from the LDM, driving may return in advance to manual driving in prior before the corresponding section approaches and advance decision may be ended before arriving at the road section that may possibly become the bottle neck such that the entry into the section is performed or a result of the advance decision is utilized to stop the vehicle in advance before the vehicle enters the section, or the driver return time period prediction may be expanded in order to perform escape.

Further, in order to make it possible to preferentially work on a driving return request by the system even during a conference, such means as notification to the connection partner side, situation recognition, conference continuation refusal notification or the like may be automatically taken. As the return request information by the system, information same as that to the driver need not necessarily be presented, and notification by voice or message display by an OSD may be used. Furthermore, in a case where voluntary driving intervention return by the driver is delayed by execution of a secondary task, the system may proceed with interruption compulsorily. Further, in order to avoid unreasonable continuation of a secondary task by the driver, a log of a return action of the driver from a return request by the system may be tracking recorded. In short, in a case where a third party remotely connects to and joins in the work of the vehicle driver during automatic driving, it is not preferable for the third party to disturb driver return to driving, and in a case where a disturbing action is performed, also it is necessary to leave a record of this.

In a case where it is necessary for the driver to return from automatic driving to manual driving, if a third party joining in a secondary task through remote connection knows whether the situation is temporary or the state continues, the third party need not be subject to action restriction, and therefore, the convenience is improved. Here, plan display of the driver return necessity in automatic driving by the automatic driving vehicle may be notified, depending upon a use, further to a remote third party by remote communication.

While information is provided to a third party connected as a video conference as the present embodiment, the information provision may be information transmission when a traffic control remote traveling supporter of a traffic control center that controls operation of a plurality of commercial vehicles performs timing determination to be supported remotely. Further, although it is assumed that utilization in which a driver intervenes with driving is performed originally, the information may be utilized as information to be used for remote intervention necessity determination of a third party in remote support traveling of a utilization form including notification means that notifies a remote third party by remote communication. For example, timing information may be used being expanded to remote monitoring and support in that a delay occurs with respect to an appropriate return timing to be performed by a top vehicle driver in a line of traveling vehicles.

As described above, return time period prediction necessary for change from automatic driving to manual driving of a driver is obtained, so that easier management of remote support becomes possible by using the information regarding the return time prediction. Further, by combining return necessity information in a traveling section of a traveling vehicle and an entering traveling section or the like immediately after the traveling section, various thoughtful support forms necessary for support upon traveling of a senior person or the like whose driving ability is deteriorated becomes possible, and various utilization forms of the automatic driving system are also created. Presence/absence of information regarding individual driver return timing prediction of each driver gives rise to a significant difference in utilization form in that, while remote monitoring of all vehicles during traveling is required particularly in a case where all automatic driving traveling vehicles do not regularly use the individual return characteristic notification function, attention is paid only to a vehicle that has departed from a limit of return permission delay for support to organize a road operation in a case of automatic driving that allows monitoring of return prediction information for each vehicle. As a result, while the former configuration is socially difficult in preparation of a number of managers equal to the number of vehicles, the latter allows a smaller number of managers to perform filtering management mainly in regard to vehicles in which an alarm is effective in operation, resulting in introduction of an automatic driving system that can be implemented.

(Modification 8)

In the present specification, in a case where, during a secondary task executed by the driver described above, it is requested by the system to travel under attention along the traveling route or to return to manual driving to transit to traveling, depending upon the contents of the secondary task being executed, the requesting timing may not appropriate to interrupt the work of the secondary task, in some cases.

For example, in a case where the secondary task is a nap including deep sleep, there is a case in which a timing at which the sleep is so shallow that it is suitable to return to some degree can be decided through steady state observation while the system normally and continuously observes the driver state such as depth decision of the sleep. However, in various kinds of secondary tasks the driver can take, it is very difficult to always calculate a notification timing optimum to the secondary task performed by the driver only from biological observation information of the driver and so forth that can be performed by the system.

Depending upon the type of secondary task, there is a type of consciousness withdrawal different from the withdrawal from an extreme steering work like the sleep described above. Also an immersive game is a typical example of such a secondary task as just described. Matter of course, depending upon the way of involvement in the secondary task, the work may have the possibility that, even if the driver can start the work while paying attention forwardly, which is necessary for driving return, simultaneously depending upon the way of the involvement and depending upon the brain thinking activity, the driver may immerse himself/herself in the secondary task until the attention of the driver to the front of traveling or to a takeover notification timing degrades significantly. If the driver reaches extreme addiction like game addiction, the driver becomes insensitive to a notification or an alert by the system, resulting in the possibility that appropriate return may not be achieved.

Further, a task that provides a similar immersive sense includes watching of sports on live television or the like. Further, it is assumed that, during a period that involves lively discussion in a telephone conference or the like, depending upon a participation situation in the discussion, the driver becomes insensitive similarly to a return notification or an alert by the system not in the conference.

Also a work for a slip inputting system to a tablet terminal apparatus can be classified to a secondary task of the type in which it is generally favorable that, from a point of view of the work efficiency, a series of inputting is performed continuously without interrupting the work and the inputting work is performed until the work settles down.

It is to be noted that, as a work that provides a milder immersive sense, for example, movie watching of a recorded video and viewing of recorded current news are available, and a work of any of those secondary tasks increases or decreases excessive attention concentration to the secondary task depending upon the content. Depending upon the current reproduction contents, the assignment of attention relating to surrounding traveling sometimes becomes neglected, or sufficient attention maintenance can sometimes be achieved, in some cases.

However, it is generally difficult to take a correlation to the depth of withdrawal from driving attention by a work. Therefore, even if passive observation of the driver state by the system can be performed, since the system cannot observe up to a thinking situation in the brain, direct observation of the attention concentration level cannot be performed, and it is difficult to achieve optimization of return notification or an alert timing.

In order to overcome this problem, there is no choice to rely upon voluntary work interruption to some degree by the driver. In order to facilitate interruption of a secondary task by the driver, it is necessary to perform reduction of factors that give rise to hesitation to interrupt a secondary task.

In the several examples given hereinabove, since the driver himself/herself cannot necessarily perform control of a degree of the progress of a reproduction video or a game, the hesitation to interrupt can be reduced depending upon how the driver can comfortably watch the contents of the secondary task continued from the interruption point when the secondary task is interrupted and reproduction is restarted from the interruption point later.

In movie watching, live sports watching on live television, or the like, if appreciation of a movie or watching of sports on live television is temporarily interrupted at a good interruption scene such as a scene next to a scene with which the emotional tension upon viewing rises and it is possible to restart appreciating or watching from the interruption point, an unsatisfactory or discomfort feeling by the intermediate interrupt can be reduced.

Further, at a point of time at which it becomes possible to restart appreciation, by providing supplementary information to the driver as a viewer upon restarting after insertion of a short summary of a story up to the interruption point or after insertion, of a highlight scene during the interruption in the case of sports live watching, it is possible to achieve reduction of unsatisfactory feeling that occurs upon secondary task interruption.

Such interruption of a secondary task for performing driving steering attention and actual steering return with the secondary task interrupted may be performed by an interruption procedure by the driver. Then, at this time, restart from the interruption point may be performed or the reproduction point may be reserved retroactively in advance so as to perform interruption. The interruption reproduction method is desirably inputted by such a method that, for example, an interruption menu is provided by single touch an appreciation monitoring screen and intuitive and rapid designation is possible such as interruption reproduction method designation or slider designation interruption of a retroactive point.

Further, in a case where specifically there is no designation, retroactive reproduction from the interruption point may be performed. Without retroactive reproduction, unlike continuous appreciation, since appreciation has been once interrupted, even if the driver watches the contents from the interruption point upon restarting the reproduction of the contents, it is difficult to grasp the story of the contents. The effect of the present reproduction method can be recognized readily if it is taken as an example that, even if a person hears a witty comment in a comedy double act some time later after hearing a funny comment, this is not funny.

As a secondary task having a higher degree of freedom in interruption, an example such as a work like data inputting to a tablet terminal, a personal computer, or the like or reading is available. In the case of data inputting, upon inputting of information into a table or the like in an interlocking relationship while several items associated with each other are checked, if the work is interrupted at a place that is not good to stop, the work that has already been done at that time may possibly become useless. Further, for inputting works for purchase through the Internet or official procedure inputting processes used often in various fields in recent years, a fixed continuous work is demanded frequently. Therefore, in a case where an inputting work for such procedure cannot be ended, if the work is interrupted on the way and the inputting work must be retroactively returned to the initial input start point upon restarting of the inputting work, it is hesitated to interrupt the inputting work.

As indicated by the example described above, relying also upon the immersion degree in the secondary task, the necessity for continuous inputting, and so forth, if a task is of the type that the driver needs to redo the task all over again from the beginning in a case where the secondary task is interrupted, even if the notification is received, the driver psychologically wants to delay the interruption of the secondary task to finish the work to a place that is good to stop, in some cases.

It is possible to cause the user to interrupt the secondary task in the first priority and encourage the user to return to the driving steering work at an early stage, when the disadvantage in a case where the work is interrupted at an early stage to take over the manual driving in the first priority is lower than the disadvantage in a case where the work of the secondary task is not interrupted and continued and the takeover to the manual driving is delayed. However, as the disadvantage in a case where the work is not interrupted and continued thereby to cause delay of the takeover, a probability that delay of the driving return occurs finally may increase. In addition, even when the takeover is not carried out in time as a result of delay on a rare case and the system causes the vehicle to travel escaping travel for emergency, for example, unless the user recognizes the effect caused by the escaping travel as intuitively disadvantageous, the user does not try to avoid the situation.

As a countermeasure for this, in a case where the system observes that the work is interrupted and the return is delayed, a mechanism for imposing a penalty on the user is effective. However, the penalty in a case where the return procedure delay is not always almighty, and as behavioral psychology of a human, the user preferentially keeps the notification of return until the user feels a direct penalty and the psychology to interrupt the secondary task does not necessarily work.

Especially, if emergency slow traveling or escape traveling for risk minimization (Minimum Risk Maneuver) by the system is performed upon generation of an urgent takeover request or when takeover is not completed in a supposed period of time, this forces peripheral traveling vehicles such as a subsequent vehicle to perform sudden braking or avoidance action, thereby causing an increase of risk such as a traffic jam or a rear-end accident. In particular, operation that relies on emergency measures performed by the system when a secondary task is forcibly continued unconditionally increases the probability that a secondary damage such as a traffic jam or rear-end accident may be caused and has an adverse effect that social functional degradation of the road infrastructure is caused.

A usage form is desirable which avoids reckless continuation of a secondary task at an early stage by a driver and encourages the driver to interrupt the secondary task quickly and start the takeover. In particular, if a penalty is generated against a violation of neglecting a motivation (incentive) and a request for early takeover, it is expected that positive, voluntary and reflective early takeover of the user becomes a habit, and also it becomes necessary to reduce demerits of cumbersomeness in this case.

In particular, while the human psychology in automatic driving utilization behavior becomes likely to rely upon automatic driving steering by the system in many traveling environments, a mechanism for prompting a voluntary return behavior to avoid laziness in performance of takeover due to over-dependence is effective, and if the balance between advantages and disadvantages upon utilization appears intuitively in operation feeling, a person starts a preferential interruption work.

As an example of a work for which continuous execution of a secondary task is supposed, movie watching, sports watching, a board game or an electronic game, conversation between passengers, discussion in a telephone conference, data inputting using an information terminal, a net banking work, texting of a mail or the like, browsing, net shopping, and so forth are available in the future.

Especially, among such secondary tasks as mentioned above, if a work is interrupted in the middle of a game, further, in the middle of a work in a case where a series of information is inputted for an inputting process of slips using an application with an information terminal such as a smartphone or a tablet, or in a case of net shopping, the inputting processing work which has been done so far all becomes wasted. As a result, a situation in which the work must be performed from the beginning (redone) possibly occurs.

Since it is desirable to eliminate wastefulness of a work as human psychology, if the psychology to complete inputting to the last works, interruption of the work is postponed, and the psychology that a little delay may be permissible works further, resulting in a risk that safe and smooth return cannot be performed after all and may not be performed in time. In other words, as long as the driver is one human and a takeover work is performed in accordance with the human behavioral psychology, a mechanism is required which interrupts a work in the behavioral psychology and prioritizes early return.

Therefore, if a mechanism that interrupts a work and prioritizes early return can be constructed, it is expected to reduce the risk by causing the user (driver) to give up continuation of the work. Especially if the secondary task is information inputting on a tablet or the like and an explicit menu that facilitates work designation point return by the user on an execution application is prepared, even if the user temporarily interrupts the work, the user can easily restart the work from the interruption point.

It is to be noted that application software for many personal computers and other information terminals that are popular at present is equipped with storage and recovery functions for a history of execution processing used for cancellation or redoing of inputting. However, those functions are supposed for utilization for the purpose of redoing of inputting during engagement in inputting on a terminal and are selective reflection of selectively changed contents during a review work of a document worked by a plurality of persons, but are not functions for the object of assistance in restarting of an inputting work when an unspecified arbitrary inputting work is interrupted. Therefore, the functions become a factor for causing the user to hesitate interruption of an inputting work to an information terminal as a secondary task.

In order for the user to interrupt an inputting work and preferentially return to a driving task, an assistive function for assisting restart of the inputting work or the like is demanded. In the following, working examples for assisting such return are depicted together with several uses.

In the case of performance of a secondary task utilizing an information terminal, in order to avoid full withdrawal from driving attention by an oversight in a return notification from automatic driving because of excessive immersion of the user in a secondary task, in a work window 400, index presentation (traveling section display image 200) till arrival at a takeover point by progress is performed normally. Further, if it is decided by the takeover notification decision device that it is a notification timing, a small icon for notification is displayed as a visual stimulus induction by flickering or the like in the work window 400 as depicted in FIG. 22(a).

In a case where the driver (secondary task performer) acknowledges the notification and performs, for example, touch with or check mark in the icon, for example, as depicted in FIG. 22(b), the work screen is interrupted (partially obstructively) and a restart return point designation slider menu for an inputting work is displayed such that free setting can be performed by slider rotation of an optimum return point by the utilizer. In this case, the slider display may be a rotational display image of the rotation type in the counterclockwise direction as depicted in FIG. 22(b), a horizontal linear display image as depicted in FIG. 23(a) or a vertical linear display image not depicted.

In the case of such a clockwise display image as depicted in FIG. 22(b), the counterclockwise direction to the nine o'clock direction from the 12 o'clock direction is determined as an input retroactive point, and in the case of such a horizontal linear slider display form as depicted in FIG. 23(a), for example, the leftward direction from a current input point that is the point at a length of approximately 2/3 is determined as an input retroactive point.

In the case of an information inputting process, the last input information point is the current point, and since a place not inputted as yet is not a point at which restart cannot be performed originally, it cannot be designated as a reproduction designation point upon restarting. However, by progressing work items on a menu, the input point is progressed to a planned inputting place on an inputting application tool, and by executing screen simulation simple display upon return inputting, an optimum point determination for restarting the work retroactively can be performed.

Since the reason is a little difficult to understand, a description thereof will be given taking high-jump in sports as an example. If the distance to be jumped over upon high-jumping can be estimated in advance, it can be determined what distance is to be assured as a distance for running. Therefore, although the running is interrupted once and the jump is performed later, by grasping the situation in advance, it can be predicted at which retroactive point the running is to be restarted. A slider design from which an input place in the future can be postponed and browsed is measures for this. This merit is useful in a case where the remaining input items are checked.

In a case where fixed time lapse transition or acknowledgment response inputting of the driver to the notification is not performed in response to the notification and the system fails in confirmation of response detection of the driver, it is reasonable to issue a warning to prompt early return. For example, index presentation (traveling section display image 200) till arrival at a takeover point in the moving direction is displayed in an enlarged scale like a traveling section display image 200' as depicted in FIG. 23(b) while the secondary task execution window 400 is reduced, and in some cases, the application inputting being executed as a secondary task may be force-quit.

In a case where the driver who is executing a secondary task designates a work restart point and interrupts the work once in response to a return request by the system and the driver can return to automatic driving again as a flow and restarts the work, as depicted in FIG. 24, a slider menu (slider for return place designation with an input history on the screen upon restarting) 500 in which input work points (a CR (enter keyboard Carriage Return) execution point to an input work point and an input form completion point) are lined up explicitly in chronological order may be presented. It is to be noted that, although the restart after interruption of the work once need not necessarily be performed after return to automatic driving and may be performed after the end of the itinerary, an example of the applicable case is omitted in the flow chart.

Especially, if there is no necessity to designate a particular restart point, the slider may be closed by a process for slidably moving the slider with double fingers or by a close menu. Alternatively, a restart point may be designated by inputting a numerical value, hitting Carriage Return, moving the slider to a location at which work restarting is desired to be performed among a plurality of points and designating the applicable location by double touch or checkmark operation.

These designation of the return point and the operation are made to coincide with each other, and the designation location is moved on the slider, so that it is also effective to reproduce an input screen on an application execution screen. Also upon restarting of the work, by displaying a work progress menu partitioned for each input return key in a slider, the inputting person can easily check an interruption place and an input history that has been done so far, and therefore, this becomes an interface by which the interruption point can be recalled readily.

Especially, since an input work point of a terminal work and a reach point of a traveling environment on a tablet or the like can be grasped intuitively by the user, not only an execution task of a secondary task and display update information are temporarily displayed simply to the driver but also a synchronous record with the task may be further stored into a recording apparatus such that the task playback function and so forth can be used together by a scroll of a section approach window involved in the progress on the menu and a screen double touch or triple touch operation with a work recovery point and so forth.

By providing means for work return point search and return markers with which return of the work to an arbitrary work point is readily possible after driving return to the driver in this manner, reckless continuation of a secondary task can be avoided from an ergonomic perspective. As a result, since the driver who is executing the secondary task starts driving return quickly without stress, this leads to achievement of utilization of safer automatic driving can be implemented.

Especially, in an inputting work, an interaction between preceding and succeeding pieces of input information is important, and for example, in a case where a plurality of pieces of related information are successively inputted into a table or the like, in a case where an item is selected and a series of information interlocked with the item are to be inputted, if inputting is interrupted at a place that is not good to stop under an incomplete condition, depending upon the memory of the driver upon restart the work, there is the possibility that time may be required to recall the interruption place or incorrect input may occur.

In particular, in a case where an application interface that presupposes ordinary continuous use remains as it is, when an inputting work is interrupted on the way and a work with attention different from the inputting work required is performed during the interruption, there is an adverse effect when the driver returns to the interruption place precisely upon work return and continues the work. By performing explicit visualization of a menu for exclusive use for work interruption point designation or of an inputting location, upon work return, the driver recalls the memory of the inputting work to allow for easy work restart.

The input screen change history till the time of interruption of inputting a secondary task is an effective auxiliary function for recalling an input restart point and is useful in improvement of the work efficiency. Especially in a work in which a browsing effect of history information is high but is heavy in recalculation, it is also possible to omit the recalculation process by locally storing screen changes as images over last several stages.

Although the example described above is a flow as viewed from a point of view of data inputting to an information terminal principally as an information inputting application, a similar operation flow is applicable also to movie watching, sports watching and streaming viewing of a news program. In the case of movie watching or watching a competition game such as the soccer which is being broadcasted on a television, it is effective to temporarily and locally store the broadcast, interrupt reproduction display at a timing at which manual driving return is requested once and perform delayed reproduction from the middle of the work by the driver. At this time, it is possible to lower the necessity for the cumbersome rewound playback process.

However, in a case where an extreme utilization form such as particularly VR utilization in a participatory game that provides a sense of deep immersion is performed, also it is effective to not only force the driver to interrupt the work but also force the driver to view forward traveling information by switching display of the screen such that the forward traveling information is displayed in the secondary task screen, causing the driver to return his/her attention from a state in which the driver is fully withdrawn from the driving traveling work, at an early stage.

In a case where the advantages obtained by interrupting a secondary task work during automatic driving can be felt in the short term only in safety and reliable and smooth takeover at a takeover limit point, the necessity for the same is not felt intuitively. Therefore, although a stepwise penalty function is effective to cause the user to feel the necessity for start of intuitive return and to prompt an action, alert using an alarm or haptics is cumbersome and punishment only cannot always improve the human behavioral psychology. However, by combining a mechanism for supporting restart and return upon the secondary task interruption that cancels the disadvantages, it is possible to grow the psychology of rapid interruption of the secondary task and habitually reduce reckless continuation of the secondary task.

Flow charts of FIGS. 25 and 26 depict an example of a processing procedure of the system in a case where a takeover notification decision is received.

At step S151, the system starts processing when it receives a takeover notification decision. Then, at step S152, the system executes notification to a performer of a secondary task. For example, in a case where a secondary task in which an information terminal is used is performed, a small icon for notification is flickered or the like in a work window 400 (refer to FIG. 22(a)).

Then, at step S153, the system detects notification acknowledgement response of the performer of the secondary task. For example, in a case where the secondary task utilizing an information terminal is performed and a small icon for notification is flickered or the like as a notification in the work window 400 as described above, for example, a touch operation or the like by the performer with the icon is detected. Further, at step S154, the system issues an interruption request of the inputting work of the secondary task to the performer of the secondary task and gives a notice for screen reduction and interruption.

Then, at step S155, the system discriminates whether or not a notification acknowledgement response is detected. If a notification acknowledgement response is not detected, the system calculates a remaining time period for a takeover grace budget at step S156. Then, at step S157, the system discriminates on the basis of the remaining time period calculated at step S156 whether or not it is a timeout. If it is not a timeout, the system returns to step S153 to repeat processes similar to those described above.

In contrast, if it is a timeout at step S157, the system executes warning using sound, vibration, an image, or the like at step S158. Then, at step S159, the system performs reduction of a work screen image and enlargement emphasis display of a takeover point approach display (refer to FIG. 23 (b)). Then, at step S160, the system performs an acceptance process of warning acknowledgment and restart point designation of the secondary task. In this case, the system displays a restart point designation slider menu for the secondary task inputting work and performs acceptance of determination of the restart point designation (work return point reservation by a slider or the like) by the secondary task performer (refer to FIGS. 22(b) and 23(a)).

Then, at step S161, the system discriminates whether or not it is a timeout. In this case, the timeout is discriminated at a point of time at which takeover delay is predicted by the takeover grace time period decision. If it is not a timeout, the system continues the process at step S160. In contrast, if it is a timeout, the system forcibly ends the work of the secondary task at step S162. Then, at step S163, the system executes return delay penalty recording, restriction of the work restart point, reuse restriction of the automatic driving mode and so forth.

Conversely, when a notification acknowledgement response is detected at step S155 described above, the system displays a restart point designation slider menu for the secondary task inputting work at step S164 and then, further performs acceptance of determination of the restart point designation (work return point reservation by a slider or the like) by the secondary task performer at step S165 (refer to FIGS. 22(b) and 23(a)). Then, after the process at step S165, the system advances to a process at step S166. Also after the process at step S163 described hereinabove, the system advances to the process at step S166.

At step S166, the system saves a work history and the restart point designation information of the secondary task. Then, at step S167, the system decides that it is a manual driving return period and execution of the secondary task is disabled.

Then, at step S168, the system monitors and acquires LDM information, driver states and vehicle self-diagnosis information necessary for automatic driving restart availability decision. Then, at step S169, the system determines whether or not the vehicle has entered again into an executable section of the secondary task. If the vehicle has not entered again the executable section of the secondary task, the system continues the process at step S168. In contrast, if the vehicle has entered again the executable section of the secondary task, the system determines automatic driving available section entry at step S170.

Then, at step S171, the system enables a returnable menu of a secondary task work of the terminal. Then, at step S172, the system monitors a secondary task return restart input. Then, at step S173, the system determines whether or not selection of the return menu is performed by the performer of the secondary task. If selection of the return menu is not performed, the system determines at step S174 whether or not it is a timeout (restart designation waiting time timeout). If it is not a time out, the system returns to the process at step S171 to repeat processes similar to those described hereinabove. The timeout decision performed at step S74 may be a procedure that, in a case where the driver does not perform secondary task restart within a fixed period of time, interruption of the work equivalent to transition to a standby mode that is an energy saving mode of a terminal or the like, a pause mode in which interruption information for turning off the power supply fully is recorded to close the work or the like is performed such that loss of the work contents that have been done so far is avoided by manual driving return that requires long-term work interruption.

When the selection of the return menu is performed at step S173, if the work restart point designation is performed through a slider menu or the like by the system at step S175, at step S176, the system performs work restart in accordance with the designation input. Thereafter, the system ends the series of processes at step S177. It is to be noted that, when it is a timeout at step S174, the system immediately advances to step S177 to end the series of processes.

(Modification 9)

Further, in the present specification, in a case where, during a secondary task executed by the driver as described above, the secondary task is interrupted on the basis of traveling under caution along a traveling route or manual driving return request information to prioritize manual driving return, there possibly is a case in which the timing at which return is demanded to the driver not necessarily is a timing that is good for interruption of the secondary task being executed. Especially, there possibly is a situation in which, in a case where a series of information is to be inputted, if the work is interrupted on the way, the inputting work that has been done so far must all be re-inputted from the beginning. Since, as human psychology, it is desired to eliminate wastefulness of a work, it is tried to finish inputting to the last. However, this involves a risk that return is not performed in time.

Therefore, as risk reduction measures, an explicit menu that facilitates designation point return by the user on an execution application of a secondary task may further be provided auxiliarily. Especially, since an inputting work point and a reaching point of a traveling environment can be grasped intuitively by the user, not only an execution task of the secondary task and display update information are temporarily presented to the driver simply such that a task playback function and so forth can be used by both of a scroll of a section approach window together with traveling on a menu and a screen double touch or the like on a recovery work point but also synchronous recording with the task may be further stored into a recording apparatus.

By providing means returnable to an arbitrary work point after driving return to the driver in this manner, reckless continuation of the secondary task can be avoided from an ergonomic point of view. As a result, the driver who is executing the secondary task starts driving return quickly without a stress, and this leads to implementation of utilization of safer automatic driving.

Further, the steps described in the description of the flow charts given hereinabove not only can be executed by a single apparatus but also can be shared and executed by a plurality of apparatuses. Further, in a case where one step includes a plurality of processes, the plurality of processes included in the one step can be executed by a single apparatus and also can be executed by sharing by a plurality of apparatuses.

[Reference Signs List]

| | |
|---|---|
| 100 | Vehicle controlling system |
| 101 | Inputting unit |
| 102 | Data acquisition unit |
| 103 | Communication unit |
| 104 | In-vehicle apparatus |
| 105 | Output controlling unit |
| 106 | Outputting unit |
| 107 | Drive-train system controlling unit |
| 108 | Drive-train system |
| 109 | Body controlling unit |
| 110 | Body system |
| 111 | Storage unit |
| 112 | Automatic driving controlling unit |
| 121 | Communication network |
| 131 | Detection unit |
| 132 | Self-position estimation unit |
| 133 | Situation analysis unit |
| 134 | Planning unit |
| 135 | Motion controlling unit |
| 141 | Outside-vehicle information detection unit |
| 142 | In-vehicle information detection unit |
| 143 | Vehicle state detection unit |
| 151 | Map analysis unit |
| 152 | Traffic rule recognition unit |
| 153 | Situation recognition unit |
| 154 | Situation prediction unit |
| 161 | Route planning unit |
| 162 | Action planning unit |

163     Motion planning unit
171     Emergency avoidance unit
172     Acceleration/deceleration controlling unit
173     Direction controlling unit

**Claims**

1. An information processing apparatus comprising:

    a notification controlling unit configured to control a notification for prompting a driver to return to driving; and
    a calculation unit configured to calculate a return delay time period for determining a notification timing on a basis of a state of the driver, wherein
    the calculation unit is configured to calculate the return delay time period in response to an observable evaluation value based on a type of secondary task being executed by the driver and biological activity observable information of the driver, wherein
    the calculation unit is configured to calculate the return delay time period utilizing a plurality of pieces of relationship information between the observable evaluation value and the return delay time period, which are accumulated for each type of secondary task having been executed by the driver or are learned from history information,
    wherein
    the calculation unit is configured to calculate the return delay time period so as to succeed in driving return from the secondary task being executed by the driver at a success rate of a predetermined ratio utilizing the plurality of pieces of relationship information between the observable evaluation value and the return delay time period, and wherein
    the calculation unit is configured to acquire a success rate of the predetermined ratio as information retained by an infrastructure side by performing road-vehicle communication with an outside of a vehicle.

2. The information processing apparatus according to claim 1, wherein
   the calculation unit is able to perform register setting of the predetermined ratio.

3. The information processing apparatus according to claim 1, wherein
   the calculation unit is configured to calculate the return delay time period corresponding to the driver who is authenticated and identified.

4. The information processing apparatus according to claim 1, wherein
   the calculation unit is configured to calculate the return delay time period corresponding to a vehicle dynamic characteristic of the driver who is authenticated and identified and a vehicle on which the driver rides.

5. The information processing apparatus according to claim 1, further comprising:
   a penalty information recording unit configured to record penalty information in a case where the driver fails in driving return within the delay time period calculated by the calculation unit.

6. The information processing apparatus according to claim 1, further comprising:
   a penalty information recording unit configured to record penalty information according to a delay amount in a case where the driver delays the driving return with respect to a prediction value at each returning intermediate stage within an extended time period classified into a plurality of stages in response to contents of execution of a secondary task of the driver by the calculation unit.

7. The information processing apparatus according to claim 1, wherein
   in response to a returning delay amount calculated by the calculation unit, a notification of prediction information regarding a return delay time period necessary for driver return is issued to a third party in remote connection utilization of a third party intervention secondary task while utilizing the function.

8. The information processing apparatus according to claim 1, wherein
   the calculation unit is configured to perform autonomous learning of the return delay time period in response to a type of secondary task being executed by the driver on a basis of return success and return delay quality and an observable evaluation value based on biological activity observable information of the driver.

**9.** An information processing method comprising:

by a notification controlling unit, a notification controlling step of controlling notification for prompting a driver to return to driving; and

by a calculation unit, a calculation step of calculating a return delay time period for determining a notification timing on a basis of a state of the driver, wherein the return delay time period is calculated in response to an observable evaluation value based on a type of secondary task being executed by the driver and biological activity observable information of the driver, wherein the return delay time period is calculated utilizing a plurality of pieces of relationship information between the observable evaluation value and the return delay time period, which are accumulated for each type of secondary task having been executed by the driver or are learned from history information,

wherein

the return delay time period is calculated so as to succeed in driving return from the secondary task being executed by the driver at a success rate of a predetermined ratio utilizing the plurality of pieces of relationship information between the observable evaluation value and the return delay time period, and

wherein

a success rate of the predetermined ratio is acquired as information retained by an infrastructure side by performing road-vehicle communication with an outside of a vehicle.

**Patentansprüche**

**1.** Informationsverarbeitungseinrichtung, umfassend:

eine Benachrichtigungssteuereinheit, die konfiguriert ist, um eine Benachrichtigung zum Auffordern eines Fahrers zur Wiederaufnahme des Fahrens zu steuern; und

eine Berechnungseinheit, die konfiguriert ist, um eine Wiederaufnahmeverzögerungszeitspanne zum Bestimmen eines Benachrichtigungszeitpunkts auf der Grundlage eines Zustands des Fahrers zu berechnen, wobei die Berechnungseinheit konfiguriert ist, um die Wiederaufnahmeverzögerungszeitspanne als Reaktion auf einen beobachtbaren Bewertungswert, der auf einer Art einer vom Fahrer ausgeführten Sekundäraufgabe und beobachtbaren Informationen zur biologischen Aktivität des Fahrers basiert, zu berechnen, wobei die Berechnungseinheit konfiguriert ist, um die Wiederaufnahmeverzögerungszeitspanne unter Verwendung einer Vielzahl von Beziehungsinformationen zwischen dem beobachtbaren Bewertungswert und der Wiederaufnahmeverzögerungszeitspanne zu berechnen, die für jede Art von Sekundäraufgabe, die vom Fahrer ausgeführt wurde, gesammelt werden oder aus Verlaufsinformationen gelernt werden,

wobei

die Berechnungseinheit konfiguriert ist, um die Wiederaufnahmeverzögerungszeitspanne so zu berechnen, dass die Wiederaufnahme des Fahrens von der Sekundäraufgabe aus, die von dem Fahrer ausgeführt wird, mit einer Erfolgsrate eines vorbestimmten Verhältnisses unter Verwendung der Vielzahl von Beziehungsinformationen zwischen dem beobachtbaren Bewertungswert und der Wiederaufnahmeverzögerungszeitspanne erfolgreich ist, und

wobei

die Berechnungseinheit konfiguriert ist, um eine Erfolgsrate des vorbestimmten Verhältnisses als von einer Infrastrukturseite gespeicherte Informationen zu erfassen, indem sie eine Straße-Fahrzeug-Kommunikation mit einem Außenbereich eines Fahrzeugs durchführt.

**2.** Informationsverarbeitungseinrichtung nach Anspruch 1, wobei die Berechnungseinheit in der Lage ist, eine Registereinstellung des vorbestimmten Verhältnisses durchzuführen.

**3.** Informationsverarbeitungseinrichtung nach Anspruch 1, wobei die Berechnungseinheit konfiguriert ist, um die Wiederaufnahmeverzögerungszeitspanne entsprechend dem authentifizierten und identifizierten Fahrer zu berechnen.

**4.** Informationsverarbeitungseinrichtung nach Anspruch 1, wobei die Berechnungseinheit konfiguriert ist, um die Wiederaufnahmeverzögerungszeitspanne entsprechend einer fahrzeugdynamischen Eigenschaft des authentifizierten und identifizierten Fahrers und eines Fahrzeugs, in dem der Fahrer fährt, zu berechnen.

**5.** Informationsverarbeitungseinrichtung nach Anspruch 1, ferner umfassend:
eine Strafinformationsaufzeichnungseinheit, die konfiguriert ist, um Strafinformationen in einem Fall aufzuzeichnen, in dem der Fahrer es versäumt, innerhalb der von der Berechnungseinheit berechneten Verzögerungszeitspanne das Fahren wieder aufzunehmen.

**6.** Informationsverarbeitungseinrichtung nach Anspruch 1, ferner umfassend:
eine Strafinformationsaufzeichnungseinheit, die konfiguriert ist, um Strafinformationen entsprechend einem Verzögerungsbetrag in einem Fall aufzuzeichnen, in dem der Fahrer die Wiederaufnahme des Fahrens in Bezug auf einen Vorhersagewert in jeder Zwischenphase der Wiederaufnahme innerhalb einer verlängerten Zeitspanne, die in eine Vielzahl von Phasen unterteilt ist, als Reaktion auf Inhalte der Ausführung einer Sekundäraufgabe des Fahrers durch die Berechnungseinheit verzögert.

**7.** Informationsverarbeitungseinrichtung nach Anspruch 1, wobei
als Reaktion auf einen von der Berechnungseinheit berechneten Wiederaufnahmeverzögerungsbetrag eine Benachrichtigung mit Vorhersageinformationen bezüglich einer für die Wiederaufnahme des Fahrens erforderlichen Wiederaufnahmeverzögerungszeitspanne an eine Drittpartei in Fernverbindungsnutzung einer Sekundäraufgabe mit Drittparteieingriff während der Nutzung der Funktion ausgegeben wird.

**8.** Informationsverarbeitungseinrichtung nach Anspruch 1, wobei
die Berechnungseinheit konfiguriert ist, um ein autonomes Lernen der Wiederaufnahmeverzögerungszeitspanne als Reaktion auf eine Art der vom Fahrer ausgeführten Sekundäraufgabe auf der Grundlage des Wiederaufnahmeerfolgs und der Wiederaufnahmeverzögerungsqualität sowie eines beobachtbaren Bewertungswerts, der auf beobachtbaren Informationen zur biologischen Aktivität des Fahrers basiert, durchzuführen.

**9.** Informationsverarbeitungsverfahren, umfassend:

einen Benachrichtigungssteuerschritt, durch eine Benachrichtigungssteuereinheit, zum Steuern der Benachrichtigung zum Auffordern eines Fahrers zur Wiederaufnahme des Fahrens; und
einen Berechnungsschritt, durch eine Berechnungseinheit, zum Berechnen einer Wiederaufnahmeverzögerungszeitspanne zum Bestimmen eines Benachrichtigungszeitpunkts auf der Grundlage eines Zustands des Fahrers,
wobei die Wiederaufnahmeverzögerungszeitspanne als Reaktion auf einen beobachtbaren Bewertungswert, der auf einer Art einer vom Fahrer ausgeführten Sekundäraufgabe und beobachtbaren Informationen zur biologischen Aktivität des Fahrers basiert, berechnet wird, wobei die Wiederaufnahmeverzögerungszeitspanne unter Verwendung einer Vielzahl von Beziehungsinformationen zwischen dem beobachtbaren Bewertungswert und der Wiederaufnahmeverzögerungszeitspanne berechnet wird, die für jede Art von Sekundäraufgabe, die vom Fahrer ausgeführt wurde, gesammelt werden oder aus Verlaufsinformationen gelernt werden,
wobei
die Wiederaufnahmeverzögerungszeitspanne so berechnet wird, dass die Wiederaufnahme des Fahrens von der Sekundäraufgabe aus, die von dem Fahrer ausgeführt wird, mit einer Erfolgsrate eines vorbestimmten Verhältnisses unter Verwendung der Vielzahl von Beziehungsinformationen zwischen dem beobachtbaren Bewertungswert und der Wiederaufnahmeverzögerungszeitspanne erfolgreich ist, und
wobei
eine Erfolgsrate des vorbestimmten Verhältnisses als von einer Infrastrukturseite gespeicherte Informationen erfasst wird, indem eine Straße-Fahrzeug-Kommunikation mit einem Außenbereich eines Fahrzeugs durchgeführt wird.

**Revendications**

**1.** Appareil de traitement d'informations comprenant:

une unité de commande de notification configurée pour commander une notification invitant un conducteur à reprendre la conduite; et
une unité de calcul configurée pour calculer une période de retard de reprise afin de déterminer une temporisation de notification sur la base d'un état du conducteur, dans lequel
l'unité de calcul est configurée pour calculer la période de retard de reprise en réponse à une valeur d'évaluation observable sur la base d'un type de tâche secondaire exécutée par le conducteur et des informations observables d'activité biologique du conducteur, dans lequel
l'unité de calcul est configurée pour calculer la période de retard de reprise à l'aide d'une pluralité d'éléments d'informations de relation entre la valeur d'évaluation observable et la période de retard de reprise, qui sont accumulées pour chaque type de tâche secondaire exécutée par le conducteur ou qui sont apprises à partir d'informations historiques,
dans lequel
l'unité de calcul est configurée pour calculer la période de retard de reprise de manière à réussir une reprise de conduite de la tâche secondaire exécutée par le conducteur à un taux de réussite d'un rapport prédéterminé à l'aide de la pluralité d'éléments d'informations de relation entre la valeur d'évaluation observable et la période retard de reprise, et
dans lequel
l'unité de calcul est configurée pour acquérir un taux de réussite du rapport prédéterminé en tant qu'informations conservées par un côté infrastructure en réalisant une communication route-véhicule avec un extérieur d'un véhicule.

2. Appareil de traitement d'informations selon la revendication 1, dans lequel
l'unité de calcul est en mesure de réaliser un réglage de registre du rapport prédéterminé.

3. Appareil de traitement d'informations selon la revendication 1, dans lequel
l'unité de calcul est configurée pour calculer la période de retard de reprise correspondant au conducteur authentifié et identifié.

4. Appareil de traitement d'informations selon la revendication 1, dans lequel
l'unité de calcul est configurée pour calculer la période de retard de reprise correspondant à une caractéristique dynamique de véhicule du conducteur authentifié et identifié et à un véhicule à bord duquel se trouve le conducteur.

5. Appareil de traitement d'informations selon la revendication 1, comprenant en outre:
une unité d'enregistrement d'informations de pénalité configurée pour enregistrer des informations de pénalité dans le cas où le conducteur ne parvient pas à revenir dans la période de retard calculée par l'unité de calcul.

6. Appareil de traitement d'informations selon la revendication 1, comprenant en outre:
une unité d'enregistrement d'informations de pénalité configurée pour enregistrer des informations de pénalité selon une quantité de retard dans le cas où le conducteur retarde la reprise de conduite par rapport à une valeur de prédiction à chaque étape intermédiaire de reprise dans une période prolongée classée en une pluralité d'étapes en réponse à des contenus d'exécution d'une tâche secondaire du conducteur par l'unité de calcul.

7. Appareil de traitement d'informations selon la revendication 1, dans lequel
en réponse à une quantité de retard de reprise calculée par l'unité de calcul, une notification d'informations de prédiction concernant une période de retard de reprise nécessaire pour la reprise de conducteur est envoyée à une tierce partie dans le cadre d'une utilisation de connexion à distance d'une tâche secondaire d'intervention de tierce partie lors de l'utilisation de la fonction.

8. Appareil de traitement d'informations selon la revendication 1, dans lequel
l'unité de calcul est configurée pour réaliser un apprentissage autonome de la période de retard de reprise en réponse à un type de tâche secondaire exécutée par le conducteur sur la base d'une réussite de reprise et de la qualité de retard de reprise et d'une valeur d'évaluation observable sur la base d'informations observables d'activité biologique du conducteur.

9. Procédé de traitement d'informations comprenant:

par une unité de commande de notification, une étape de commande de notification de commande de notification pour inciter un conducteur à reprendre la conduite; et
par une unité de calcul, une étape de calcul de calcul d'une période de retard de reprise pour déterminer une temporisation de notification sur la base d'un état du conducteur,
dans lequel la période de retard de reprise est calculée en réponse à une valeur d'évaluation observable sur la base d'un type de tâche secondaire exécutée par le conducteur et d'informations observables d'activité biologique du conducteur, dans lequel la période de retard de reprise est calculée à l'aide d'une pluralité d'éléments d'informations de relation entre la valeur d'évaluation observable et la période de retard de reprise, qui sont accumulées pour chaque type de tâche secondaire ayant été exécutée par le conducteur ou qui sont apprises à partir d'informations historiques,
dans lequel
la période retard de reprise est calculée de manière à réussir la reprise de conduite de la tâche secondaire exécutée par le conducteur à un taux de réussite d'un rapport prédéterminé à l'aide de la pluralité d'éléments d'informations de relation entre la valeur d'évaluation observable et la période de retard de reprise, et
dans lequel
un taux de réussite du rapport prédéterminé est acquis en tant qu'informations retenues par un côté infrastructure en réalisant une communication route-véhicule avec un extérieur d'un véhicule.

FIG.1

F I G . 2

# FIG.3

FIG.4

S1 FULLY WITHDRAWAL STATE FROM DRIVING STEERING

S2 TIMING OF RETURN NOTIFICATION

S3 CHECK SEAT RETURN

S4 CHECK INTERNAL AWAKENING STATE BY SACCADE ETC.

S5 MONITORING OF STABILITY OF DRIVER ACTUAL STEERING SITUATION

S6 COMPLETION OF TAKEOVER TO MANUAL DRIVING

# FIG. 5

| | |
|---|---|
| VISUALLY PRESENT PREDICTION OF RETURN POINT TO VISUAL TOOL SUCH AS TABLET | S11 |
| UPDATE OF FUTURE PLAN AND APPROACH INFORMATION, MONITORING OF DRIVER STATE | S12 |
| RETURN NOTIFICATION, EARLY NOTIFICATION IN CASE OF NAP OR OTHER WORK | S13 |
| WAKE-UP ALARM IN CASE OF NO RESPONSE TO NOTIFICATION | S14 |
| RETURN NOTIFICATION IN CASE OF NOT SITTING ON DRIVER'S SEAT | S15 |
| ALARM FOR ALERT IN CASE OF RETURN DELAY | S16 |
| POINTING SIGNAL FOR FORWARD CHECK, MONITORING OF RETURN START | S17 |
| CHECK SITTING POSTURE | S18 |
| DECIDE AWAKENING LEVEL OF DRIVER BY SACCADE ETC. | S19 |
| MONITORING OF STABILITY OF ACTUAL STEERING SITUATION OF DRIVER | S20 |
| DECIDE FAILURE IN TAKEOVER IF IT IS SUPPOSED THAT NORMAL RETURN IS NOT POSSIBLE AND START DECELERATION CRAWL ESCAPE SEQUENCE | S21 |

TIME

# FIG.6

START ~ S30

AUTHENTICATION OF DRIVER ~ S31

DESTINATION SETTING ~ S32

START DISPLAY OF TRAVELING SECTION ON ROUTE ~ S33

START ACQUISITION OF LDM INFORMATION ~ S34

START OF TRAVELING ~ S35

UPDATE TRAVELING SECTION DISPLAY ON BASIS OF POSITION INFORMATION AND LDM INFORMATION ~ S36

MONITORING OF DRIVER STATE ~ S37

EVENT CHANGE COPING PROCESS ~ S38

# FIG.7

# FIG.8

GREEN YELLOW RED

(a) 

Sa Sc Sb    Sa  Sd        Sc Sb    Sc Sb

(b) v(t)

0

MOVING DISTANCE

(c)

Sa Sc Sb    Sa  Sd      Sc    Sb Sc Sb

0

TIME

TIME LINEAR DISPLAY NEAREST SECTION

TIME RECIPROCAL DISPLAY SECTION 1/Δt

TIME LINEAR DISPLAY REMOTE SECTION REDUCTION RATE hs/ho

Sc

(d)

h0

h

hs

CURRENT POINT

t0

t ( t = t0 * h0/h )

t1

t2

48

F I G . 9

FIG.10

(a)

(b)

(c)

(d)

CURRENT POINT    FIRST SECTION    t0    SECOND SECTION    t1    THIRD SECTION    t2

TIME

Sa    Sc    Sa    Sa    Sc    Sb    Sd    Sb    Sb

EP 3 712 028 B1

# FIG.11

(a)

(b)

EXECUTION SCREEN OF SECONDARY TASK, FREE USE RANGE

EXECUTION SCREEN OF SECONDARY TASK, FREE USE RANGE

CURRENT POINT

CURRENT POINT

t1

t2

t0

200

300

FIG.12

EP 3 712 028 B1

# FIG.13

THIRD SECTION

t1 ... t2

SECOND SECTION

FIRST SECTION

CURRENT POINT

EXECUTION SCREEN OF SECONDARY TASK, FREE USE RANGE

Sb

WAVE DISPLAY

Sc

200

300

EP 3 712 028 B1

# FIG.14

DISPLAY EXAMPLE OF PERFORMING WAVE DISPLAY FOR CALLING FOR ATTENTION

# FIG.15

DISPLAY EXAMPLE OF PERFORMING WAVE DISPLAY FOR CALLING FOR ATTENTION

$t=1*\Delta t$  $t=2*\Delta t$  $t=3*\Delta t$  $t=4*\Delta t$  $t=5*\Delta t$  $t=6*\Delta t$  $t=7*\Delta t$

Sc

# FIG.16

DRIVING RETURN

(a) IN CASE WHERE DRIVER IS SLEEPING IN NAP SPACE

| Tr | Ta | Tb | Tc | Td | Te |

(b) IN CASE OF AWAKENING STATE AWAY FROM SEAT

| Tr | Tc | Td | Te |

(c) IN CASE OF NON-REGULAR DRIVING POSTURE

| Tr | Td | Te |

(d) IN CASE OF PORTABLE TELEPHONE UTILIZATION OR THE LIKE WITH DRIVING POSTURE MAINTAINED

| Tr | Te |

TIME

# FIG.17

```
           ┌─────────────────────┐
           │   NORMAL TAKEOVER   ├── S41
           └──────────┬──────────┘
                      ▼
        ┌──────────────────────────┐
        │   OBSERVATION OF DRIVER   ├── S42
        │      RETURN REQUEST       │
        └─────────────┬─────────────┘
                      ▼
        ┌──────────────────────────┐
        │  ACQUISITION OF OBSERVABLE ├── S43
        │      EVALUATION VALUE     │
        └─────────────┬─────────────┘
                      ▼
        ┌──────────────────────────┐
        │  CALCULATION OF RETURN DELAY │
        │  TIME PERIOD ON BASIS OF   ├── S44
        │   OBSERVABLE EVALUATION    │
        │          VALUE             │
        └─────────────┬─────────────┘
                      ▼
        ┌──────────────────────────┐
        │   NOTIFICATION OF DRIVER   ├── S45
        │ RETURN AT NOTIFICATION TIMING │
        └─────────────┬─────────────┘
                      ▼
        ┌──────────────────────────┐
        │   MONITORING OF RETURN    ├── S46
        │   TRANSITION OF DRIVER    │
        └─────────────┬─────────────┘
                      ▼
                   ╱◇╲  S47
              IS RETURN POSSIBLE
              WITHIN RETURN DELAY ──────────────┐
                  TIME PERIOD?                  │
                      │                         ▼
                      ▼              ┌──────────────────────────┐
        ┌──────────────────┐        │   EMERGENT DECELERATION   ├── S51
        │ RETURN TRANSITION ├── S48  │   CRAWL ESCAPE SEQUENCE   │
        └─────────┬─────────┘        └─────────────┬────────────┘
                  ▼                                ▼
        ┌──────────────────────────┐   ┌──────────────────────────┐
        │   UPDATE LEARNING DATA     │   │ ISSUE RECORD OF PENALTY FOR ├── S52
        │(ADDITION OF SAMPLE VALUE) ├─S49│  INCORRECT TAKEOVER EVENT │
        └─────────────┬─────────────┘   └─────────────┬────────────┘
                      ▼◄─────────────────────────────┘
                ┌───────────┐
                │    END    ├── S50
                └───────────┘
```

57

# F I G . 1 8

(a)

OBSERVATION PLOTS BETWEEN OBSERVABLE
EVALUATION VALUE AND RETURN DELAY TIME PERIOD

RETURN DELAY TIME PERIOD

OBSERVABLE EVALUATION VALUE

HIGH ← → LOW

(b)

0. 95

RETURN DELAY TIME PERIOD

a

$t1$

1. 2  1  0. 8  0. 6  0. 4  0. 2  0

RETURN SUCCESS RATE

EP 3 712 028 B1

# FIG. 19

1: DRIVER STEERING
   INTERACTIVE EVALUATION

2: SITTING  LINE-OF-SIGHT AND POSTURE IN DRIVING
   Saccade EYEBALL OR THE LIKE OBSERVABLE
   EVALUATION

3: SITTING AND DRIVING POSTURE
   USE OF TERMINAL DEVICE

4: NON-DRIVING POSTURE
   IRREGULAR ROTATION SITTING

5: SITTING  DRIVING POSTURE EVALUATION

6: RETURN TIME PERIOD DISTRIBUTION
   IN CASE OF NAP

Ta
Tb
Tc

ΔT
ΔT−Ta
ΔT−(Ta+Tb)
ΔT−(Ta+Tb+Tc)

# FIG.20

TAKEOVER OR OCCURRENCE OF EVENT OF CAUTION TRAVELING — S61

- CALCULATION OF PREDICTED ARRIVING TIME AT EVENT OCCURRENCE POINT
- CALCULATION OF DRIVING RETURN DELAY TIME PERIOD — S62

S63 IS THERE FIXED EXTRA TIME? — NO

S72 EMERGENCY COPING SEQUENCE

YES

S64 IS THERE EXTRA TIME TO RETURN TO DRIVING? — NO

YES

ISSUE NOTIFICATION OF EVENT OCCURRENCE TO DRIVER (SOUND, DISPLAY FLICKERING, OR THE LIKE) — S65

S66 IS EVENT OCCURRENCE CHECKED BY DRIVER? — NO

ALARM IN CASE WHERE DRIVER RETURN POINT COMES EARLIER THAN IN PREDETERMINED SET PERIOD — S71

YES

ISSUE NOTIFICATION OF DRIVING STEERING POSTURE RETURN TO DRIVER — S67

S68 DRIVER HAS RETURNED WITHIN THE RETURN DELAY TIME PERIOD? — NO

YES

UPDATE TRAVELING SECTION DISPLAY — S69

END — S70

# FIG.21

```
        ( EMERGENCY
          COPING SEQUENCE )～S81
                |
                v
          IS THERE MANUAL        S82
          OPERATION TAKEOVER  ---------> YES
          POSSIBILITY?                    |
                |                         |
               NO                        |
                v                         |
      DECELERATE TO GIVE                  |
      EXTRA TIME FOR        ～S83          |
      ARRIVING TIME TO                    |
      EVENT OCCURRENCE POINT              |
                |                         |
                v                         |
          IS THERE RETURN     S84         |
          POSSIBILITY OF   ---------> YES |
          DRIVER?                     |   |
                |                     |   |
               NO                     |   |
                                      v   v
                                    ALARM FOR PROMPTING RETURN   S90
                                    TO MANUAL DRIVING (SOUND,
                                    LIGHT, VIBRATION, OR THE LIKE)
                                            |
                                            v
                                      IS RETURN POSSIBLE      S91
              <----------- NO ------- WITHIN SAFE TAKEOVER
                                      PERIOD?
                                            |
                                           YES      S92
                                            v
                                    EXECUTION OF MANUAL
                                    DRIVING RETURN
                                    CHECKING PROCEDURE
                                            |
          EVENT IN WHICH POINT PASSAGE  S85 v
          IS POSSIBLE BY DECELERATION -> YES  IS SAFE STEERING   S93
          CRAWL?                       |      OPERATION
                |                      |      CHECKED?  --- NO ---^
               NO      S86             |          |
                v                      v         YES
      START OF AUTOMATIC          PASS POINT BY   S89
      DECELERATION AND CRAWL      AUTOMATIC
      ESCAPE SEQUENCE TO STOP     DECELERATION CRAWL
                |                      |
                v                      |
      ISSUE RECORD OF                  |
      PENALTY FOR INCOMPLETE ～S87      |
      TAKEOVER EVENT                   |
                |                      |
                v                      |
          ( END OF
            SEQUENCE )～S88
```

# FIG.22

(a)

(b)

TAKEOVER NOTIFICATION ICON

200

400

300

200

400

300

EP 3 712 028 B1

62

FIG.23

EP 3 712 028 B1

(a)

(b)

FIG.24

INPUT WORK POINT

500

300

200

# FIG. 25

START (RECEPTION OF TAKEOVER NOTIFICATION DECISION) —S151

EXECUTION OF NOTIFICATION —S152

DETECTION OF NOTIFICATION ACKNOWLEDGEMENT RESPONSE —S153

SECONDARY TASK INPUTTING WORK INTERRUPTION REQUEST AND SCREEN REDUCTION AND INTERRUPTION NOTICE —S154

S155
IS NOTIFICATION ACKNOWLEDGEMENT RESPONSE DETECTED?
YES
NO

REMAINING TIME CALCULATION OF TAKEOVER GRACE BUDGET —S156

S157
TIMEOUT?
NO
YES

EXECUTION OF WARNING —S158

REDUCTION OF WORK SCREEN AND ENLARGEMENT EMPHASIS DISPLAY OF TAKEOVER POINT APPROACH DISPLAY —S159

WARNING ACKNOWLEDGEMENT, ACCEPTANCE PROCESS OF RESTART POINT DESIGNATION OF SECONDARY TASK —S160

S161
TIMEOUT?
NO
YES

FORCED END OF WORK —S162

RETURN DELAY PENALTY RECORDING, RESTRICTION OF WORK RESTART POINT, REUSE RESTRICTION OF AUTOMATIC DRIVING MODE —S163

DISPLAY OF RESTART POINT DESIGNATION SLIDER MENU OF SECONDARY TASK INPUTTING WORK —S164

ACCEPTANCE OF DEERMINATION OF RESTART POINT DESIGNATION (WORK RETURN POINT RESERVATION BY SLIDER ETC.) —S165

STORAGE OF WORK HISTORY OF SECONDARY TASK AND RESTART POINT DESIGNATION INFORMATION —S166

DISABLING OF SECONDARY TASK EXECUTION FOR MANUAL DRIVING RETURN PERIOD —S167

A

# FIG.26

(A)

MONITORING ACQUISITION OF LDM INFORMATION, DRIVER STATE, VEHICE SELF-DIAGNOSIS INFORMATION NECESSARY FOR AUTOMATIC DRIVING RESTART AVAILABILITY DECISION — S168

HAS ALREADY ENTERED SECONDARY TASK EXECUTABLE SECTION? — S169

NO

YES

ENTER AUTOMATIC DRIVING AVAILABLE SECTION — S170

ENABLING RETURNABLE MENU OF SECONDARY TASK WORK OF TERMINAL — S171

MONITORING OF SECONDARY TASK RETURN RESTART INPUT — S172

IS RETURN MENU SELECTED? — S173

NO

YES

TIMEOUT? — S174

NO

YES

EXECUTION OF WORK RESTART POINT DESIGNATION BY SLIDER MENU ETC. — S175

RESTART WORK ACCORDING TO DESIGNATION INPUT — S176

END OF RESTART PROCESS OF TEMPORARILY INTERRUPTED TASK — S177

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016139204 A
- JP 2016090274 A
- DE 102014011264 A1